# EUROPEAN PATENT APPLICATION

(11) **EP 4 804 594 A1**
(43) Date of publication of application: **09.09.2026**
(21) Application number: 24895893.6
(22) Date of filing: 11.09.2024
(51) Int. Cl.: H04W 24/02

(54) **COMMUNICATION METHOD AND RELATED DEVICE**

(30) Priority: 01.12.2023 CN 202311655610
(71) Applicant: Huawei Technologies Co., Ltd., Shenzhen, Guangdong 518129 (CN)
(72) Inventor: YANG, Bowen, Shenzhen, Guangdong 518129 (CN); WANG, Fan, Shenzhen, Guangdong 518129 (CN)
(74) Representative: Pfenning, Meinig & Partner mbB
(86) International application number: PCT/CN2024/118125
(87) International publication number: WO 2025/112794

(57) **Abstract**

A communication method and a related device are provided, to reduce communication interference between different communication devices by using sparsity of intersection of different geometric figures, and improve communication performance. In the method, K₁ resources determined by a first communication apparatus are included in M resources, and the first communication apparatus can perform communication based on the K₁ resources. The M resources respectively correspond to M coordinate points in an N-dimensional coordinate space, and resource indexes of the K₁ resources among the M resources are determined by using one of solutions in a solution set of an i₁ -dimensional subspace of the N-dimensional coordinate space. Because different solutions included in the solution set of the i₁-dimensional subspace may correspond to different geometric figures in space, in an implementation of determining the K₁ resources by using one of the solutions in the solution set, sparsity of intersection of the different geometric figures can be used to reduce communication interference between the different communication devices, and improve communication performance.

## Description

This application claims priority to Chinese Patent Application No. 202311655610.0, filed with the China National Intellectual Property Administration on December 1, 2023 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

Wireless communication may be transmission communication between two or more communication nodes without propagation through conductors or cables, and the communication nodes generally include a network device and/or a terminal device.

In communication systems, different terminal devices may share a segment of resources in massive connectivity scenarios. For example, when a quantity of terminal devices is greater than a quantity of resources, communication resources of different terminal devices may partially or completely overlap.

However, in the foregoing case, communication interference between the different terminal devices is inevitable, which affects communication performance.

### SUMMARY

This application provides a communication method and a related device, to reduce communication interference between different communication devices by using sparsity of intersection of different geometric figures, and improve communication performance.

A first aspect of this application provides a communication method. The method is applied to a first communication apparatus. The first communication apparatus may be a communication device (such as a network device or a terminal device), or the first communication apparatus may be some components (such as a processor, a chip, or a chip system) in a communication device, or the first communication apparatus may be a logical module or software that can implement all or some functions of a communication device. In the method, the first communication apparatus determines K₁ resources, where the K₁ resources are included in M resources, K₁ is a positive integer, M is an integer greater than or equal to K₁, the M resources respectively correspond to M coordinate points in an N-dimensional coordinate space, resource indexes of the K₁ resources among the M resources are determined by using one of solutions in a solution set of an i₁-dimensional subspace of the N-dimensional coordinate space, N is an integer greater than 1, and i₁ is less than or equal to N. The first communication apparatus performs communication based on the K₁ resources.

Based on the foregoing technical solution, the K₁ resources determined by the first communication apparatus are included in the M resources, and the first communication apparatus may perform communication based on the K₁ resources. The M resources respectively correspond to the M coordinate points in the N-dimensional coordinate space, and the resource indexes of the K₁ resources among the M resources are determined by using one of the solutions in the solution set of the i₁-dimensional subspace of the N-dimensional coordinate space. Because different solutions included in the solution set of the i₁-dimensional subspace may correspond to different geometric figures in space, in an implementation of determining the resource indexes of the K₁ resources among the M resources by using one of the solutions in the solution set, sparsity of intersection of different geometric figures can be used to reduce communication interference between different communication devices, and improve communication performance.

In addition, in comparison with an implementation process of determining a resource by using a fixed codebook, when there are a plurality of solutions in the solution set of the i₁-dimensional subspace, an implementation of determining the resource indexes of the K₁ resources among the M resources by using one of the solutions in the solution set can improve flexibility of the determined resources.

In this application, an involved resource (for example, any one of the K₁ resources, any one of the M resources, or any one of K₂ resources mentioned below) may be one or more time units, one or more frequency domain units, or one or more time-frequency units.

For example, the time unit may be one or more symbols, one or more mini-slots, one or more slots, one or more subframes, or one or more frames.

For another example, the frequency domain unit may be one or more subcarriers, one or more subbands, one or more bandwidth parts (bandwidth part, BWP), or one or more carriers.

For still another example, the time-frequency unit may be one or more resource elements (resource element, RE), one or more resource blocks (resource block, RB), or one or more physical resource blocks (physical resource block, PRB).

It can be learned from the foregoing implementation process that, the resource indexes of the K₁ resources among the M resources are determined by using one of the solutions in the solution set of the i₁-dimensional subspace of the N-dimensional coordinate space. When values such as N and i₁ are determined, the solution set of the i₁-dimensional subspace of the N-dimensional coordinate space is determined. The solution set may also be referred to as a codebook set, and a solution in the solution set may be referred to as a codebook in the codebook set. In other words, in the first aspect, the first communication apparatus may determine the resource indexes of the K₁ resources among the M resources based on one of codebooks in the codebook set. For a specific implementation process, refer to the following implementation processes shown in Table 4 to Table 14.

In a possible implementation of the first aspect, the method further includes: The first communication apparatus receives first information, where the first information indicates the K₁ resources. That the first communication apparatus determines the K₁ resources includes: The first communication apparatus determines the K₁ resources based on the first information.

Based on the foregoing technical solution, the first communication apparatus may receive the first information, and the first communication apparatus determines, based on the first information, the K₁ resources used for communication. In other words, the first communication apparatus may be used as a resource-scheduled party, and the first communication apparatus may receive an indication from a resource scheduling party, to determine the K₁ resources used for communication.

Optionally, the first information may be from another communication apparatus. For example, the another communication apparatus may be a network device or a terminal device.

In a possible implementation of the first aspect, after the first communication apparatus determines the K₁ resources, the method further includes: The first communication apparatus sends second information, where the second information indicates the K₁ resources.

Based on the foregoing technical solution, after the first communication apparatus determines the K₁ resources, the first communication apparatus may further send the second information that indicates the K₁ resources, so that a receiver of the second information can subsequently perform communication based on an indication of the second information. In other words, the first communication apparatus may be used as a resource scheduling party, and schedule, by using the second information, another device to perform communication on the K₁ resources.

Optionally, the first communication apparatus may send the second information to another communication apparatus. For example, the another communication apparatus may be a terminal device.

In a possible implementation of the first aspect, the N-dimensional coordinate space is an N-dimensional affine space or an N-dimensional projective space.

Based on the foregoing technical solution, the N-dimensional coordinate space used to determine the K₁ resources may be implemented in any one of the foregoing manners, to improve flexibility of implementing the solution.

Optionally, the N-dimensional coordinate space is the N-dimensional projective space, the N-dimensional projective space is represented as PG(N, p), and p is an order of the N-dimensional projective space. p may be a prime number or an integer power of a prime number.

In a possible implementation of the first aspect, values of N and p are determined based on a value of M.

Based on the foregoing technical solution, in the N-dimensional projective space, the values of N and p may determine a quantity of coordinate points in the N-dimensional projective space in space. Therefore, the values of N and p may be determined based on a total quantity M of resources. In this manner, the K₁ resources used for communication can be determined in the N-dimensional projective space that adapts to the total quantity M of resources.

Optionally, a total quantity of coordinate points in the N-dimensional projective space satisfies: $y = \frac{{p}^{N + 1} - 1}{p - 1} ;$ and $M \leq y .$

y is the total quantity of coordinate points in the N-dimensional projective space.

In a possible implementation of the first aspect, the values of N and p are determined based on third information, and the third information indicates at least one of a lower limit value of a resource quantity of communication resources, an upper limit value of the resource quantity of communication resources, and a quantity of communication apparatuses that perform communication on the M resources.

Optionally, the lower limit value of the resource quantity of communication resources may be understood as a lower limit value of a requirement for the resource quantity of the communication resources, in other words, the lower limit value indicates a minimum value of the resource quantity of the communication resources. Similarly, the upper limit value of the resource quantity of communication resources may be understood as an upper limit value of the requirement for the resource quantity of the communication resources, in other words, the lower limit value indicates a maximum value of the resource quantity of the communication resources. For a determining party (for example, the first communication apparatus) that determines the values of N and p, the determining party may determine, according to a service requirement of the determining party (or based on indication information of a communication peer end), the lower limit value and/or the upper limit value of the resource quantity of the communication resources.

Optionally, for a determining party (for example, the first communication apparatus) that determines the values of N and p, the determining party may determine, according to a service requirement of the determining party (or based on quantity information of a communication peer end), the quantity of communication apparatuses that perform communication on the M resources.

Based on the foregoing technical solution, in the N-dimensional projective space, the values of N and p may determine quantities of resources determined by different solutions in a solution set of a subspace of the N-dimensional projective space. In other words, at least one of the foregoing manners may be used to determine the values of N and p. In this manner, a quantity of communication resources may be adjusted and controlled based on the values of N and p.

Optionally, the solution set of the i₁-dimensional subspace of the N-dimensional coordinate space is a solution set of an equation set including N-i₁ equations.

Optionally, any one of the N-i₁ equations satisfies: $a _ 0 * X_ 0 + a_ 1 * X_ 1 + … + a_N * X_N = 0 .$

X_0, X_1, ..., and X_N represent unknown numbers, and a_0, ..., and a_N are all from a Galois field GF(p).

In a possible implementation of the first aspect, the method further includes: The first communication apparatus determines K₂ resources, where the K₂ resources are included in the M resources, K₂ is a positive integer, M is an integer greater than or equal to K₂, resource indexes of the K₂ resources among the M resources are determined by using one of solutions in a solution set of an i₂-dimensional subspace of the N-dimensional coordinate space, N is an integer greater than 1, and i₂ is less than or equal to N. The first communication apparatus performs communication based on the K₂ resources.

Based on the foregoing technical solution, in addition to determining the K₁ resources, the first communication apparatus may determine the K₂ resources, and communicate with different communication apparatuses based on the K₁ resources and the K₂ resources.
Optionally, K₁=K₂ and i₁=i₂; or K₁≠K₂ and i₁≠i₂.

For example, the first communication apparatus may communicate with a second communication apparatus based on the K₁ resources, and the first communication apparatus may communicate with a third communication apparatus based on the K₂ resources. The solution set of the i₁-dimensional subspace of the N-dimensional coordinate space is the solution set of the equation set including the N-i₁ equations. Correspondingly, the solution set of the i₂-dimensional subspace of the N-dimensional coordinate space is a solution set of an equation set including N-i₂ equations.

Because quantities of resources corresponding to different solutions with a same equation quantity may be the same, when i₁ = i₂ , a quantity of resources (that is, K₁ ) used for communication between the first communication apparatus and the second communication apparatus is the same as a quantity of resources (that is, K₂) used for communication between the first communication apparatus and the third communication apparatus. In this manner, based on the N-dimensional coordinate space, sparsity of intersection of different geometric figures may be used, to reduce communication interference between different communication devices, and a process of allocating a same quantity of resources to different communication apparatuses can also be implemented, to adapt to a scenario in which a plurality of communication apparatuses have a same resource quantity requirement.

Because different solutions of different equation quantities may correspond to different quantities of resources, when i₁ ≠ i₂ , the quantity of resources (that is, K₁ ) used for communication between the first communication apparatus and the second communication apparatus and the quantity of resources (that is, K₂) used for communication between the first communication apparatus and the third communication apparatus may be different. In this manner, based on the N-dimensional coordinate space, sparsity of intersection of different geometric figures may be used, to reduce communication interference between different communication devices, and a process of allocating different quantities of resources to different communication apparatuses can also be implemented, to adapt to a scenario in which a plurality of communication apparatuses have different resource quantity requirements. For example, a quantity of solution sets (higher dimensions) with a smaller quantity of equations is greater than a quantity of solution sets (lower dimensions) with a larger quantity of equations, and the solution sets with a smaller quantity of equations correspond to more resources, to support coexistence of communication apparatuses with different rates (a larger quantity of resources indicates a higher rate, and on the contrary, a smaller quantity of resources indicates a lower rate).

It may be understood that, when i₁≠i₂, an intersection point between a space with a higher dimension and a space with a lower dimension depends on the space with a lower dimension. For example, two straight lines intersect at most at one point, and a plane and a straight line (not on the plane) also intersect at most at one point. This also ensures a minimum collision when communication apparatuses of different rates coexist.

A second aspect of this application provides a communication apparatus, where the apparatus is a first communication apparatus. The first communication apparatus includes a transceiver unit and a processing unit, the processing unit is configured to determine K₁ resources, the K₁ resources are included in M resources, K₁ is a positive integer, M is an integer greater than or equal to K₁, the M resources respectively correspond to M coordinate points in an N-dimensional coordinate space, resource indexes of the K₁ resources among the M resources are determined by using one of solutions in a solution set of an i₁-dimensional subspace of the N-dimensional coordinate space, N is an integer greater than 1, and i₁ is less than or equal to N. The transceiver unit is configured to perform communication based on the K₁ resources.

A third aspect of this application provides a communication apparatus, including at least one processor. The at least one processor is coupled to a memory, the memory is configured to store a computer program or instructions, and the at least one processor is configured to execute the computer program or the instructions, so that the communication apparatus implements the method in any one of the first aspect or the possible implementations of the first aspect.

A fourth aspect of this application provides a communication apparatus, including at least one logic circuit and an input/output interface. The logic circuit is configured to perform the method in any one of the first aspect or the possible implementations of the first aspect.

A fifth aspect of this application provides a communication system, where the communication system includes the foregoing first communication apparatus.

Optionally, the communication system further includes the foregoing other communication apparatuses, the second communication apparatus, the third communication apparatus, and the like.

A sixth aspect of this application provides a computer-readable storage medium, where the storage medium is configured to store one or more computer programs or instructions. When the computer programs or instructions are executed by a computer, the computer performs the method in any one of the first aspect or the possible implementations of the first aspect.

A seventh aspect of this application provides a computer program product (or referred to as a computer program). When the computer program in the computer program product is executed by a computer, the computer is enabled to perform the method in any one of the first aspect or the possible implementations of the first aspect.

An eighth aspect of this application provides a chip system. The chip system includes at least one processor, configured to support the chip system in implementing the method in any one of the first aspect or the possible implementations of the first aspect.

In a possible design, the chip system may further include a memory. The memory is configured to store program instructions and data that are necessary for the chip system. The chip system may include a chip, or may include a chip and another discrete component. Optionally, the chip system further includes an interface circuit, and the interface circuit provides computer program instructions and/or data for the at least one processor.

For technical effects brought by any one of design manners of the second aspect to the eighth aspect, refer to technical effects brought by the first aspect and any one of different design manners of the first aspect. Details are not described herein again.

### BRIEF DESCRIPTION OF DRAWINGS

FIG. 1 is a diagram of a communication system according to this application;
FIG. 2a to FIG. 2c are some diagrams of a communication system according to this application;
FIG. 3 is a diagram of resource allocation according to this application;
FIG. 4 is an interaction diagram of a communication method according to this application; and
FIG. 5 and FIG. 6 are diagrams of communication apparatuses according to this application.

### DESCRIPTION OF EMBODIMENTS

First, some terms in embodiments of this application are explained and described, to facilitate understanding of a person skilled in the art.
(1) Configuration and pre-configuration: In this application, both the configuration and the pre-configuration are used. The configuration means that a network device such as a base station or a server sends configuration information of some parameters or parameter values to a terminal via a message or signaling, so that the terminal determines a communication parameter or a transmission resource based on the values or the information. Similar to the configuration, the pre-configuration may be a manner in which a network device such as a base station or a server sends parameter information or a value to a terminal through a communication link or a carrier; or may be a manner in which a corresponding parameter or parameter value is defined in a standard or a related parameter or value is set in a terminal device in advance. This is not limited in this application. Further, these values and parameters may be changed or updated.
(2) In this application, "indicating" may include "directly indicating" and "indirectly indicating". When a piece of indication information is described as indicating A, it means that the indication information carries A, directly indicates A, or indirectly indicates A.

In this application, information indicated by the indication information is referred to as to-be-indicated information. In a specific implementation, the to-be-indicated information may be indicated in a plurality of manners. For example, the to-be-indicated information may be directly indicated, for example, indicated by the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information and sent separately. In addition, transmission periodicities and/or transmission occasions of these pieces of sub-information may be the same or may be different. A specific sending method is not limited in this application. The transmission periodicities and/or the transmission occasions of these pieces of sub-information may be predefined, for example, predefined according to a protocol, or may be configured by a transmitting device by sending configuration information to a receiving device. The configuration information may include, for example, but is not limited to, one or a combination of at least two of radio resource control (radio resource control, RRC) signaling, medium access control (medium access control, MAC) layer signaling, and physical layer signaling. The MAC layer signaling includes, for example, a medium access control control element (medium access control control element, MAC CE), and the physical layer signaling includes, for example, downlink control information (downlink control information, DCI).

(3) The terms "system" and "network" may be used interchangeably in embodiments of this application. "At least one" means one or more, and "a plurality of" means two or more. The term "and/or" describes an association relationship of associated objects, and indicates that three relationships may exist. For example, "A and/or B" may indicate the following three cases: Only A exists, both A and B exist, and only B exists, where A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(4) "Sending" and "receiving" in embodiments of this application represent signal transmission directions. In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station. "Sending" may also be understood as "outputting" of a chip interface, and "receiving" may also be understood as "inputting" of the chip interface.

(5) Affine space: a coordinate space, in which coordinates are obtained from the Galois field (Galois field).

The affine space may be represented as AG(N, p),AG(N, p) includes p^{N} points, coordinates of each point are (a₁,a₂,...,a_{N}), aᵢ ∈ GF(p), and p is a prime number or an integer power of a prime number. This space is similar to the Euclidean space in the Galois field.

(6) Projective space: a coordinate space, in which coordinates are obtained from the Galois field.

The projective space may be represented as PG(N, p). PG(N, p) includes p^{N} + p^{N-1}+... +p + 1 points, coordinates of each point are [a₀:a₁:...:a_{N}], aᵢ ∈ GF(p), p in GF(p) means a finite field of the order p or a Galois field of the order p, and p is a prime number or an integer power of a prime number.

In addition, for [a₀:a₁:...:a_{N}], [0: 0:...: 0] is not a coordinate point.

In addition, for any b ≠ 0, [a₀:a₁:...:a_{N}] and [ba₀:ba₁:...:ba_{N}] correspond to a same point. For example, when p = 3, [1: 2: 2] and [2: 1: 1] need to be considered to be the same coordinates, because [2: 1: 1] = [2: 4: 4] = [1: 2: 2].

It should be noted that the projective space includes the affine space, in other words, the "affine space" is a subset of the "projective space". Points in PG(N, p) can be classified into two types: a₀ = 0 and a₀ ≠ 0. The latter is actually in AG(N, p). When a₀ ≠ 0, b ∈ GF(p) causes ba₀ = 1, and coordinates in a unified form like [1: a₁:...:a_{N}] are obtained. Affine spatial coordinates (a₁,a₂,...,a_{N}) are obtained if the first coordinate (that is, the first item in the coordinates) is ignored.

(7) i-dimensional subspace: In PG(N, p), one i-dimensional subspace is a solution set of an equation set including N - i (homogeneous) linear equations. A one-dimensional subspace is referred to as a straight line, and a two-dimensional subspace is referred to as a plane. More equations indicate lower dimensions. A total quantity of points in the i-dimensional subspace is pⁱ + pⁱ⁻¹+...+p + 1.

In addition, a quantity of equations corresponding to the i-dimensional subspace is: N-i. For example, a derivation process is as follows:

Zero equation: The entire PG(N, p) is an N-dimensional space.

One linear equation means an N-1 dimensional subspace. Not all points meet this equation due to there is a constraint.

Two (independent) linear equations mean an N-2 dimensional subspace. There are two constraints, and dimensions are further reduced. This subspace is an intersection point of N-1 dimensional subspaces established by the two equations, so that the dimensions decrease by 1. For example, an intersection point of two planes (two dimensions) is a straight line (1 dimension), and an intersection point of two straight lines (1 dimension) is a point (0 dimensions).

By analogy, N-2 (independent) linear equations mean a two-dimensional subspace (a plane); N-1 (independent) linear equations mean a one-dimensional subspace (a straight line); and N (independent) linear equations mean a zero-dimensional subspace (a point). Optionally, more than N linear equations may have no solution. Independence herein means that no equation is a linear superposition of another equation.

In addition, a quantity of points in the i-dimensional subspace is a quantity of solutions of an equation set of N-i (independent) equations, that is, pⁱ + pⁱ⁻¹+...+p + 1. For example, a derivation process is as follows: The i-dimensional subspace itself is a projective space, in other words, the i-dimensional subspace in PG(N, p) is PG(i, p), and therefore the quantity of points is pⁱ + pⁱ⁻¹+... +p + 1.

In particular, a quantity of points on a plane is p² + p + 1; a quantity of points on a straight line is :p + 1; and a quantity of i-dimensional subspaces in PG(N, p) satisfies: $\frac{{\prod }_{k = N - i + 1}^{N + 1} \left({p}^{k}-1\right)}{{\prod }_{l = 1}^{i + 1} \left({p}^{l}-1\right)} .$${\prod }_{k = N - i + 1}^{N + 1} \left({p}^{k}-1\right)$ represents a continuous multiplication (or a cumulative multiplication) of i+1 elements in total of (p^{N-i+1} - 1), (p^{N-i+2} - 1), ..., and (p^{N+1} - 1), and ${\prod }_{l = 1}^{i + 1} \left({p}^{l}-1\right)$ represents a continuous multiplication (or a cumulative multiplication) of i+1 elements in total of (p¹ - 1), (p² - 1), ..., and (pⁱ⁺¹ - 1). p and N are inputs of the projective space, N is a dimension, and p is a prime number or an integer power of a prime number. i is a dimension of a concerned subspace, for example, a line means that i=1.

In particular, when i=1, a quantity of i-dimensional subspaces may be understood as a quantity of straight lines, and $\frac{\left({p}^{N}-1\right) \left({p}^{N + 1}-1\right)}{\left(p-1\right) \left({p}^{2}-1\right)}$ is satisfied.

For example, for i=1, a derivation process is as follows: In p^{N} + p^{N-1}+... +p + 1 points of PG(N, p), one line is determined for every two points, in other words, C(p^{N} + p^{N-1}+... +p + 1, 2) = (p^{N} + p^{N-1}+... +p + 1)(p^{N} + p^{N-1}+... +p)/2 lines are determined in total, where C() is a function in a permutation and combination. However, there are p+1 points on each line, so the line is determined for C(p + 1,2) = (p + 1)p/2 pairs of points. Therefore, the total quantity of lines needs to be a quotient of two numbers: $\begin{matrix}\frac{\left({p}^{N}+{p}^{N - 1}+…+p+1\right) \left({p}^{N}+{p}^{N - 1}+…+p\right)}{\left(p+1\right) p} \\ = \frac{\left({p}^{N}+{p}^{N - 1}+…+p+1\right) \left({p}^{N - 1}+{p}^{N - 2}+…+1\right)}{p + 1} \\ = \frac{\left({p}^{N + 1}-1\right) \left({p}^{N}-1\right)}{\left(p-1\right) \left(p-1\right) \left(p+1\right)} \\ = \frac{\left({p}^{N}-1\right) \left({p}^{N + 1}-1\right)}{\left(p-1\right) \left({p}^{2}-1\right)} .\end{matrix}$

(8) Overloading factor (overloading factor, OF): a ratio of a quantity of users to a quantity of resources.

(9) Surjection: When there is a correspondence between coordinates and resources, if each coordinate corresponds to a resource, surjection is achieved.

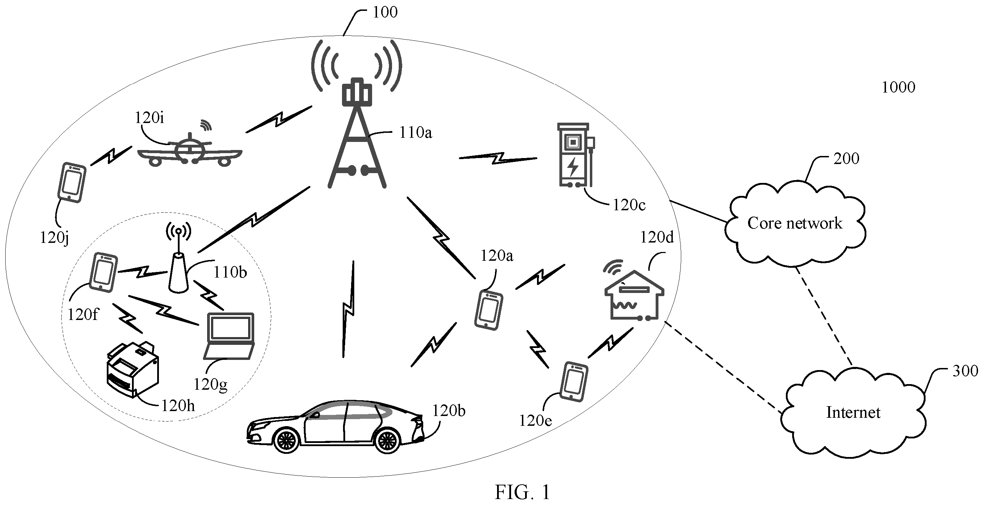

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an Internet 300. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access the communication system in a wireless manner. In an application scenario, the RAN node may be a base station (base station), an evolved base station (evolved NodeB, eNodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control (radio link control, RLC) layer and a MAC layer of the base station, and may further complete a part or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: a CU-control plane (CU control plane, CU-CP) and a CU-user plane (CU user plane, CU-UP).

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D) communication, vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device; or may be deployed on water; or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal device. In other words, communication between 110a and 120i is performed according to a radio air interface protocol. Certainly, 110a and 120i may alternatively communicate with each other according to an interface protocol between the base stations. In this case, compared with 110a, 120i is also a base station. Therefore, both the base station and the terminal may be collectively referred to as communication apparatuses, 110a and 110b in FIG. 1 each may be referred to as a communication apparatus having a function of a base station, and 120a to 120j in FIG. 1 each may be referred to as a communication apparatus having a function of a terminal.

Communication between the base station and the terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be simultaneously performed by using a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus having the function of the terminal.

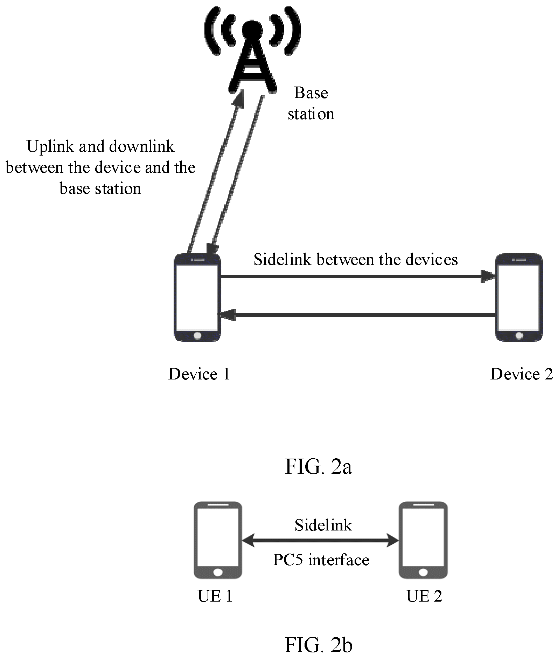

FIG. 2a is a diagram of a communication system according to an embodiment of this application. In FIG. 2a, an example in which a network device is a base station is used for description, and both a device 1 and a device 2 are terminal devices. As shown in FIG. 2a, a communication link between the device 1 and the device 2 may be referred to as a sidelink (sidelink, SL), and a communication link between the device 1 (or the device 2) and the base station may be referred to as an up-down link, including an uplink (uplink) and a downlink (downlink). It can be learned that the sidelink is a communication mechanism in which different devices (for example, terminal devices) directly communicate with each other without the network device (for example, the base station).

Optionally, on the sidelink, generally, a transmitting device and a receiving device may be terminal devices or network devices of a same type, or may be a road side unit (road side unit, RSU) and a terminal device. From a perspective of a physical entity, the RSU is a road side station or a road side unit. From a perspective of a function, the RSU may be a terminal device, or may be a network device. This is not limited in this application. In other words, the transmitting device is a terminal device, and the receiving device is also a terminal device; or the transmitting device is a road side station, and the receiving device is a terminal device; or the transmitting device is a terminal device, and the receiving device is a road side station. In addition, the sidelink may alternatively be a link between base station devices of a same type or different types. In this case, a function of the sidelink is similar to that of a relay link, but an air interface technology used by the sidelink may be the same as or different from that used by the relay link.

As shown in FIG. 2b, when a terminal device (denoted as UE 1) directly communicates with another terminal device (denoted as UE 2) without a network device, a communication link between the two terminal devices may be referred to as a sidelink. In other words, the two terminal devices communicate with each other through a proximity-based services communication 5 (proximity-based services communication 5, PC5) interface.

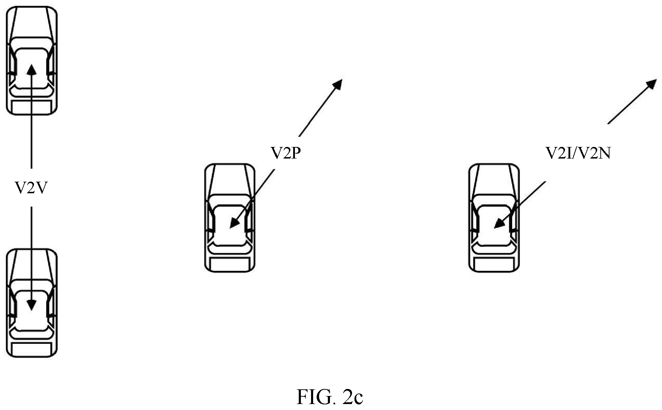

As shown in FIG. 2c, as a typical application of a sidelink, a V2X communication technology uses and enhances a current cellular network function and element, to implement low-latency and high-reliability communication between various nodes in a vehicle network, including vehicle to vehicle (vehicle to vehicle, V2V) communication, vehicle to pedestrian (vehicle to pedestrian, V2P) communication, vehicle to infrastructure (vehicle to infrastructure, V2I for short) communication, and vehicle to network (vehicle to network, V2N for short) communication. As a cellular system evolves from 4G long term evolution (long term evolution, LTE for short) to 5G, C-V2X evolves from LTE-V2X to NR-V2X (new radio V2X, NR-V2X for short).

In addition, V2X communication has great potential in reducing vehicle collision accidents, thereby reducing corresponding casualties. Advantages of V2X are not limited to improving safety. A vehicle that can perform V2X communication helps better perform traffic management, to further promote green traffic and lower energy consumption. An intelligent transportation system (intelligent transportation system, ITS) is an application that integrates V2X. According to the V2X technology, a vehicle UE (Vehicle UE, V-UE for short) can send, to V-UE nearby, some information about the vehicle user, for example, information such as a location, a speed, and an intention (turning, merging, or reversing), and information triggered by some periodic and aperiodic events, and the V-UE can also receive information from the user nearby in real time. 5G NR V2X can support lower transmission latency, more reliable communication transmission, higher throughput, and better user experience, thereby meeting requirements of more extensive application scenarios. Further, a vehicle-to-vehicle communication technology supported by V2X may be further applied to device-to-device (device-to-device, D2D) communication in any system.

In a communication system (for example, the communication system shown in FIG. 1, FIG. 2a, FIG. 2b, or FIG. 2c), different terminal devices may share a segment of resources in a massive connectivity scenario. For example, when a quantity of terminal devices is greater than a quantity of resources, communication resources of different terminal devices may partially or completely overlap. It can be learned that, in the foregoing case, communication interference between the different terminal devices is inevitable, which affects communication performance.

In an implementation example, interference can be reduced by using a sparse code multiple access (sparse code multiple access, SCMA) technology. The following describes the SCMA technology with reference to some implementation examples.

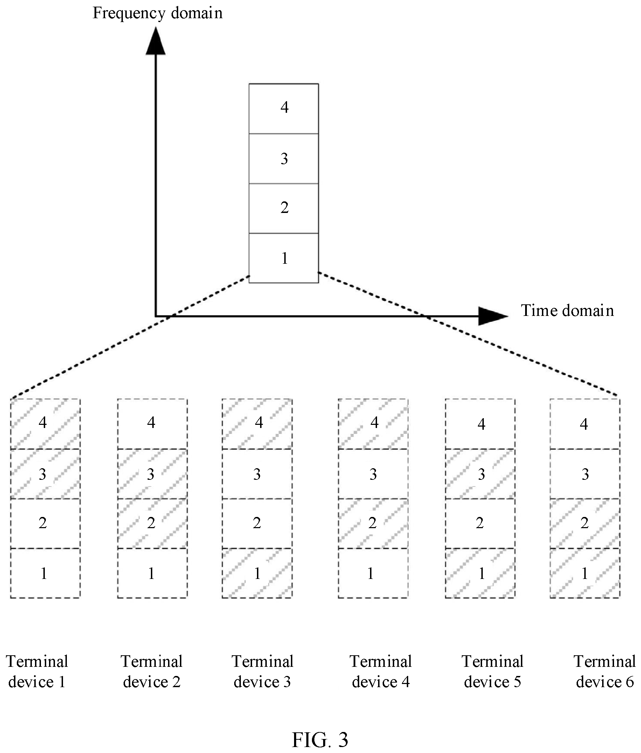

FIG. 3 is used as an example. When the SCMA uses a fixed codebook to allocate resources, and a quantity of resources is 4 (or a multiple of 4), an SCMA resource allocation scheme is shown in FIG. 3, including:
resources allocated to a terminal device 1 are a resource 3 and a resource 4;
resources allocated to a terminal device 2 are a resource 2 and the resource 3;
resources allocated to a terminal device 3 are a resource 1 and the resource 4;
resources allocated to a terminal device 4 are the resource 2 and the resource 4;
resources allocated to a terminal device 5 are the resource 1 and the resource 3; and
resources allocated to a terminal device 6 are the resource 1 and the resource 2.

In FIG. 3, when four resources are available for communication, a network device may access six terminal devices (that is, six users), a quantity of available resources of a single user is 2, and an overloading factor OF is 1.5 (that is, 6/4=1.5).

In addition, in FIG. 3, three terminal devices, namely, the terminal device 1, the terminal device 3, and the terminal device 4, may collide with each other on the resource 1 and generate interference; three terminal devices, namely, the terminal device 1, the terminal device 2, and the terminal device 5, may collide with each other on the resource 2 and generate interference; three terminal devices, namely, the terminal device 2, the terminal device 4, and the terminal device 6, may collide with each other on the resource 3 and generate interference; and three terminal devices, namely, the terminal device 3, the terminal device 5, and the terminal 6 may collide with each other on the resource 4 and generate interference. In other words, according to the SCMA technology, a collision probability (or referred to as a collision loss rate) of resources used by different terminal devices is less than or equal to 1/2.

However, in a communication process implemented according to the SCMA technology, because the SCMAuses the fixed codebook to determine resources, it is difficult to flexibly design a resource allocation granularity, a resource quantity, and a user quantity.

To resolve the foregoing problem, this application provides a communication method and a related device, to reduce communication interference between different communication devices by using sparsity of intersection of different geometric figures, so as to improve communication performance. Detailed descriptions are provided below with reference to the accompanying drawings.

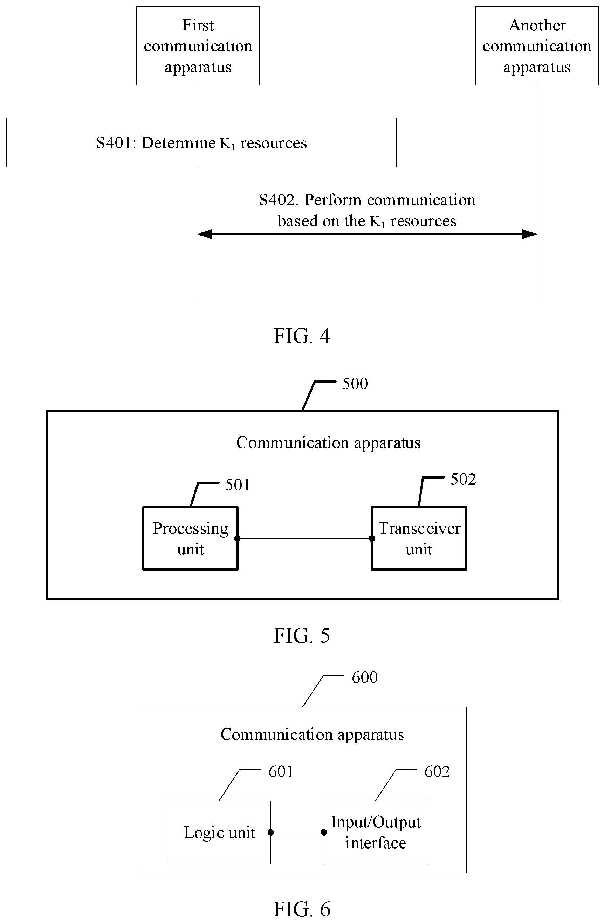

FIG. 4 is a diagram of a communication method according to this application. The method includes the following steps.

It should be noted that in FIG. 4, an example in which a communication apparatus is used as an execution body of an information receiving and sending process is used to illustrate the method. However, the execution body of the information receiving and sending process is not limited in this application. For example, in FIG. 4, the execution body of the method may alternatively be a chip, a chip system, a processor, a logic module, software, or the like in the communication apparatus. A first communication apparatus may be a network device, a terminal device, or the like.

S401: The first communication apparatus determines K₁ resources, where the K₁ resources are included in M resources, K₁ is a positive integer, M is an integer greater than or equal to K₁, the M resources respectively correspond to M coordinate points in an N-dimensional coordinate space, resource indexes of the K₁ resources among the M resources are determined by using one of solutions in a solution set of an i₁-dimensional subspace of the N-dimensional coordinate space, N is an integer greater than 1, and i₁ is less than or equal to N.

S402: The first communication apparatus performs communication based on the K₁ resources.

In this application, an involved resource (for example, any one of the K₁ resources, any one of the M resources, or any one of K₂ resources mentioned below) may be one or more resource elements (resource element, RE), one or more resource blocks (resource block, RB), or one or more physical resource blocks (physical resource block, PRB).

Optionally, the resource in this application may be replaced with a time unit, a frequency domain unit, or the like.

In a possible implementation, before S401, the method further includes: The first communication apparatus receives first information, where the first information indicates the K₁ resources. Correspondingly, a process in which the first communication apparatus determines the K₁ resources in S401 includes: The first communication apparatus determines the K₁ resources based on the first information. In other words, the first communication apparatus may receive the first information, and the first communication apparatus determines, based on the first information, the K₁ resources used for communication. The first communication apparatus may be used as a resource-scheduled party, and the first communication apparatus may receive an indication from a resource scheduling party, to determine the K₁ resources used for communication.

Optionally, the first information may be from another communication apparatus, for example, a second communication apparatus. The second communication apparatus may be a network device or a terminal device that is different from the first communication apparatus.

In a possible implementation, after the first communication apparatus determines the K₁ resources in S401, the method further includes: The first communication apparatus send second information, where the second information indicates the K₁ resources. In this manner, a receiver of the second information can subsequently perform communication based on an indication of the second information. The first communication apparatus may be used as a resource scheduling party, and schedule, by using the second information, another device to perform communication on the K₁ resource.

Optionally, the first communication apparatus may send the second information to another communication apparatus, for example, a third communication apparatus. The third communication apparatus may be a terminal device.

Optionally, the first information or the second information may indicate the K₁ resources in a plurality of manners. For example, the first information or the second information may carry one or more of indexes of the K₁ resources in time domain, indexes of the K₁ resources in frequency domain, and an indication of a resource quantity K₁.

In the technical solution based on FIG. 4, the K₁ resources determined by the first communication apparatus are included in the M resources in S401, and the first communication apparatus may perform communication based on the K₁ resources in S402. The M resources respectively correspond to the M coordinate points in the N-dimensional coordinate space, and the resource indexes of the K₁ resources among the M resources are determined by using one of the solutions in the solution set of the i₁-dimensional subspace of the N-dimensional coordinate space. Because different solutions included in the solution set of the i₁-dimensional subspace may correspond to different geometric figures in space, in an implementation of determining the resource indexes of the K₁ resources among the M resources by using one of the solutions in the solution set, sparsity of intersection of different geometric figures (collisions of resources used by different communication apparatuses correspond to intersection points between the figures; and fewer intersection points indicate fewer resource collisions) can be used to reduce communication interference between different communication devices, and improve communication performance.

In addition, in comparison with an implementation process of determining a resource by using a fixed codebook, when there are a plurality of solutions in the solution set of the i₁-dimensional subspace, an implementation of determining the resource indexes of the K₁ resources among the M resources by using one of the solutions in the solution set can improve flexibility of the determined resources.

In a possible implementation, the N-dimensional coordinate space is an N-dimensional affine space or an N-dimensional projective space. The N-dimensional coordinate space used to determine the K₁ resources may be implemented in any one of the foregoing manners, to improve flexibility of implementing the solution.

Optionally, the N-dimensional coordinate space is the N-dimensional projective space, the N-dimensional projective space is represented as PG(N, p), and p is an order of the N-dimensional projective space.

In a possible implementation, values of N and p are determined based on a value of M. Specifically, in the N-dimensional projective space, the values of N and p may determine a quantity of coordinate points in the N-dimensional projective space in space. Therefore, the values of N and p may be determined based on a total quantity M of resources. In this manner, the K₁ resources used for communication can be determined in the N-dimensional projective space that adapts to the total quantity M of resources.

Optionally, a total quantity of coordinate points in the N-dimensional projective space satisfies: $y = \frac{{p}^{N + 1} - 1}{p - 1} ;$ and $M \leq y .$

y is the total quantity of coordinate points in the N-dimensional projective space.

In a possible implementation, the values of N and p are determined based on third information, and the third information indicates at least one of a lower limit value of a resource quantity of communication resources, an upper limit value of the resource quantity of communication resources, and a quantity of communication apparatuses that perform communication on the M resources. Specifically, in the N-dimensional projective space, the values of N and p may determine quantities of resources determined by different solutions in a solution set of a subspace of the N-dimensional projective space. The at least one of the foregoing manners may be used to determine the values of N and p. In this manner, a quantity of communication resources may be adjusted and controlled based on the values of N and p.

Optionally, the lower limit value of the resource quantity of communication resources may be a lower limit value of a requirement for the resource quantity of the communication resources, in other words, the lower limit value indicates a minimum value of the resource quantity of the communication resources. Similarly, the upper limit value of the resource quantity of communication resources may be an upper limit value of the requirement for the resource quantity of the communication resources, in other words, the lower limit value indicates a maximum value of the resource quantity of the communication resources. For a determining party (for example, the first communication apparatus) that determines the values of N and p, the determining party may determine, according to a service requirement of the determining party (or based on indication information of a communication peer end), the lower limit value and/or the upper limit value of the resource quantity of communication resources.

Optionally, for a determining party (for example, the first communication apparatus) that determines the values of N and p, the determining party may determine, according to a service requirement of the determining party (or based on quantity information of a communication peer end), the quantity of communication apparatuses that perform communication on the M resources.

Optionally, the solution set of the i₁-dimensional subspace of the N-dimensional coordinate space is a solution set of an equation set including N-i₁ equations.

Optionally, any one of the N-i₁ equations satisfies: $a _ 0 * X _ 0 + a _ 1 * X _ 1 + … + a _ N * X _ N = 0 .$

X_0, X_1, ..., and X_N represent unknown numbers, and a_0, ..., and a_N are all from a Galois field GF(p).

In a possible implementation, the method further includes: The first communication apparatus determines K₂ resources, where the K₂ resources are included in the M resources, K₂ is a positive integer, M is an integer greater than or equal to K₂, resource indexes of the K₂ resources among the M resources are determined by using one of solutions in a solution set of an i₂-dimensional subspace of the N-dimensional coordinate space, N is an integer greater than 1, and i₂ is less than or equal to N, where K₁=K₂ and i₁=i₂; or K₁≠K₂ and i₁≠i₂. The first communication apparatus performs communication based on the K₂ resources. Specifically, in addition to determining the K₁ resources, the first communication apparatus may determine the K₂ resource; and communicate with different communication apparatuses based on the K₁ resources and the K₂ resources.

Optionally, K₁=K₂ and i₁=i₂; or K₁≠K₂ and i₁≠i₂.

For example, the first communication apparatus may communicate with the second communication apparatus based on the K₁ resources, and the first communication apparatus may communicate with the third communication apparatus based on the K₂ resources. The solution set of the i₁-dimensional subspace of the N-dimensional coordinate space is the solution set of the equation set including N-i₁ equations. Correspondingly, the solution set of the i₂-dimensional subspace of the N-dimensional coordinate space is a solution set of an equation set including N-i₂ equations.

Because quantities of resources corresponding to different solutions with a same equation quantity may be the same, when i₁ = i₂ , a quantity of resources (that is, K₁) used for communication between the first communication apparatus and the second communication apparatus is the same as a quantity of resources (that is, K₂) used for communication between the first communication apparatus and the third communication apparatus. In this manner, based on the N-dimensional coordinate space, sparsity of intersection of different geometric figures may be used, to reduce communication interference between different communication devices, and a process of allocating a same quantity of resources to different communication apparatuses can also be implemented, to adapt to scenarios in which a plurality of communication apparatuses have same resource quantity requirements.

Because different solutions of different equation quantities may correspond to different quantities of resources, when i₁≠i₂, a quantity of resources (that is, K₁) used for communication between the first communication apparatus and the second communication apparatus and a quantity of resources (that is, K₂) used for communication between the first communication apparatus and the third communication apparatus may be different. In this manner, based on the N-dimensional coordinate space, sparsity of intersection of different geometric figures may be used, to reduce communication interference between different communication devices, and a process of allocating different quantities of resources to different communication apparatuses can also be implemented, to adapt to a scenario in which a plurality of communication apparatuses have different resource quantity requirements. For example, a quantity of solution sets (higher dimensions) with a smaller quantity of equations is greater than a quantity of solution sets (lower dimensions) with a larger quantity of equations, and the solution sets with a smaller quantity of equations correspond to more resources, to support coexistence of communication apparatuses with different rates (a larger quantity of resources indicates a higher rate, and on the contrary, a smaller quantity of resources indicates a lower rate).

It may be understood that, when i₁ ≠ i₂, an intersection point between a space with a higher dimension and a space with a lower dimension depends on the space with a lower dimension. For example, two straight lines intersect at most at one point, and a plane and a straight line (not on the plane) also intersect at most at one point. This also ensures a minimum collision when communication apparatuses of different rates coexist.

In an implementation example, for a group of resources including 15 (that is, M=15) resources, PG(3, 2) (that is, N=3, p=2) is selected as a coordinate space. It can be learned from the foregoing definition of the projective space that, points of PG(3, 2) are 2³ + 2² + 2 + 1 = 15. Each resource is corresponded to coordinates. It can be learned from the foregoing definition of the projective space that, there are a total of 35 ( $\frac{\left({2}^{3}-1\right) \left({2}^{4}-1\right)}{\left(2-1\right) \left({2}^{2}-1\right)} = 35$) straight lines for PG(3, 2), and three (p+1=3) points are on each line. In the following Table 1, there are 15 coordinate points in total, which respectively correspond to 15 resources. Indexes of the 15 resources are respectively "A1-B1", "A1-B2", "A1-B3", "A1-B4", "A1-B5", "A2-B1", "A2-B2", "A2-B3", "A2-B4", "A2-B5", "A3-B1", "A3-B2", "A3-B3", "A3-B4", and "A3-B5".

**Table 1**

| Index | A1 | A2 | A3 |
|---|---|---|---|
| B1 | [1:0:0:0] | [1:1:1:0] | [0:1:0:0] |
| B2 | [1:1:0:0] | [1:1:0:1] | [0:0:1:0] |
| B3 | [1:0:1:0] | [1:0:1:1] | [0:0:0:1] |
| B4 | [1:0:0:1] | [1:1:1:1] | [0:0:1:1] |
| B5 | [0:1:0:1] | [0:1:1:0] | [0:1:1:1] |

In addition, an equation quantity corresponding to solutions in a solution set of a 1-dimensional (i=1) coordinate space is 2 (N-i=3-2=1).

An equation set 1: x=w and y=w is used as an example, which corresponds to three solutions [1:1:0:1], [0:0:1:0], and [1:1:1:1] in Table 1, and whose corresponding resource indexes are respectively "A2-B2", "A3-B2", and "A2-B4".

An equation set 2: x=w, and z=w is used as an example, which corresponds to three solutions [1:0:1:1], [1:1:1:1], and [0:1:0:0] in Table 1, and whose corresponding resource indexes are respectively "A2-B3", "A2-B4", and "A3-B1".

An equation set 3: x=0, and z=0 is used as an example, which corresponds to three solutions [0:1:0:0], [0:0:0:1], and [0:1:0:1] in Table 1, and whose corresponding resource indexes are respectively "A3-B1", "A3-B3", and "A1-B5".

In the example shown in FIG. 4, the resource indexes of the K₁ resources and the resource indexes of the K₂ resources may be resource indexes corresponding to any two different equation sets in the foregoing three equation sets.

For example, when the resource indexes of the K₁ resources and the resource indexes of the K₂ resources that are determined in S401 are respectively determined according to the equations 1 and 2, in a process of performing communication based on the K₁ resources in S402, a resource conflict may occur between the K₁ resources and the K₂ resources, in other words, the two resources conflict with each other on one of the three resources (whose index is "A2-B4").

For another example, when the resource indexes of the K₁ resources and the resource indexes of the K₂ resources that are determined in S401 are respectively determined according to the equations 2 and 3, in a process of performing communication based on the K₁ resources in S402, a resource conflict may occur between the K₁ resources and the K₂ resources, in other words, the two resources conflict with each other on one of the three resources (whose index is "A3-B1").

For still another example, when the resource indexes of the K₁ resources and the resource indexes of the K₂ resources that are determined in S401 are respectively determined according to the equations 1 and 3, in a process of performing communication based on the K₁ resources in S402, no resource conflict may occur between the K₁ resources and the K₂ resources, in other words, the two resources do not collide.

It can be seen from the foregoing examples that there is only one intersection point or no intersection point between two lines in space. Therefore, in the example shown in Table 1, resources may be allocated to 35 different communication apparatuses, and each communication apparatus obtains three resource units. A resource collision occurs between different communication apparatuses at most once. Therefore, a collision loss rate is less than or equal to 1/3, and an overloading factor OF is 35/15≈2.33.

Similarly, more design spaces and gains may be brought for more resource quantities, for example:

When a quantity of resources is 31 (that is, M=31), coordinates of PG(4, 2) (that is, N=4, p=2) may be used, there are 155 lines in total, and there are three points on each line. A corresponding design may bear 155 different communication apparatuses, a single communication apparatus may use 3 (for example, K₁=K₂=3) resources, a collision loss rate is less than 1/3, and an overloading factor OF is 5.

When the quantity of resources is 40 (that is, M=40), coordinates of PG(3, 3) (that is, N=3, p=3) may be used, there are 130 lines in total, and there are four points on each line. A corresponding design may bear 130 different communication apparatuses, a single communication apparatus may use 4 (for example, K₁ =K₂ =4) resources, a collision loss rate is less than 1/4, and an overloading factor OF is 3.25.

It can be learned from the foregoing implementation process that, in comparison with SCMA based on the fixed codebook in which even if a quantity of resources increases, a collision loss rate is still 1/2, and an overloading factor OF is still 1.5, the foregoing design solution is more flexible and has higher gains. Design spaces brought by more resources can be fully used, and an allocation solution with a smaller collision loss rate and a higher overloading factor OF can be designed.

In the example shown in Table 1, the quantity of resources (that is, M) may be equal to the quantity of coordinate points in the projective space, in other words, the two may be in a one-to-one correspondence. However, in an actual application, the two may not be equal. The following provides description with reference to more implementation examples. In the following example, the quantity of resources is 12 (that is, M=12).

In an implementation example, PG(2, 3) (that is, N=2, p=3) may be selected as a coordinate space. It can be learned from the foregoing definition of the projective space that, points of PG(2, 3) are 3² + 3 + 1 = 13. Each resource is corresponded to coordinates, and 12 coordinate points in 13 coordinate points are selected to perform a subsequent resource allocation process in which the quantity of resources is 12, as shown in Table 2 below.

**Table 2**

| | | |
|---|---|---|
| [1:0:0] | [1:0:1] | [1:2:1] |
| [1:1:0] | [1:0:2] | [0:1:0] |
| [1:2:0] | [1:1:2] | [0:1:1] |
| [1:1:1] | [1:2:2] | [0:1:2] |

In another implementation example, PG(3, 2) (that is, N=2, p=3) may be selected as a coordinate space, and it can be learned from the foregoing definition of the projective space that, points of PG(3, 2) are 2³ + 2² + 2 + 1 = 15. Each resource is corresponded to coordinates, and 12 coordinate points in 15 coordinate points are selected to perform a subsequent resource allocation process in which the quantity of resources is 12, as shown in the following Table 3.

**Table 3**

| | | |
|---|---|---|
| [1:0:0:0] | [1:1:1:0] | [0:1:0:0] |
| [1:1:0:0] | [1:1:0:1] | [0:0:1:0] |
| [1:0:1:0] | [1:0:1:1] | [0:0:0:1] |
| [1:0:0:1] | [1:1:1:1] | [0:0:1:1] |

It can be learned from Table 2 and Table 3 that, for any quantity of resources, a design of less collisions and less interference can be flexibly generated. The quantity of resources is not limited due to limitation of the fixed codebook (for example, a quantity of resources in SCMA needs to be a multiple of 4). In addition, in the solutions shown in Table 2 and Table 3, the former is closer to surjection than the latter because 12 is closer to the quantity 13 of coordinate points of PG(2, 3) than the quantity 15 of coordinate points of PG(3, 2). A granularity of the latter is smaller than that of the former (to be specific, when a resource index is determined by using a one-dimensional straight line in space, the granularity means a quantity of points (equal to a value of p+1) on the straight line, where the granularity of the former is 4, and the granularity of the latter is 3), and coexistence of users with different rates is supported.

In the solution shown in Table 2, because corresponding coordinates are from two dimensions (that is, N=2), coordinates corresponding to a resource allocated by a communication apparatus may be a "resource line" of a solution of two linear equations (that is, a solution obtained by using an equation set formed by the two equations), and a quantity of coordinate points on each resource is 4, in other words, the communication apparatus may obtain four resources (for example, K₁=K₂=4). According to the implementation shown in Table 1, it can be learned that four resources used by different communication apparatuses collide on only one of the resources.

In the solution shown in Table 3, because corresponding coordinates are from three dimensions (that is, N=3), coordinates corresponding to a resource allocated by a communication apparatus may be a "resource line" of a solution of two linear equations (that is, a solution obtained by using an equation set formed by the two equations), and a quantity of coordinate points on each resource is 4, in other words, the communication apparatus may obtain four resources. Alternatively, coordinates corresponding to a resource allocated by a communication apparatus may be a "resource plane" of a solution of one linear equation (that is, a solution obtained by using an equation set formed by the one equation), and a quantity of coordinates on each resource is 7, in other words, the communication apparatus may obtain seven resources. In this manner, some communication apparatuses may obtain four resources for communication, and some other communication apparatuses may obtain seven resources for communication (for example, K₁=4 and K₂=7), to meet communication requirements of different communication rates. In addition, a communication apparatus that obtains seven resources may implement relatively high-rate communication transmission gains.

In addition, when a plane and a straight line are not coplanar, because an intersection point of the plane and the straight line has only one coordinate point at most, generally, a quantity of intersection points between a high-dimensional space and a low-dimensional space depends only on the low-dimensional space, in other words, the quantity of intersection points between a high-dimensional space and a low-dimensional space is equal to a quantity of intersection points of two straight lines both in the low-dimensional space. Based on this feature, users with different rates can coexist without generating excessive interference.

In particular, in Table 2 and Table 3, if a communication rate requirement of a communication apparatus is relatively low, coordinates corresponding to a resource allocated to the communication apparatus may be a "resource line" of a solution of three linear equations (that is, a solution obtained by using an equation set formed by the three equations), and the resource corresponds to one point in coordinate space, in other words, the communication apparatus may obtain one resource. Correspondingly, the communication apparatus collides with another communication apparatus on only one resource.

It can be learned from the foregoing implementation process that, the resource indexes of the K₁ resources among the M resources are determined by using one of the solutions in the solution set of the i₁-dimensional subspace of the N-dimensional coordinate space. When values such as N and i₁ are determined, the solution set of the i₁-dimensional subspace of the N-dimensional coordinate space is determined. The solution set may also be referred to as a codebook set, and a solution in the solution set may be referred to as a codebook in the codebook set. In S401, the first communication apparatus does not need to determine the resource indexes by using the foregoing N-dimensional coordinate space, and the first communication apparatus may determine the resource indexes of the K₁ resources (or the K₂ resources) in the M resources based on one of the codebooks in the codebook set. The following describes the implementation process with reference to the procedure shown in FIG. 4.

S401: The first communication apparatus determines K₁ resources, where resource indexes of the K₁ resources are determined by using one codebook in a codebook set.

S402: The first communication apparatus performs communication based on the K₁ resources.

Specifically, when the resource indexes of the K₁ resources are determined by using one codebook in the codebook set, because the codebook in the codebook set may correspond to some or all solutions in a solution set of an i₁-dimensional subspace of an N-dimensional coordinate space, the foregoing technical effects can also be achieved in this case. For example, because different codebooks in the codebook set correspond to different solutions included in the solution set of the i₁-dimensional subspace, and the different solutions may correspond to different geometric figures in space, an implementation of determining the resource indexes of the K₁ resources among the M resources by using one codebook (that is, one solution in the solution set) in the codebook set can reduce communication interference of different communication devices by using sparsity of intersection of different geometric figures, to improve communication performance.

It should be noted that the first communication apparatus may determine another resource (for example, the K₂ resources described above) by using the foregoing codebook set. For a specific implementation process, refer to the foregoing descriptions. Details are not described herein again.

Optionally, in a process in which the first communication apparatus determines the K₁ resources by using the foregoing codebook set, the K₁ resources may be determined in a manner of determining the codebook set based on first information sent by another communication apparatus (for example, the second communication apparatus described above). For example, the first information sent by the another communication apparatus may include a location, an index, and the like of the resource indexes of the K₁ resources in the codebook set.

Optionally, after the first communication apparatus determines the K₁ resources by using the foregoing codebook set, the first communication apparatus may send second information to another communication apparatus (for example, the third communication apparatus described above) to indicate the K₁ resources. For example, the second information sent to the another communication apparatus may include a location, an index, and the like of the resource indexes of the K₁ resources in the codebook set.

For example, the first information and/or the second information may indicate some or all elements included in a codebook corresponding to one codebook index in any one of the following Table 4 to Table 14.

It may be understood that, because the resource indexes of the K₁ resources among the M resources are one of the solutions in the solution set of the i₁-dimensional subspace of the N-dimensional coordinate space, in a process in which the first communication apparatus determines the K₁ resources by using the foregoing codebook set, for the codebooks included in the codebook set, refer to the foregoing implementation process of the N-dimensional coordinate space (and related subspaces), to implement the corresponding technical effects.

For ease of understanding, the following provides some implementation examples of the codebook set by using Table 4 to Table 14.

In some embodiments, in the following example, information in any one of Table 4 to Table 14 is considered as a codebook set, and a value corresponding to an index in any one of the tables is a codebook in the codebook set. However, in an actual application, the information in any one of Table 4 to Table 14 may be considered as a codebook, and a value corresponding to an index in any one of the tables may be a code in the codebook. That is, the following codebook set may be replaced with "codebook", and the following codebook may be replaced with "code". Alternatively, the information in the following tables may be replaced with other descriptions, for example, a resource set-resource index-resource, or a resource block set-resource block index-resource block.

In some embodiments, in the following codebook sets, an example in which each codebook set is implemented by using a table is used. In an actual application, codebooks included in different codebook sets may be alternatively implemented by using a matrix, a sequence of number, or another manner.

In some embodiments, in the following examples of the codebook set, the codebook set may be understood as a set including resource allocation codes, and each codebook is a column of ordered 0 and 1. Each location in the codebook represents a resource. In the following example, 0 in the position indicates that the resource cannot be occupied (by a device to which the code is allocated), and 1 in the position indicates that the resource can be occupied; or 1 in the position indicates that the resource cannot be occupied (by a device to which the code is allocated), and 0 in the position indicates that the resource can be occupied. The former is used as an example for description below.

In an implementation example, when p=2, N=2, and i=1, an implementation example of the codebook set is shown in Table 4.

In some embodiments, in the codebook set shown in Table 4, that each codebook corresponds to a line in the N-dimensional space is used as an example. It can be learned from the foregoing description that, when i=1, a quantity of points on each line (that is, a quantity of available resources of each codebook) is K₁=pⁱ + pⁱ⁻¹+... +p + 1=p+1=3, a quantity of coordinate points (that is, a total quantity of resources of each codebook) is M=p^{N} + p^{N-1}+... +p + 1=7, and a quantity of i-dimensional spaces (where i=1, in other words, the quantity of i-dimensional spaces may also be a quantity of lines in the N-dimensional space, or a quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 7$.

**Table 4**

| Codebook index | Codebook |
|---|---|
| 0 | (1, 0, 0, 1, 0, 1, 0) |
| 1 | (0, 0, 1, 1, 0, 0, 1) |
| 2 | (1, 0, 1, 0, 1, 0, 0) |
| 3 | (0, 0, 0, 0, 1, 1, 1) |
| 4 | (1, 1, 0, 0, 0, 0, 1) |
| 5 | (0, 1, 1, 0, 0, 1, 0) |
| 6 | (0, 1, 0, 1, 1, 0, 0) |

In some embodiments, in Table 4 and another example below, an example in which quantities of occupiable resources corresponding to different codebooks included in each table are the same (that is, are all K₁) is used.

In some embodiments, in Table 4 and another example below, each codebook includes M elements, which may be represented as:
a₁, a₂, ..., and a_{M}.

In addition, in Table 4 and another example below, whether a resource conflict exists in different codebooks may be determined by comparing values of "a₁, a₂, ..., and a_{M}" in different codebooks. For example, in Table 4, values of elements included in a codebook index 0 are "1 0 0 1 0 1 0" and values of elements included in a codebook index 3 is "0 0 0 0 1 1 1". It can be learned that values of elements a₆ of the two codebook indexes both are 1, and values of other elements are not both 1.

It can be learned that, in Table 4 and the following other examples, when a quantity of codebooks in the codebook set is the same as a quantity of occupiable resources, a largest quantity of supported communication apparatuses is the same. This can avoid relatively large communication interference generated when different communication apparatuses occupy same resources. In this manner, a resource collision can occur on at most one resource between resources occupied by different communication apparatuses, and interference can be reduced as much as possible.

Optionally, for M resources corresponding to a₁, a₂, ..., and a_{M}, there may be a plurality of implementations of actual resource mapping locations of the M resources, and values of subscripts "1, 2, ..., and M" of the M resources do not mean a resource mapping location relationship between different resources. The following uses M resources corresponding to resource indexes b₁, b₂, ..., and b_{M} in ascending order as an example for description.

Example 1: The M resources corresponding to a₁, a₂, ..., and a_{M} in the codebook and the M resources corresponding to the resource indexes b₁, b₂, ..., and b_{M} may be sorted in ascending order of subscript indexes, to implement one-to-one correspondence between the two groups of M resources. For example, a resource corresponding to a₁ in the codebook is a resource whose resource index is b₁, and a resource corresponding to a₂ in the codebook is a resource whose resource index is b₂. By analogy, a resource corresponding to a_{M} in the codebook is a resource whose resource index is b_{M}.

Example 2: For the M resources corresponding to a₁, a₂, ..., and a_{M} in the codebook and the M resources corresponding to the resource indexes b₁, b₂, ..., and b_{M}, the former may be sorted in ascending order of subscript indexes, and the latter may be sorted in descending order of subscript indexes, to implement one-to-one correspondence between the two groups of M resources. For example, a resource corresponding to a₁ in the codebook is a resource whose resource index is b_{M}, and a resource corresponding to a₂ in the codebook is a resource whose resource index is b_{M-1}. By analogy, a resource corresponding to a_{M} in the codebook is a resource whose resource index is b₁.

Example 3: For the M resources corresponding to a₁, a₂, ..., and a_{M} in the codebook and the M resources corresponding to the resource indexes b₁, b₂, ..., and b_{M}, subscript indexes of the two groups of M resources may be in a correspondence in any order, to implement one-to-one correspondence between the two groups of M resources. In different codebooks included in a same table, correspondences between two groups of M resources in each codebook are the same. For example, in Table 4, a resource corresponding to a₁ is a resource corresponding to a resource index b₄. Values of first elements in the seven codebooks are respectively "1 0 1 0 1 0 0", and these elements all correspond to the resource corresponding to the resource index b₄. In other words, three codebooks whose codebook indexes are 0, 2, and 4 occupy the resource corresponding to the resource index b₄, and other codebooks do not occupy the resource corresponding to the resource index b₄.

Optionally, each table in Table 4 to Table 14 may represent a codebook set. In a process of determining a resource based on the following codebook set, the resource may be determined based on some or all codebooks included in the codebook set. For example, in S401, the first communication apparatus may determine the K₁ resources based on some or all codebooks indicated by some or all rows in one of the following tables. In other words, zero, one, or more codebooks in a plurality of codebooks included in each of Table 4 to Table 14 may be deleted, to determine the K₁ resources. In this manner, overheads can be reduced; and this manner is applicable to a scenario in which a quantity of communication apparatuses is small, in other words, lines in the N-dimensional space do not need to be allocated to corresponding communication apparatuses one by one.

Optionally, in Table 4 and another example below, for the M resources corresponding to a₁, a₂, ..., and a_{M}, in S401, when a resource is determined based on a codebook, the K₁ resources may be determined based on some or all of the M resources. That is, in Table 4 and the following examples, M elements included in any codebook may be deleted, in other words, the K₁ resources are determined by using a subset of a codebook set in Table 4 and the following examples.

For ease of understanding, the following uses the implementation process shown in Table 4 as an example, and one or more elements in the 7 (M=7) elements included in the codebook may be deleted.

For example, an element corresponding to "a₁" is deleted, M-1 resources corresponding to a₂, ..., and a_{M} may be obtained, and the codebooks in Table 4 may be transformed into:
the codebook index 0, corresponding to a codebook (0, 0, 1, 0, 1, 0);
the codebook index 1, corresponding to a codebook (0, 1, 1, 0, 0, 1);
the codebook index 2, corresponding to a codebook (0, 1, 0, 1, 0, 0);
the codebook index 3, corresponding to a codebook (0, 0, 0, 1, 1, 1);
the codebook index 4, corresponding to a codebook (1, 0, 0, 0, 0, 1);
the codebook index 5, corresponding to a codebook (1, 1, 0, 0, 1, 0); and
the codebook index 6, corresponding to a codebook (1, 0, 1, 1, 0, 0).

For another example, elements corresponding to "a₁" and "a_{M-1}" are deleted, M-1 resources corresponding to a₂, ..., and a_{M} may be obtained, and the codebooks in Table 4 may be transformed into:
the codebook index 0, corresponding to a codebook (0, 0, 1, 0, 0);
the codebook index 1, corresponding to a codebook (0, 1, 1, 0, 1);
the codebook index 2, corresponding to a codebook (0, 1, 0, 1, 0);
the codebook index 3, corresponding to a codebook (0, 0, 0, 1, 1);
the codebook index 4, corresponding to a codebook (1, 0, 0, 0, 1);
the codebook index 5, corresponding to a codebook (1, 1, 0, 0, 0); and
the codebook index 6, corresponding to a codebook (1, 0, 1, 1, 0).

It can be learned that, in this manner, flexibility of implementing the solution can be improved, resources corresponding to codebooks still meet a requirement that the resource collision occurs on at most one resource, and interference is reduced as much as possible. In addition, when indication information (for example, the foregoing first information and second information) indicates the K₁ resources, overheads may also be reduced.

Optionally, in an actual application, a quantity of actually-available resources may not be equal to a quantity of coordinate points (that is, a total quantity of resources of each codebook). When the quantity of actually-available resources is greater than or less than the quantity of coordinate points (that is, the total quantity of resources of each codebook), a resource may still be determined based on a codebook in Table 4 and related examples.

For ease of understanding, the following uses an implementation process shown in Table 4 as an example for description.

Example A: When the quantity of actually-available resources is less than the quantity of coordinate points (that is, the total quantity of resources of each codebook), one or more elements in the 7 (M=7) elements included in the codebook may be deleted.

For example, when the quantity of actually-available resources is 6, any element corresponding to "a₁,a₂... a_{M}" may be deleted, and corresponding M-1 resources are obtained. For an implementation process of deleting an element corresponding to "a₁", refer to the transformation process in the foregoing example for the codebooks in Table 4. Alternatively, when the quantity of actually-available resources is 6, for example, an element corresponding to "a₂" may be deleted, M-1 resources corresponding to a₁, a₃, ..., and a_{M} may be obtained, and the codebooks in Table 4 may be transformed into:
the codebook index 0, corresponding to a codebook (1, 0, 1, 0, 1, 0);
the codebook index 1, corresponding to a codebook (0, 1, 1, 0, 0, 1);
the codebook index 2, corresponding to a codebook (1, 1, 0, 1, 0, 0);
the codebook index 3, corresponding to a codebook (0, 0, 0, 1, 1, 1);
the codebook index 4, corresponding to a codebook (1, 0, 0, 0, 0, 1);
the codebook index 5, corresponding to a codebook (0, 1, 0, 0, 1, 0); and
the codebook index 6, corresponding to a codebook (0, 0, 1, 1, 0, 0).

For another example, when the quantity of actually-available resources is 5, any element corresponding to "a₁,a₂.. . a_{M}" may be deleted, and corresponding M-2 resources are obtained. For an implementation process of deleting elements corresponding to "a₁" and "a_{M}", refer to the transformation processes in the foregoing examples for the codebooks in Table 4. Alternatively, when the quantity of actually-available resources is 5, for example, elements corresponding to "a₁" and "a₂" may be deleted, M-2 resources corresponding to "a₃, ..., and a_{M}" may be obtained, and the codebooks in Table 4 may be transformed into:
the codebook index 0, corresponding to a codebook (0, 1, 0, 1, 0);
the codebook index 1, corresponding to a codebook (1, 1, 0, 0, 1);
the codebook index 2, corresponding to a codebook (1, 0, 1, 0, 0);
the codebook index 3, corresponding to a codebook (0, 0, 1, 1, 1);
the codebook index 4, corresponding to a codebook (0, 0, 0, 0, 1);
the codebook index 5, corresponding to a codebook (1, 0, 0, 1, 0); and
the codebook index 6, corresponding to a codebook (0, 1, 1, 0, 0).

It can be learned that, in Example A, flexibility of implementing the solution can be improved, resources corresponding to codebooks still meet a requirement that a resource collision occurs on at most one resource, and interference is reduced as much as possible. In addition, when the indication information (for example, the foregoing first information and second information) indicates the K₁ resources, overheads may also be reduced.

Example B: When the quantity of actually-available resources is greater than the quantity of coordinate points (that is, the total quantity of resources of each codebook), values of resource quantities corresponding to a difference between the two values may be both 0 or 1 by default.

For example, when the quantity of actually-available resources is 8, an element may be added before any element corresponding to "a₁, a₂.. . a_{M}", and M+1 elements are obtained, to indicate the eight resources.

For example, an element "0" is added before "a₁", and the codebooks in Table 4 may be transformed into:
the codebook index 0, corresponding to a codebook (0, 1, 0, 0, 1, 0, 1, 0);
the codebook index 1, corresponding to a codebook (0, 0, 0, 1, 1, 0, 0, 1);
the codebook index 2, corresponding to a codebook (0, 1, 0, 1, 0, 1, 0, 0);
the codebook index 3, corresponding to a codebook (0, 0, 0, 0, 0, 1, 1, 1);
the codebook index 4, corresponding to a codebook (0, 1, 1, 0, 0, 0, 0, 1);
the codebook index 5, corresponding to a codebook (0, 0, 1, 1, 0, 0, 1, 0); and
the codebook index 6, corresponding to a codebook (0, 0, 1, 0, 1, 1, 0, 0).

For example, an element "1" is added before "a₁", and the codebooks in Table 4 may be transformed into:
the codebook index 0, corresponding to a codebook (1, 1, 0, 0, 1, 0, 1, 0);
the codebook index 1, corresponding to a codebook (1, 0, 0, 1, 1, 0, 0, 1);
the codebook index 2, corresponding to a codebook (1, 1, 0, 1, 0, 1, 0, 0);
the codebook index 3, corresponding to a codebook (1, 0, 0, 0, 0, 1, 1, 1);
the codebook index 4, corresponding to a codebook (1, 1, 1, 0, 0, 0, 0, 1);
the codebook index 5, corresponding to a codebook (1, 0, 1, 1, 0, 0, 1, 0); and
the codebook index 6, corresponding to a codebook (1, 0, 1, 0, 1, 1, 0, 0).

For example, an element "0" is added before "a₁" and "a₂", and the codebooks in Table 4 may be transformed into:
the codebook index 0, corresponding to a codebook (1, 0, 0, 0, 1, 0, 1, 0);
the codebook index 1, corresponding to a codebook (0, 0, 0, 1, 1, 0, 0, 1);
the codebook index 2, corresponding to a codebook (1, 0, 0, 1, 0, 1, 0, 0);
the codebook index 3, corresponding to a codebook (0, 0, 0, 0, 0, 1, 1, 1);
the codebook index 4, corresponding to a codebook (1, 0, 1, 0, 0, 0, 0, 1);
the codebook index 5, corresponding to a codebook (0, 0, 1, 1, 0, 0, 1, 0); and
the codebook index 6, corresponding to a codebook (0, 0, 1, 0, 1, 1, 0, 0).

It can be learned that, in Example B, flexibility of implementing the solution can be improved; and in a manner of adding the element "0", resources corresponding to codebooks still meet a requirement that a resource collision occurs on at most one resource, and interference is reduced as much as possible.

Optionally, in Table 4 to Table 14, codebooks in different tables may be mixed for use. For example, codebooks corresponding to some or all rows in a table and codebooks corresponding to some or all rows in another table may form a new codebook set; and subsequently, a resource may be determined based on the new codebook set.

In some embodiments, for any two tables whose values of N and p are the same, because in the two tables, a quantity of points (that is, the quantity of available resources of each codebook) on each line in the two tables may vary, coexistence of different rates may be implemented in a codebook mixing manner, to implement transmission processes of different rate requirements.

The foregoing examples are mainly described by providing some examples of the parameters included in Table 4. For implementation processes of Table 5 to Table 14, refer to descriptions of Table 4 and related implementation examples.

In an implementation example, when p=2, N=3, and i=1, an implementation example of the codebook set is shown in Table 5.

It should be understood that in the codebook set shown in Table 5, that each codebook corresponds to a line in the N-dimensional space is used as an example. It can be learned from the foregoing description that, when i=1, the quantity of points on each line (that is, the quantity of available resources of each codebook) is K₁=p+1=3, the quantity of coordinate points (that is, the total quantity of resources of each codebook) is M=p^{N} + p^{N-1}+... +p + 1=15, and a quantity of i-dimensional spaces (where i=1, in other words, the quantity of i-dimensional spaces may also be a quantity of lines in the N-dimensional space, or a quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 35$.

**Table 5**

| Codebook index | Codebook |
|---|---|
| 0 | (0, 0, 0, 0, 0, 1, 1, 0, 0, 0, 0, 0, 0, 1, 0) |
| 1 | (0, 0, 0, 0, 1, 0, 0, 1, 0, 0, 0, 0, 0, 1, 0) |
| 2 | (0, 0, 0, 0, 0, 0, 0, 0, 0, 1, 0, 1, 1, 0, 0) |
| 3 | (0, 0, 0, 1, 0, 1, 0, 0, 0, 0, 1, 0, 0, 0, 0) |
| 4 | (0, 0, 1, 0, 0, 1, 0, 0, 0, 0, 0, 1, 0, 0, 0) |
| 5 | (0, 0, 0, 0, 0, 0, 0, 0, 1, 0, 0, 1, 0, 1, 0) |
| 6 | (0, 1, 1, 0, 0, 0, 0, 0, 0, 0, 0, 0, 0, 1, 0) |
| 7 | (0, 0, 0, 0, 1, 0, 1, 0, 0, 0, 0, 0, 1, 0, 0) |
| 8 | (0, 0, 1, 0, 0, 0, 1, 0, 1, 0, 0, 0, 0, 0, 0) |
| 9 | (1, 0, 0, 0, 1, 0, 0, 0, 1, 0, 0, 0, 0, 0, 0) |
| 10 | (1, 0, 0, 1, 0, 0, 0, 0, 0, 0, 0, 0, 0, 1, 0) |
| 11 | (0, 0, 0, 0, 0, 1, 0, 1, 0, 0, 0, 0, 1, 0, 0) |
| 12 | (0, 0, 0, 1, 1, 0, 0, 0, 0, 0, 0, 1, 0, 0, 0) |
| 13 | (0, 1, 0, 0, 0, 1, 0, 0, 1, 0, 0, 0, 0, 0, 0) |
| 14 | (0, 0, 1, 1, 0, 0, 0, 0, 0, 0, 0, 0, 0, 0, 1) |
| 15 | (0, 1, 0, 0, 0, 0, 0, 1, 0, 0, 1, 0, 0, 0, 0) |
| 16 | (0, 0, 1, 0, 0, 0, 0, 1, 0, 1, 0, 0, 0, 0, 0) |
| 17 | (0, 1, 0, 0, 0, 0, 1, 0, 0, 0, 0, 1, 0, 0, 0) |
| 18 | (1, 0, 0, 0, 0, 0, 0, 1, 0, 0, 0, 1, 0, 0, 0) |
| 19 | (0, 0, 0, 0, 1, 1, 0, 0, 0, 0, 0, 0, 0, 0, 1) |
| 20 | (1, 1, 0, 0, 0, 0, 0, 0, 0, 0, 0, 0, 0, 0, 1) |
| 21 | (1, 0, 0, 0, 0, 0, 1, 0, 0, 0, 1, 0, 0, 0, 0) |
| 22 | (0, 0, 0, 0, 0, 0, 0, 0, 1, 0, 1, 0, 1, 0, 0) |
| 23 | (0, 0, 0, 0, 0, 0, 1, 1, 0, 0, 0, 0, 0, 0, 1) |
| 24 | (0, 0, 0, 0, 0, 0, 0, 0, 1, 1, 0, 0, 0, 0, 1) |
| 25 | (0, 0, 0, 0, 0, 0, 0, 0, 0, 0, 0, 0, 1, 1, 1) |
| 26 | (1, 0, 0, 0, 0, 1, 0, 0, 0, 1, 0, 0, 0, 0, 0) |
| 27 | (0, 1, 0, 0, 1, 0, 0, 0, 0, 1, 0, 0, 0, 0, 0) |
| 28 | (0, 1, 0, 1, 0, 0, 0, 0, 0, 0, 0, 0, 1, 0, 0) |
| 29 | (0, 0, 1, 0, 1, 0, 0, 0, 0, 0, 1, 0, 0, 0, 0) |
| 30 | (0, 0, 0, 0, 0, 0, 0, 0, 0, 1, 1, 0, 0, 1, 0) |
| 31 | (1, 0, 1, 0, 0, 0, 0, 0, 0, 0, 0, 0, 1, 0, 0) |
| 32 | (0, 0, 0, 1, 0, 0, 0, 1, 1, 0, 0, 0, 0, 0, 0) |
| 33 | (0, 0, 0, 1, 0, 0, 1, 0, 0, 1, 0, 0, 0, 0, 0) |
| 34 | (0, 0, 0, 0, 0, 0, 0, 0, 0, 0, 1, 1, 0, 0, 1) |

In an implementation example, when p=2, N=3, i=2, K₁=7, and M=15, an implementation example of the codebook set is shown in Table 6.

It should be understood that in the codebook set shown in Table 5, that each codebook corresponds to a line in the N-dimensional space is used as an example. It can be learned from the foregoing description that, when i=2, the quantity of points on each line (that is, the quantity of available resources of each codebook) is K₁=pⁱ + pⁱ⁻¹+...+p + 1=7, the quantity of coordinate points (that is, the total quantity of resources of each codebook) is M=p^{N} + p^{N-1}+... +p + 1=15, and the quantity of i-dimensional spaces (where i=2, in other words, the quantity of i-dimensional spaces may also be a quantity of planes in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 15$.

**Table 6**

| Codebook index | Codebook |
|---|---|
| 0 | (0, 0, 0, 0, 0, 0, 0, 0, 1, 1, 1, 1, 1, 1, 1) |
| 1 | (1, 0, 0, 1, 0, 1, 1, 0, 0, 1, 1, 0, 0, 1, 0) |
| 2 | (0, 0, 1, 1, 1, 1, 0, 0, 0, 0, 1, 1, 0, 0, 1) |
| 3 | (1, 1, 0, 0, 0, 0, 1, 1, 0, 0, 1, 1, 0, 0, 1) |
| 4 | (1, 0, 0, 1, 1, 0, 0, 1, 1, 0, 0, 1, 0, 1, 0) |
| 5 | (1, 0, 1, 0, 1, 0, 1, 0, 1, 0, 1, 0, 1, 0, 0) |
| 6 | (0, 0, 1, 1, 0, 0, 1, 1, 1, 1, 0, 0, 0, 0, 1) |
| 7 | (0, 1, 1, 0, 0, 1, 1, 0, 1, 0, 0, 1, 0, 1, 0) |
| 8 | (1, 0, 1, 0, 0, 1, 0, 1, 0, 1, 0, 1, 1, 0, 0) |
| 9 | (0, 1, 0, 1, 0, 1, 0, 1, 1, 0, 1, 0, 1, 0, 0) |
| 10 | (0, 1, 1, 0, 1, 0, 0, 1, 0, 1, 1, 0, 0, 1, 0) |
| 11 | (0, 1, 0, 1, 1, 0, 1, 0, 0, 1, 0, 1, 1, 0, 0) |
| 12 | (1, 1, 0, 0, 1, 1, 0, 0, 1, 1, 0, 0, 0, 0, 1) |
| 13 | (0, 0, 0, 0, 1, 1, 1, 1, 0, 0, 0, 0, 1, 1, 1) |
| 14 | (1, 1, 1, 1, 0, 0, 0, 0, 0, 0, 0, 0, 1, 1, 1) |

In an implementation example, when p=2, N=4, i=1, K₁=3, and M=31, an implementation example of the codebook set is shown in Table 7.

It should be understood that in the codebook set shown in Table 7, that each codebook corresponds to a line in the N-dimensional space is used as an example. It can be learned from the foregoing description that, when i=1, the quantity of points on each line (that is, the quantity of available resources of each codebook) is K₁=pⁱ + pⁱ⁻¹+...+p + 1=p+1=3, the quantity of coordinate points (that is, the total quantity of resources of each codebook) is M=p^{N} + p^{N-1}+... +p + 1=31, and the quantity of i-dimensional spaces (where i=1, in other words, the quantity of i-dimensional spaces may also be the quantity of lines in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 155$.

**Table 7**

| Codebook index | Codebook |
|---|---|
| 0 | (0, 0, 0, 0, 0, 0, 0, 0, 0, 0, 0, 0, 0, 1, 1, 0, 0, 0, 0, 0, 0, 0, 0, 0, 0, 0, 0, 0, 0, 1, 0) |
| 1 | (0, 0, 0, 0, 0, 0, 0, 0, 0, 0, 0, 0, 0, 0, 1, 1, 0, 0, 0, 0, 0, 0, 0, 0, 0, 0, 0, 0, 0, 0, 1) |
| 2 | (0, 1, 0, 1, 0, 0, 0, 0, 0, 0, 0, 0, 0, 0, 0, 0, 0, 0, 0, 0, 0, 0, 0, 0, 0, 0, 0, 0, 1, 0, 0) |
| 3 | (0, 0, 0, 0, 0, 1, 0, 0, 0, 0, 1, 0, 0, 0, 0, 0, 0, 0, 0, 0, 0, 0, 0, 1, 0, 0, 0, 0, 0, 0, 0) |
| 4 | (0, 1, 0, 0, 0, 0, 0, 1, 0, 0, 0, 0, 0, 0, 0, 0, 0, 0, 0, 0, 0, 0, 0, 0, 0, 0, 1, 0, 0, 0, 0) |
| 5 | (0, 0, 0, 0, 0, 1, 0, 0, 0, 1, 0, 0, 0, 0, 0, 0, 0, 0, 0, 0, 1, 0, 0, 0, 0, 0, 0, 0, 0, 0, 0) |
| 6 | (0, 0, 0, 0, 0, 0, 0, 0, 1, 1, 0, 0, 0, 0, 0, 0, 0, 0, 0, 0, 0, 0, 0, 0, 0, 0, 0, 0, 0, 0, 1) |
| 7 | (0, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0) |
| 8 | (0, 0, 0, 0, 0, 0, 0, 0, 0, 0, 0, 0, 0, 0, 0, 0, 0, 0, 0, 1, 0, 0, 0, 1, 1, 0, 0, 0, 0, 0, 0) |
| 9 | (0, 0, 0, 0, 0, 0, 1, 0, 0, 0, 0, 0, 0, 1, 0, 0, 0, 0, 0, 1, 0, 0, 0, 0, 0, 0, 0, 0, 0, 0, 0) |
| 10 | (1, 0, 0, 0, 0, 1, 0, 0, 0, 0, 0, 0, 0, 0, 0, 0, 0, 0, 0, 0, 0, 0, 0, 0, 0, 1, 0, 0, 0, 0, 0) |
| 11 | (0, 0, 0, 0, 0, 0, 0, 0, 1, 0, 0, 0, 0, 0, 1, 0, 0, 0, 0, 0, 0, 0, 0, 0, 0, 0, 1, 0, 0, 0, 0) |
| 12 | (0, 0, 0, 0, 0, 0, 0, 0, 0, 0, 0, 0, 0, 0, 0, 0, 0, 1, 0, 0, 0, 1, 0, 0, 1, 0, 0, 0, 0, 0, 0) |
| 13 | (0, 0, 1, 0, 0, 0, 0, 0, 0, 0, 1, 0, 0, 0, 0, 0, 1, 0, 0, 0, 0, 0, 0, 0, 0, 0, 0, 0, 0, 0, 0) |
| 14 | (0, 0, 0, 0, 0, 1, 0, 0, 0, 0, 0, 0, 0, 0, 1, 0, 0, 0, 0, 1, 0, 0, 0, 0, 0, 0, 0, 0, 0, 0, 0) |
| 15 | (0, 0, 0, 0, 0, 0, 0, 1, 0, 0, 0, 0, 0, 1, 0, 0, 0, 0, 1, 0, 0, 0, 0, 0, 0, 0, 0, 0, 0, 0, 0) |
| 16 | (0, 0, 0, 1, 0, 1, 0, 0, 0, 0, 0, 0, 0, 0, 0, 0, 0, 0, 0, 0, 0, 0, 0, 0, 0, 0, 1, 0, 0, 0, 0) |
| 17 | (1, 0, 0, 0, 0, 0, 0, 0, 0, 0, 0, 0, 0, 0, 1, 0, 0, 0, 0, 0, 0, 0, 1, 0, 0, 0, 0, 0, 0, 0, 0) |
| 18 | (1, 0, 0, 1, 0, 0, 0, 0, 0, 0, 0, 0, 0, 0, 0, 0, 0, 0, 0, 0, 0, 0, 0, 0, 0, 0, 0, 0, 0, 1, 0) |
| 19 | (0, 0, 0, 0, 1, 0, 0, 0, 0, 0, 0, 1, 0, 0, 0, 0, 0, 0, 0, 0, 0, 0, 0, 1, 0, 0, 0, 0, 0, 0, 0) |
| 20 | (0, 0, 0, 0, 0, 0, 0, 0, 0, 0, 0, 0, 0, 0, 0, 0, 1, 0, 0, 0, 1, 0, 0, 0, 1, 0, 0, 0, 0, 0, 0) |
| 21 | (0, 0, 1, 1, 0, 0, 0, 0, 0, 0, 0, 0, 0, 0, 0, 0, 0, 0, 0, 0, 0, 0, 0, 0, 0, 0, 0, 0, 0, 0, 1) |
| 22 | (0, 0, 0, 0, 0, 0, 0, 0, 0, 0, 0, 0, 0, 0, 0, 0, 0, 0, 0, 0, 0, 0, 0, 0, 0, 0, 1, 1, 0, 0, 1) |
| 23 | (1, 0, 0, 0, 0, 0, 0, 0, 0, 0, 0, 0, 1, 0, 0, 0, 0, 0, 0, 0, 1, 0, 0, 0, 0, 0, 0, 0, 0, 0, 0) |
| 24 | (0, 0, 0, 0, 1, 0, 0, 0, 0, 1, 0, 0, 0, 0, 0, 0, 0, 0, 0, 0, 0, 1, 0, 0, 0, 0, 0, 0, 0, 0, 0) |
| 25 | (0, 0, 1, 0, 0, 1, 0, 0, 0, 0, 0, 0, 0, 0, 0, 0, 0, 0, 0, 0, 0, 0, 0, 0, 0, 0, 0, 1, 0, 0, 0) |
| 26 | (0, 0, 0, 0, 0, 0, 0, 0, 0, 0, 0, 0, 1, 0, 1, 0, 0, 0, 0, 0, 0, 0, 0, 0, 0, 0, 0, 0, 1, 0, 0) |
| 27 | (0, 0, 0, 0, 0, 0, 0, 0, 0, 0, 0, 0, 0, 0, 0, 0, 0, 0, 0, 0, 1, 0, 0, 1, 0, 0, 0, 0, 0, 1, 0) |
| 28 | (0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0) |
| 29 | (0, 1, 0, 0, 0, 0, 1, 0, 0, 0, 0, 0, 0, 0, 0, 0, 0, 0, 0, 0, 0, 0, 0, 0, 0, 0, 0, 1, 0, 0, 0) |
| 30 | (0, 0, 0, 0, 0, 0, 0, 0, 0, 1, 0, 0, 0, 0, 1, 0, 0, 0, 0, 0, 0, 0, 0, 0, 0, 0, 0, 1, 0, 0, 0) |
| 31 | (0, 1, 0, 0, 0, 0, 0, 0, 0, 1, 0, 0, 0, 0, 0, 0, 1, 0, 0, 0, 0, 0, 0, 0, 0, 0, 0, 0, 0, 0, 0) |
| 32 | (0, 0, 0, 0, 0, 1, 0, 1, 0, 0, 0, 0, 0, 0, 0, 0, 0, 0, 0, 0, 0, 0, 0, 0, 0, 0, 0, 0, 1, 0, 0) |
| 33 | (0, 0, 0, 0, 0, 0, 0, 0, 0, 0, 0, 0, 0, 0, 0, 0, 1, 0, 0, 0, 0, 0, 1, 0, 0, 0, 1, 0, 0, 0, 0) |
| 34 | (1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 35 | (0, 0, 1, 0, 0, 0, 0, 0, 0, 0, 0, 0, 0, 0, 0, 1, 0, 0, 0, 0, 0, 1, 0, 0, 0, 0, 0, 0, 0, 0, 0) |
| 36 | (0, 1, 0, 0, 0, 0, 0, 0, 0, 0, 0, 0, 1, 0, 0, 0, 0, 0, 0, 0, 0, 1, 0, 0, 0, 0, 0, 0, 0, 0, 0) |
| 37 | (0, 0, 0, 0, 0, 0, 0, 0, 0, 0, 0, 0, 0, 0, 0, 0, 0, 0, 1, 0, 0, 1, 0, 0, 0, 0, 0, 1, 0, 0, 0) |
| 38 | (0, 0, 0, 0, 1, 0, 1, 0, 0, 0, 0, 0, 0, 0, 0, 0, 0, 0, 0, 0, 0, 0, 0, 0, 0, 0, 0, 0, 1, 0, 0) |
| 39 | (0, 0, 0, 0, 0, 1, 0, 0, 0, 0, 0, 0, 0, 1, 0, 0, 1, 0, 0, 0, 0, 0, 0, 0, 0, 0, 0, 0, 0, 0, 0) |
| 40 | (1, 0, 0, 0, 0, 0, 0, 0, 0, 0, 1, 0, 0, 0, 0, 0, 0, 0, 1, 0, 0, 0, 0, 0, 0, 0, 0, 0, 0, 0, 0) |
| 41 | (1, 0, 0, 0, 0, 0, 1, 0, 0, 0, 0, 0, 0, 0, 0, 0, 0, 0, 0, 0, 0, 0, 0, 0, 0, 0, 1, 0, 0, 0, 0) |
| 42 | (0, 1, 0, 0, 0, 0, 0, 0, 0, 0, 0, 0, 0, 0, 0, 1, 0, 0, 0, 0, 0, 0, 1, 0, 0, 0, 0, 0, 0, 0, 0) |
| 43 | (0, 0, 0, 0, 0, 0, 0, 0, 0, 0, 0, 1, 1, 0, 0, 0, 0, 0, 0, 0, 0, 0, 0, 0, 0, 0, 0, 1, 0, 0, 0) |
| 44 | (0, 0, 0, 1, 0, 0, 0, 0, 0, 0, 0, 0, 0, 0, 0, 1, 0, 0, 0, 0, 1, 0, 0, 0, 0, 0, 0, 0, 0, 0, 0) |
| 45 | (0, 0, 0, 1, 0, 0, 0, 0, 0, 0, 0, 0, 0, 0, 1, 0, 0, 0, 0, 0, 0, 1, 0, 0, 0, 0, 0, 0, 0, 0, 0) |
| 46 | (0, 0, 0, 0, 0, 0, 0, 0, 0, 0, 0, 0, 0, 0, 0, 0, 0, 0, 0, 1, 1, 0, 0, 0, 0, 0, 0, 1, 0, 0, 0) |
| 47 | (0, 0, 0, 0, 0, 0, 0, 0, 1, 0, 0, 0, 0, 0, 0, 1, 0, 0, 0, 0, 0, 0, 0, 0, 0, 0, 0, 1, 0, 0, 0) |
| 48 | (0, 0, 0, 0, 0, 0, 0, 0, 0, 0, 0, 0, 0, 0, 0, 0, 1, 1, 0, 0, 0, 0, 0, 0, 0, 0, 0, 0, 0, 0, 1) |
| 49 | (0, 0, 0, 0, 0, 0, 0, 0, 0, 0, 0, 0, 0, 0, 0, 0, 0, 1, 0, 0, 0, 0, 1, 0, 0, 0, 0, 1, 0, 0, 0) |
| 50 | (0, 0, 0, 0, 0, 0, 0, 0, 0, 0, 0, 1, 0, 1, 0, 0, 0, 0, 0, 0, 0, 0, 0, 0, 0, 0, 1, 0, 0, 0, 0) |
| 51 | (0, 0, 0, 0, 0, 0, 0, 1, 0, 1, 0, 0, 0, 0, 0, 0, 0, 0, 0, 0, 0, 0, 1, 0, 0, 0, 0, 0, 0, 0, 0) |
| 52 | (0, 0, 0, 0, 0, 0, 0, 0, 0, 0, 0, 1, 0, 0, 1, 0, 0, 0, 0, 0, 0, 0, 0, 0, 0, 1, 0, 0, 0, 0, 0) |
| 53 | (0, 1, 0, 0, 0, 0, 0, 0, 1, 0, 0, 0, 0, 0, 0, 0, 0, 1, 0, 0, 0, 0, 0, 0, 0, 0, 0, 0, 0, 0, 0) |
| 54 | (0, 0, 0, 0, 0, 0, 0, 0, 0, 0, 0, 0, 0, 0, 0, 0, 0, 0, 0, 0, 1, 1, 0, 0, 0, 0, 0, 0, 0, 0, 1) |
| 55 | (0, 0, 0, 0, 0, 0, 0, 0, 0, 0, 1, 0, 0, 0, 0, 1, 0, 0, 0, 0, 0, 0, 0, 0, 0, 1, 0, 0, 0, 0, 0) |
| 56 | (0, 0, 0, 0, 0, 0, 0, 0, 0, 0, 0, 0, 1, 0, 0, 1, 0, 0, 0, 0, 0, 0, 0, 0, 0, 0, 0, 0, 0, 1, 0) |
| 57 | (0, 0, 0, 0, 0, 0, 0, 0, 0, 0, 0, 0, 0, 0, 0, 0, 0, 0, 0, 0, 0, 0, 0, 0, 1, 0, 1, 0, 1, 0, 0) |
| 58 | (0, 0, 0, 0, 0, 0, 0, 0, 0, 0, 1, 0, 1, 0, 0, 0, 0, 0, 0, 0, 0, 0, 0, 0, 0, 0, 1, 0, 0, 0, 0) |
| 59 | (0, 0, 1, 0, 1, 0, 0, 0, 0, 0, 0, 0, 0, 0, 0, 0, 0, 0, 0, 0, 0, 0, 0, 0, 0, 0, 1, 0, 0, 0, 0) |
| 60 | (0, 0, 0, 0, 0, 0, 0, 0, 0, 0, 0, 0, 0, 0, 0, 0, 1, 0, 0, 0, 0, 0, 0, 1, 0, 0, 0, 1, 0, 0, 0) |
| 61 | (0, 0, 0, 0, 0, 0, 1, 0, 0, 0, 0, 0, 0, 0, 1, 0, 1, 0, 0, 0, 0, 0, 0, 0, 0, 0, 0, 0, 0, 0, 0) |
| 62 | (0, 0, 0, 0, 1, 0, 0, 0, 0, 0, 0, 0, 1, 0, 0, 0, 1, 0, 0, 0, 0, 0, 0, 0, 0, 0, 0, 0, 0, 0, 0) |
| 63 | (0, 0, 0, 0, 0, 0, 0, 0, 1, 0, 1, 0, 0, 0, 0, 0, 0, 0, 0, 0, 0, 0, 0, 0, 0, 0, 0, 0, 1, 0, 0) |
| 64 | (0, 1, 0, 0, 0, 0, 0, 0, 0, 0, 0, 0, 0, 1, 0, 0, 0, 0, 0, 0, 1, 0, 0, 0, 0, 0, 0, 0, 0, 0, 0) |
| 65 | (0, 0, 1, 0, 0, 0, 0, 0, 0, 1, 0, 0, 0, 0, 0, 0, 0, 0, 0, 1, 0, 0, 0, 0, 0, 0, 0, 0, 0, 0, 0) |
| 66 | (0, 0, 0, 0, 0, 0, 0, 0, 0, 0, 0, 0, 0, 0, 0, 0, 0, 1, 0, 0, 0, 0, 0, 1, 0, 0, 1, 0, 0, 0, 0) |
| 67 | (1, 0, 0, 0, 0, 0, 0, 0, 0, 0, 0, 0, 0, 0, 0, 1, 0, 0, 0, 0, 0, 0, 0, 1, 0, 0, 0,0, 0, 0, 0) |
| 68 | (0, 1, 0, 0, 0, 0, 0, 0, 0, 0, 0, 1, 0, 0, 0, 0, 0, 0, 1, 0, 0, 0, 0, 0, 0, 0, 0, 0, 0, 0, 0) |
| 69 | (0, 0, 0, 0, 1, 0, 0, 0, 0, 0, 0, 0, 0, 1, 0, 0, 0, 1, 0, 0, 0, 0, 0, 0, 0, 0, 0, 0, 0, 0, 0) |
| 70 | (0, 1, 1, 0, 0, 0, 0, 0, 0, 0, 0, 0, 0, 0, 0, 0, 0, 0, 0, 0, 0, 0, 0, 0, 0, 0, 0, 0, 0, 1, 0) |
| 71 | (0, 0, 0, 0, 1, 0, 0, 1, 0, 0, 0, 0, 0, 0, 0, 0, 0, 0, 0, 0, 0, 0, 0, 0, 0, 0, 0, 0, 0, 1, 0) |
| 72 | (0, 0, 0, 0, 0, 0, 0, 0, 1, 0, 0, 0, 0, 1, 0, 0, 0, 0, 0, 0, 0, 0, 0, 0, 0, 1, 0, 0, 0, 0, 0) |
| 73 | (0, 0, 0, 0, 0, 0, 0, 0, 0, 0, 0, 0, 0, 0, 0, 0, 0, 0, 0, 1, 0, 1, 0, 0, 0, 0, 1, 0, 0, 0, 0) |
| 74 | (0, 0, 0, 0, 0, 0, 1, 0, 0, 0, 0, 0, 0, 0, 0, 1, 0, 1, 0, 0, 0, 0, 0, 0, 0, 0, 0, 0, 0, 0, 0) |
| 75 | (0, 0, 0, 1, 0, 0, 0, 0, 0, 0, 1, 0, 0, 0, 0, 0, 0, 1, 0, 0, 0, 0, 0, 0, 0, 0, 0, 0, 0, 0, 0) |
| 76 | (0, 0, 0, 0, 0, 0, 0, 0, 0, 0, 0, 0, 0, 0, 0, 0, 1, 0, 0, 1, 0, 0, 0, 0, 0, 0, 0, 0, 0, 1, 0) |
| 77 | (0, 0, 0, 0, 0, 1, 1, 0, 0, 0, 0, 0, 0, 0, 0, 0, 0, 0, 0, 0, 0, 0, 0, 0, 0, 0, 0, 0, 0, 1, 0) |
| 78 | (0, 0, 0, 0, 0, 1, 0, 0, 0, 0, 0, 0, 0, 0, 0, 1, 0, 0, 1, 0, 0, 0, 0, 0, 0, 0, 0, 0, 0, 0, 0) |
| 79 | (0, 0, 1, 0, 0, 0, 0, 0, 0, 0, 0, 1, 0, 0, 0, 0, 0, 1, 0, 0, 0, 0, 0, 0, 0, 0, 0, 0, 0, 0, 0) |
| 80 | (0, 0, 0, 1, 0, 0, 0, 1, 0, 0, 0, 0, 0, 0, 0, 0, 0, 0, 0, 0, 0, 0, 0, 0, 1, 0, 0, 0, 0, 0, 0) |
| 81 | (0, 0, 0, 0, 0, 0, 1, 0, 0, 1, 0, 0, 0, 0, 0, 0, 0, 0, 0, 0, 0, 0, 0, 1, 0, 0, 0, 0, 0, 0, 0) |
| 82 | (0, 0, 0, 0, 0, 0, 0, 0, 0, 0, 1, 0, 0, 1, 0, 0, 0, 0, 0, 0, 0, 0, 0, 0, 0, 0, 0, 1, 0, 0, 0) |
| 83 | (0, 0, 0, 0, 0, 0, 0, 1, 1, 0, 0, 0, 0, 0, 0, 0, 0, 0, 0, 0, 0, 0, 0, 1, 0, 0, 0, 0, 0, 0, 0) |
| 84 | (0, 0, 0, 0, 0, 0, 0, 1, 0, 0, 0, 0, 0, 0, 0, 1, 1, 0, 0, 0, 0, 0, 0, 0, 0, 0,0, 0, 0, 0, 0) |
| 85 | (0, 0, 0, 0, 0, 0, 0, 0, 0, 0, 0, 1, 0, 0, 0, 1, 0, 0, 0, 0, 0, 0, 0, 0, 1, 0, 0, 0, 0, 0, 0) |
| 86 | (0, 0, 0, 0, 0, 1, 0, 0, 0, 0, 0, 1, 0, 0, 0, 0, 0, 0, 0, 0, 0, 0, 1, 0, 0, 0, 0, 0, 0, 0, 0) |
| 87 | (0, 0, 0, 0, 0, 0, 1, 0, 0, 0, 0, 1, 0, 0, 0, 0, 0, 0, 0, 0, 0, 1, 0, 0, 0, 0, 0, 0, 0, 0, 0) |
| 88 | (0, 0, 0, 0, 0, 1, 0, 0, 1, 0, 0, 0, 0, 0, 0, 0, 0, 0, 0, 0, 0, 1, 0, 0, 0, 0, 0, 0, 0, 0, 0) |
| 89 | (0, 0, 0, 0, 0, 0, 0, 0, 0, 1, 0, 1, 0, 0, 0, 0, 0, 0, 0, 0, 0, 0, 0, 0, 0, 0, 0, 0, 1, 0, 0) |
| 90 | (0, 0, 0, 0, 0, 1, 0, 0, 0, 0, 0, 0, 1, 0, 0, 0, 0, 1, 0, 0, 0, 0, 0, 0, 0, 0, 0, 0, 0, 0, 0) |
| 91 | (0, 0, 1, 0, 0, 0, 0, 0, 0, 0, 0, 0, 1, 0, 0, 0, 0, 0, 0, 0, 0, 0, 1, 0, 0, 0, 0, 0, 0, 0, 0) |
| 92 | (0, 0, 0, 0, 0, 0, 0, 0, 0, 0, 0, 0, 0, 0, 0, 0, 0, 1, 0, 0, 1, 0, 0, 0, 0, 1, 0, 0, 0, 0, 0) |
| 93 | (0, 0, 0, 0, 1, 0, 0, 0, 1, 0, 0, 0, 0, 0, 0, 0, 0, 0, 0, 0, 1, 0, 0, 0, 0, 0, 0, 0, 0, 0, 0) |
| 94 | (0, 1, 0, 0, 0, 1, 0, 0, 0, 0, 0, 0, 0, 0, 0, 0, 0, 0, 0, 0, 0, 0, 0, 0, 1, 0, 0, 0, 0, 0, 0) |
| 95 | (0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1) |
| 96 | (0, 0, 0, 0, 0, 0, 0, 0, 0, 0, 0, 0, 0, 0, 0, 0, 0, 0, 0, 0, 0, 0, 0, 0, 0, 1, 1, 0, 0, 1, 0) |
| 97 | (0, 0, 0, 0, 0, 0, 0, 0, 0, 0, 1, 1, 0, 0, 0, 0, 0, 0, 0, 0, 0, 0, 0, 0, 0, 0, 0, 0, 0, 0, 1) |
| 98 | (0, 0, 0, 0, 0, 0, 0, 0, 0, 0, 0, 0, 0, 0, 0, 0, 0, 0, 0, 0, 0, 0, 1, 1, 0, 0, 0, 0, 0, 0, 1) |
| 99 | (0, 0, 0, 1, 0, 0, 1, 0, 0, 0, 0, 0, 0, 0, 0, 0, 0, 0, 0, 0, 0, 0, 0, 0, 0, 1, 0, 0, 0, 0, 0) |
| 100 | (0, 0, 0, 1, 0, 0, 0, 0, 0, 0, 0, 0, 1, 0, 0, 0, 0, 0, 0, 0, 0, 0, 0, 1, 0, 0, 0, 0, 0, 0, 0) |
| 101 | (1, 0, 0, 0, 0, 0, 0, 0, 1, 0, 0, 0, 0, 0, 0, 0, 1, 0, 0, 0, 0, 0, 0, 0, 0,0, 0, 0, 0, 0, 0) |
| 102 | (0, 0, 0, 0, 0, 0, 0, 1, 0, 0, 0, 0, 1, 0, 0, 0, 0, 0, 0, 1, 0, 0, 0, 0, 0, 0, 0, 0, 0, 0, 0) |
| 103 | (0, 0, 0, 0, 1, 0, 0, 0, 0, 0, 0, 0, 0, 0, 0, 1, 0, 0, 0, 1, 0, 0, 0, 0, 0, 0, 0, 0, 0, 0, 0) |
| 104 | (0, 0, 0, 0, 0, 0, 0, 1, 0, 0, 0, 0, 0, 0, 1, 0, 0, 1, 0, 0, 0, 0, 0, 0, 0, 0, 0, 0, 0, 0, 0) |
| 105 | (0, 0, 0, 0, 1, 0, 0, 0, 0, 0, 1, 0, 0, 0, 0, 0, 0, 0, 0, 0, 0, 0, 1, 0, 0, 0, 0, 0, 0, 0, 0) |
| 106 | (0, 0, 0, 1, 0, 0, 0, 0, 1, 0, 0, 0, 0, 0, 0, 0, 0, 0, 0, 1, 0, 0, 0, 0, 0, 0, 0, 0, 0, 0, 0) |
| 107 | (0, 0, 0, 0, 0, 0, 0, 0, 0, 0, 0, 0, 0, 0, 0, 0, 0, 0, 1, 0, 0, 0, 0, 1, 0, 1, 0, 0, 0, 0, 0) |
| 108 | (0, 0, 0, 0, 0, 0, 1, 1, 0, 0, 0, 0, 0, 0, 0, 0, 0, 0, 0, 0, 0, 0, 0, 0, 0, 0, 0, 0, 0, 0, 1) |
| 109 | (0, 0, 1, 0, 0, 0, 0, 1, 0, 0, 0, 0, 0, 0, 0, 0, 0, 0, 0, 0, 0, 0, 0, 0, 0, 1, 0, 0, 0, 0, 0) |
| 110 | (0, 1, 0, 0, 0, 0, 0, 0, 0, 0, 1, 0, 0, 0, 0, 0, 0, 0, 0, 1, 0, 0, 0, 0, 0, 0, 0, 0, 0, 0, 0) |
| 111 | (0, 0, 0, 0, 0, 0, 0, 0, 0, 0, 0, 0, 0, 0, 0, 0, 1, 0, 1, 0, 0, 0, 0, 0, 0, 0, 0, 0, 1, 0, 0) |
| 112 | (0, 0, 0, 0, 0, 0, 0, 1, 0, 0, 0, 1, 0, 0, 0, 0, 0, 0, 0, 0, 1, 0, 0, 0, 0, 0, 0, 0, 0, 0, 0) |
| 113 | (0, 0, 0, 0, 0, 0, 0, 0, 0, 0, 0, 0, 0, 0, 0, 0, 0, 0, 0, 0, 0, 0, 0, 0, 1, 1, 0, 0, 0, 0, 1) |
| 114 | (0, 0, 0, 1, 0, 0, 0, 0, 0, 1, 0, 0, 0, 0, 0, 0, 0, 0, 1, 0, 0, 0, 0, 0, 0, 0, 0, 0, 0, 0, 0) |
| 115 | (0, 1, 0, 0, 0, 0, 0, 0, 0, 0, 0, 0, 0, 0, 1, 0, 0, 0, 0, 0, 0, 0, 0, 1, 0, 0, 0, 0, 0, 0, 0) |
| 116 | (1, 0, 0, 0, 0, 0, 0, 1, 0, 0, 0, 0, 0, 0, 0, 0, 0, 0, 0, 0, 0, 0, 0, 0, 0, 0, 0, 1, 0, 0, 0) |
| 117 | (0, 0, 0, 0, 0, 0, 0, 0, 0, 0, 0, 0, 0, 0, 0, 0, 0, 0, 1, 0, 1, 0, 0, 0, 0, 0, 1, 0, 0, 0, 0) |
| 118 | (0, 0, 0, 0, 0, 0, 0, 0, 0, 0, 0, 0, 0, 0, 0, 0, 0, 0, 1, 1, 0, 0, 0, 0, 0, 0, 0, 0, 0, 0, 1) |
| 119 | (1, 0, 0, 0, 0, 0, 0, 0, 0, 1, 0, 0, 0, 0, 0, 0, 0, 1, 0, 0, 0, 0, 0, 0, 0, 0, 0, 0, 0, 0, 0) |
| 120 | (0, 0,0, 0, 0, 0, 0, 1, 0, 0, 1, 0, 0, 0, 0, 0, 0, 0, 0, 0, 0, 1, 0, 0, 0, 0, 0, 0, 0, 0, 0) |
| 121 | (0, 0, 0, 0, 0, 0, 0, 0, 0, 0, 0, 0, 1, 1, 0, 0, 0, 0, 0, 0, 0, 0, 0, 0, 0, 0, 0, 0, 0, 0, 1) |
| 122 | (0, 0, 0, 0, 0, 0, 0, 0, 0, 0, 0, 0, 0, 0, 0, 0, 1, 0, 0, 0, 0, 1, 0, 0, 0, 1, 0, 0, 0, 0, 0) |
| 123 | (0, 0, 0, 0, 0, 0, 0, 0, 0, 0, 0, 0, 0, 0, 0, 0, 0, 0, 1, 0, 0, 0, 1, 0, 1, 0, 0, 0, 0, 0, 0) |
| 124 | (0, 0, 0, 0, 0, 0, 0, 0, 0, 0, 1, 0, 0, 0, 1, 0, 0, 0, 0, 0, 0, 0, 0, 0, 1, 0, 0, 0, 0, 0, 0) |
| 125 | (0, 0, 0, 0, 0, 0, 0, 0, 0, 0, 0, 0, 0, 0, 0, 0, 0, 0, 0, 0, 0, 1, 1, 0, 0, 0, 0, 0, 0, 1, 0) |
| 126 | (0, 0, 0, 0, 1, 0, 0, 0, 0, 0, 0, 0, 0, 0, 1, 0, 0, 0, 1, 0, 0, 0, 0, 0, 0, 0, 0, 0, 0, 0, 0) |
| 127 | (0, 0, 0, 0, 0, 0, 0, 0, 0, 0, 0, 0, 0, 0, 0, 0, 0, 0, 0, 0, 1, 0, 1, 0, 0, 0, 0, 0, 1, 0, 0) |
| 128 | (1, 0, 0, 0, 0, 0, 0, 0, 0, 0, 0, 1, 0, 0, 0, 0, 0, 0, 0, 1, 0, 0, 0, 0, 0, 0, 0, 0, 0, 0, 0) |
| 129 | (1, 0, 0, 0, 0, 0, 0, 0, 0, 0, 0, 0, 0, 1, 0, 0, 0, 0, 0, 0, 0, 1, 0, 0, 0, 0, 0, 0, 0, 0, 0) |
| 130 | (0, 0, 0, 1, 0, 0, 0, 0, 0, 0, 0, 1, 0, 0, 0, 0, 1, 0, 0, 0, 0, 0, 0, 0, 0, 0, 0, 0, 0, 0, 0) |
| 131 | (0, 0, 0, 0, 0, 0, 0, 0, 0, 0, 0, 0, 0, 0, 0, 0, 0, 0, 0, 0, 0, 0, 0, 0, 0, 1, 0, 1, 1, 0, 0) |
| 132 | (0, 0, 0, 0, 0, 0, 0, 0, 0, 0, 0, 0, 0, 0, 0, 0, 0, 0, 0, 0, 0, 0, 0, 0, 1, 0, 0, 1, 0, 1, 0) |
| 133 | (0, 0, 0, 1, 0, 0, 0, 0, 0, 0, 0, 0, 0, 1, 0, 0, 0, 0, 0, 0, 0, 0, 1, 0, 0, 0, 0, 0, 0, 0, 0) |
| 134 | (0, 0, 0, 0, 0, 0, 1, 0, 0, 0, 1, 0, 0, 0, 0, 0, 0, 0, 0, 0, 1, 0, 0, 0, 0, 0, 0, 0, 0, 0, 0) |
| 135 | (0, 0, 0, 0, 1, 1, 0, 0, 0, 0, 0, 0, 0, 0, 0, 0, 0, 0, 0, 0, 0, 0, 0, 0, 0, 0, 0, 0, 0, 0, 1) |
| 136 | (0, 0, 0, 0, 0, 0, 0, 0, 0, 0, 0, 0, 0, 0, 0, 0, 0, 1, 0, 1, 0, 0, 0, 0, 0, 0, 0, 0, 1, 0, 0) |
| 137 | (0, 0, 0, 1, 1, 0, 0, 0, 0, 0, 0, 0, 0, 0, 0, 0, 0, 0, 0, 0, 0, 0, 0, 0, 0, 0, 0, 1, 0, 0, 0) |
| 138 | (0, 0, 1, 0, 0, 0, 0, 0, 0, 0, 0, 0, 0, 0, 1, 0, 0, 0, 0, 0, 1, 0, 0, 0, 0, 0, 0, 0, 0, 0, 0) |
| 139 | (0, 0, 1, 0, 0, 0, 0, 0, 1, 0, 0, 0, 0, 0, 0, 0, 0, 0, 1, 0, 0, 0, 0, 0, 0, 0, 0, 0, 0, 0, 0) |
| 140 | (0, 0, 0, 0, 0, 0, 0, 0, 0, 1, 0, 0, 1, 0, 0, 0, 0, 0, 0, 0, 0, 0, 0, 0, 0, 1, 0, 0, 0, 0, 0) |
| 141 | (0, 0, 0, 0, 0, 0, 0, 0, 0, 1, 1, 0, 0, 0, 0, 0, 0, 0, 0, 0, 0, 0, 0, 0, 0, 0, 0, 0, 0, 1, 0) |
| 142 | (0, 0, 0, 0, 0, 0, 1, 0, 1, 0, 0, 0, 0, 0, 0, 0, 0, 0, 0, 0, 0, 0, 1, 0, 0, 0, 0, 0, 0, 0, 0) |
| 143 | (0, 0, 1, 0, 0, 0, 0, 0, 0, 0, 0, 0, 0, 1, 0, 0, 0, 0, 0, 0, 0, 0, 0, 1, 0, 0, 0, 0, 0, 0, 0) |
| 144 | (0, 0, 0, 0, 0, 0, 0, 0, 1, 0, 0, 0, 1, 0, 0, 0, 0, 0, 0, 0, 0, 0, 0, 0, 1, 0, 0, 0, 0, 0, 0) |
| 145 | (0, 0, 0, 0, 0, 0, 0, 0, 0, 0, 0, 0, 0, 0, 0, 0, 0, 0, 0, 0, 0, 1, 0, 1, 0, 0, 0, 0, 1, 0, 0) |
| 146 | (1, 0, 0, 0, 1, 0, 0, 0, 0, 0, 0, 0, 0, 0, 0, 0, 0, 0, 0, 0, 0, 0, 0, 0, 1, 0, 0, 0, 0, 0, 0) |
| 147 | (0, 0, 1, 0, 0, 0, 1, 0, 0, 0, 0, 0, 0, 0, 0, 0, 0, 0, 0, 0, 0, 0, 0, 0, 1, 0, 0, 0, 0, 0, 0) |
| 148 | (0, 1, 0, 0, 1, 0, 0, 0, 0, 0, 0, 0, 0, 0, 0, 0, 0, 0, 0, 0, 0, 0, 0, 0, 0, 1, 0, 0, 0, 0, 0) |
| 149 | (0, 0, 0, 0, 0, 0, 0, 0, 0, 1, 0, 0, 0, 0, 0, 1, 0, 0, 0, 0, 0, 0, 0, 0, 0, 0, 1, 0, 0, 0, 0) |
| 150 | (0, 0, 0, 0, 0, 0, 0, 0, 0, 0, 0, 0, 0, 1, 0, 1, 0, 0, 0, 0, 0, 0, 0, 0, 0, 0, 0, 0, 1, 0, 0) |
| 151 | (0, 0, 0, 0, 0, 0, 0, 0, 1, 0, 0, 1, 0, 0, 0, 0, 0, 0, 0, 0, 0, 0, 0, 0, 0, 0, 0, 0, 0, 1, 0) |
| 152 | (1, 0, 1, 0, 0, 0, 0, 0, 0, 0, 0, 0, 0, 0, 0, 0, 0, 0, 0, 0, 0, 0, 0, 0, 0, 0, 0, 0, 1, 0, 0) |
| 153 | (0, 0, 0, 0, 0, 0, 0, 0, 0, 0, 0, 0, 0, 0, 0, 0, 0, 1, 1, 0, 0, 0, 0, 0, 0, 0, 0, 0, 0, 1, 0) |
| 154 | (0, 0, 0, 0, 0, 0, 0, 0, 0, 1, 0, 0, 0, 1, 0, 0, 0, 0, 0, 0, 0, 0, 0, 0, 1, 0, 0, 0, 0, 0, 0) |

In an implementation example, when p=2, N=4, i=2, K₁=7, and M=31, an implementation example of the codebook set is shown in Table 8.

It should be understood that in the codebook set shown in Table 8, that each codebook corresponds to a line in the N-dimensional space is used as an example. It can be learned from the foregoing description that, when i=2, the quantity of points on each line (that is, the quantity of available resources of each codebook) is K₁=pⁱ + pⁱ⁻¹+...+p + 1=7, the quantity of coordinate points (that is, the total quantity of resources of each codebook) is M=p^{N} + p^{N-1}+... +p + 1=31, and the quantity of i-dimensional spaces (where i=2, in other words, the quantity of i-dimensional spaces may also be the quantity of planes in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 155$.

**Table 8**

| Codebook index | Codebook |
|---|---|
| 0 | (0, 0, 0, 0, 0, 1, 0, 1, 0, 0, 0, 0, 1, 0, 1, 0, 0, 1, 0, 1, 0, 0, 0, 0, 0, 0, 0, 0, 1, 0, 0) |
| 1 | (0, 1, 0, 0, 1, 0, 0, 0, 0,0, 1, 0, 0, 0, 0, 1, 0, 0, 0, 1, 0, 0, 1, 0, 0, 1, 0, 0, 0, 0, 0) |
| 2 | (1, 0, 1, 0, 0, 0, 0, 0, 0, 0, 0, 0, 0, 1, 0, 1,0,0,0,0,0, 1, 0, 1, 0, 0, 0, 0, 1, 0, 0) |
| 3 | (0, 0, 0, 0, 0, 0, 0, 0, 0, 0, 0, 0, 0, 0, 0, 0, 1, 1, 1, 1, 0, 0, 0, 0, 0, 0, 0, 0, 1, 1, 1) |
| 4 | (0, 0, 0, 0, 1, 0, 1, 0, 0, 0, 0, 0, 1, 0, 1, 0, 1, 0, 1, 0, 0, 0, 0, 0, 0, 0, 0, 0, 1, 0, 0) |
| 5 | (0, 0, 1, 0, 1, 0, 0, 0, 1, 0, 0, 0, 0, 0, 1, 0, 0, 0, 1, 0, 1, 0, 0, 0, 0, 0, 1, 0, 0, 0, 0) |
| 6 | (0, 0, 1, 0, 0, 0, 1, 0, 0, 1, 0, 0, 0, 1, 0, 0,0, 0, 0, 1, 0, 0, 0, 1, 1, 0, 0, 0, 0, 0, 0) |
| 7 | (0, 0, 0, 0, 0, 0, 0, 0, 0, 0, 0, 0, 0, 0, 0, 0, 1, 0, 1, 0, 0, 1, 0, 1, 0, 1, 0, 1, 1, 0, 0) |
| 8 | (0, 1, 0, 0, 0, 1, 0, 0, 0, 0, 0, 1, 0, 0, 0, 1, 0, 0, 1, 0, 0, 0, 1, 0, 1, 0, 0, 0, 0, 0, 0) |
| 9 | (0, 0, 1, 0, 0, 1, 0, 0, 0, 0, 1, 0, 0, 1, 0, 0, 1, 0, 0, 0, 0, 0, 0, 1, 0, 0, 0, 1, 0, 0, 0) |
| 10 | (0, 0, 0, 0, 1, 0, 0, 1, 0, 0, 0, 0, 1, 0, 0, 1, 1, 0, 0, 1, 0, 0, 0, 0, 0, 0, 0, 0, 0, 1, 0) |
| 11 | (0, 1, 0, 1, 0, 0, 0, 0, 0, 0, 0, 0, 1, 0, 1, 0, 0, 0, 0, 0, 0, 1, 0,1, 0, 0, 0, 0, 1, 0, 0) |
| 12 | (0, 1, 0, 0, 0, 0, 1, 0, 0, 0, 0, 1, 1, 0, 0, 0, 0, 0, 1, 0, 0, 1, 0, 0, 0, 0, 0, 1, 0, 0, 0) |
| 13 | (0,0, 1, 1, 1, 1, 0, 0, 0, 0, 0, 0, 0, 0, 0, 0, 0, 0, 0, 0, 0, 0, 0, 0, 0, 0, 1, 1, 0, 0, 1) |
| 14 | (1, 0, 0, 0, 0, 1, 0, 0, 0, 1, 0, 0, 1, 0, 0, 0, 0, 1, 0, 0, 1, 0, 0, 0, 0, 1, 0, 0, 0, 0, 0) |
| 15 | (0, 0, 0, 0, 0, 0, 0, 0, 0, 0, 0, 0, 0, 0, 0, 0, 0, 1, 0, 1, 1, 0, 1, 0, 0, 1, 0, 1, 1, 0, 0) |
| 16 | (0, 0, 1, 0, 0, 1, 0, 0, 0, 1, 0, 0, 0, 0, 1, 0, 0, 0, 0, 1, 1, 0, 0, 0, 0, 0, 0, 1, 0, 0,0) |
| 17 | (1, 0, 0, 0, 0, 0, 0, 1, 1, 0, 0, 0, 0, 0, 0, 1, 1, 0, 0, 0, 0, 0, 0, 1, 0, 0, 0, 1, 0, 0, 0) |
| 18 | (0, 0, 0, 0, 0, 1, 0, 1,1, 0, 1, 0, 0, 0, 0, 0, 0, 0, 0, 0, 0, 1, 0, 1, 0, 0, 0, 0, 1, 0, 0) |
| 19 | (1, 0, 0, 1, 0, 0, 0, 0, 0, 0, 0, 0, 1, 0, 0, 1, 0, 0, 0, 0, 1, 0, 0, 1, 0, 0, 0, 0, 0, 1, 0) |
| 20 | (0, 0, 0, 1, 0, 0, 0, 1, 0, 0, 1, 0, 0, 0, 1, 0, 0, 1, 0, 0, 0, 1, 0, 0, 1, 0, 0, 0, 0, 0, 0) |
| 21 | (0, 0, 0, 0, 0, 0, 0, 0, 0, 0, 1, 1, 1, 1, 0, 0, 0, 0, 0, 0, 0, 0, 0, 0, 0, 0, 1, 1, 0, 0, 1) |
| 22 | (0, 0, 1, 1, 0, 0, 0, 0, 0, 0, 0, 0, 0, 0, 1, 1, 0, 0, 0, 0, 1, 1, 0, 0, 0, 0, 0, 0, 0, 0, 1) |
| 23 | (0, 0, 0, 1, 0, 1, 0, 0, 1, 0, 0, 0, 0, 0, 1,0, 0, 0, 0, 1, 0, 1, 0, 0, 0, 0, 1, 0, 0, 0, 0) |
| 24 | (0, 0, 1, 0, 0, 0, 0, 1, 1, 0, 0, 0, 0, 1, 0, 0, 0, 0, 1, 0, 0, 0, 0, 1, 0, 1, 0, 0, 0, 0, 0) |
| 25 | (1, 0, 1, 0, 0, 0, 0, 0, 0, 1, 0, 1, 0, 0, 0, 0, 0, 1, 0, 1, 0, 0, 0, 0, 0, 0, 0, 0, 1, 0, 0) |
| 26 | (0, 0, 0, 0, 0, 0, 0, 0, 0, 1, 0, 1, 0, 1, 0, 1, 0, 0, 0, 0, 0, 0, 0, 0, 1, 0, 1, 0, 1, 0, 0) |
| 27 | (0, 0, 1, 1, 0, 0, 0, 0, 0, 0, 0, 0, 1, 1, 0, 0, 0, 0, 0, 0, 0, 0, 1, 1, 0, 0, 0, 0, 0, 0, 1) |
| 28 | (1, 0, 0, 0, 0, 0, 0, 1, 0, 0, 1, 0, 0, 1, 0, 0, 0, 0, 1, 0, 0, 1,0, 0, 0, 0, 0, 1, 0, 0, 0) |
| 29 | (0, 0, 0, 0, 0, 0, 0, 0, 0, 0, 0, 0, 0, 0, 0, 0, 1, 0, 0, 1, 1, 0, 0, 1, 1, 0, 0, 1, 0, 1, 0) |
| 30 | (0, 0, 0, 0, 0, 0, 0, 0, 0, 0, 0, 0, 0, 0, 0, 0, 0, 0, 0, 0, 1, 1, 1, 1, 0, 0, 0, 0, 1, 1, 1) |
| 31 | (1, 0, 0, 0, 0, 1, 0, 0, 0, 0, 0, 1, 0, 0, 1, 0, 0, 0, 0, 1, 0, 0, 1, 0, 0, 1, 0, 0, 0, 0, 0) |
| 32 | (0, 0, 0, 0, 0, 0, 0, 0, 1, 0, 0, 1, 0, 1, 1, 0, 0, 0, 0, 0, 0, 0, 0, 0, 0, 1, 1, 0, 0, 1, 0) |
| 33 | (0, 0, 1, 0, 1, 0, 0, 0, 0, 1, 0, 0, 0, 0, 0, 1, 0, 0, 0, 1, 0, 1, 0, 0, 0, 0, 1, 0, 0,0, 0) |
| 34 | (0, 0, 0, 1, 0, 0, 1, 0, 0, 0, 0, 1, 0, 0, 1, 0, 1, 0, 0, 0, 0, 1, 0, 0, 0, 1, 0, 0, 0, 0, 0) |
| 35 | (0, 0, 0, 1, 0, 0, 1,0, 0, 1, 0, 0, 1, 0, 0, 0, 0, 0, 1, 0, 0, 0, 0, 1, 0, 1, 0, 0, 0, 0, 0) |
| 36 | (1, 0, 0, 0, 1, 0, 0, 0, 0, 0, 0, 1, 0, 0, 0, 1, 0, 0, 0, 1, 0, 0, 0, 1, 1, 0, 0, 0, 0, 0, 0) |
| 37 | (1, 0, 1, 0, 1, 0, 1, 0, 0, 0, 0, 0, 0, 0, 0, 0, 0, 0, 0, 0, 0, 0, 0, 0, 1, 0, 1, 0, 1, 0, 0) |
| 38 | (0, 0, 0, 0, 1, 1, 0, 0, 1, 1, 0, 0, 0, 0, 0, 0, 0, 0, 0, 0, 1, 1, 0, 0, 0, 0, 0, 0, 0, 0, 1) |
| 39 | (0, 0, 0, 0, 0, 0, 0, 0, 0, 0, 0, 0, 0, 0, 0, 0, 1, 0, 0, 1, 0, 1, 1, 0, 0, 1, 1, 0, 0, 1, 0) |
| 40 | (0, 0, 0, 0, 0, 0, 0, 0, 0, 1, 0, 1, 1, 0,1, 0, 0, 0, 0, 0, 0, 0, 0, 0, 0, 1, 0, 1, 1, 0, 0) |
| 41 | (0, 0, 0, 0, 0, 0, 0, 0, 0, 0, 0, 0, 0, 0, 0, 0, 0, 0, 1, 1, 1, 1, 0, 0, 0, 0, 1, 1, 0, 0, 1) |
| 42 | (0, 1, 0, 0, 1, 0, 0, 0, 0, 1, 0, 0, 1, 0, 0, 0, 1, 0, 0, 0, 0, 1, 0, 0, 0, 1, 0, 0, 0, 0, 0) |
| 43 | (0, 0, 0, 0, 1, 0, 1, 0, 0, 0, 0, 0, 0, 1, 0, 1, 0, 1, 0, 1, 0, 0, 0, 0, 0, 0, 0, 0, 1, 0, 0) |
| 44 | (0, 0, 0, 0, 0, 0, 0, 0, 1, 1, 1, 1, 0, 0, 0, 0, 0, 0, 0, 0, 0, 0, 0, 0, 0, 0, 0, 0, 1, 1, 1) |
| 45 | (1, 0, 0, 0, 0, 0, 1, 0, 1, 0, 0, 0, 0, 0, 1, 0, 1, 0, 0, 0, 0,0, 1, 0, 0, 0, 1, 0, 0, 0, 0) |
| 46 | (0, 0, 0, 0, 0, 1, 0, 1, 0, 1, 0, 1, 0, 0, 0, 0, 0, 0, 0, 0, 1, 0, 1, 0, 0, 0, 0, 0, 1, 0, 0) |
| 47 | (0, 0, 0, 0, 0, 0, 1, 1, 0, 0, 1, 1, 0, 0, 0, 0, 0, 0, 0, 0, 1, 1, 0, 0, 0, 0, 0, 0, 0, 0, 1) |
| 48 | (1, 1, 0, 0, 0, 0, 0, 0, 1, 1, 0, 0, 0, 0, 0, 0, 1, 1, 0, 0, 0, 0, 0, 0, 0, 0, 0, 0, 0, 0, 1) |
| 49 | (0, 0, 1, 0, 0, 0, 0, 1, 0, 0, 0, 1, 0, 0, 1, 0, 0, 1, 0, 0, 1, 0, 0, 0, 0, 1, 0, 0, 0, 0, 0) |
| 50 | (0, 1, 1, 0, 0, 0, 0, 0, 0, 1, 1, 0, 0, 0, 0, 0, 1, 0, 0, 1, 0, 0, 0, 0, 0, 0, 0, 0,0, 1, 0) |
| 51 | (0, 1, 0, 1, 0, 1, 0, 1, 0, 0, 0, 0, 0, 0, 0, 0, 0, 0, 0, 0, 0, 0, 0, 0, 1, 0, 1, 0, 1, 0, 0) |
| 52 | (0, 0, 0, 0, 1, 0,0, 1, 0, 1, 1, 0, 0, 0, 0, 0, 0, 0, 0, 0, 0, 1, 1, 0, 0, 0, 0, 0, 0, 1, 0) |
| 53 | (0, 0, 1, 0, 0, 0, 1, 0, 0, 0, 1, 0, 0, 0, 1, 0, 1, 0, 0, 0, 1, 0, 0, 0, 1, 0, 0, 0, 0, 0, 0) |
| 54 | (0, 0, 0, 0, 0, 0, 0, 0, 0, 0, 1, 1, 0, 0, 1, 1, 0, 0, 0, 0, 0, 0, 0, 0, 1, 1, 0, 0, 0, 0, 1) |
| 55 | (0, 0, 0, 0, 0, 0, 1, 1, 0, 0, 0, 0, 0, 0, 1, 1, 1, 1, 0, 0, 0, 0, 0, 0, 0, 0, 0, 0, 0, 0, 1) |
| 56 | (0, 0, 0, 0, 0, 0, 0, 0, 1, 1, 0, 0, 0, 0, 1, 1, 0, 0, 0, 0, 0, 0, 0, 0, 0, 0, 1, 1, 0, 0, 1) |
| 57 | (0, 0, 1, 0, 0, 0, 1, 0, 1, 0, 0, 0, 1,0, 0, 0, 0, 0, 1, 0, 0, 0, 1, 0, 1, 0, 0, 0, 0, 0, 0) |
| 58 | (0, 0, 0, 0, 0, 0, 0, 0, 0, 0, 0, 0, 0, 0, 0, 0, 0, 1, 1, 0, 0, 1, 1, 0, 1, 0, 0, 1, 0, 1, 0) |
| 59 | (0, 0, 0, 0, 0, 0, 0, 0, 0, 0, 0, 0, 0, 0, 0, 0, 1, 0, 1, 0, 1, 0, 1, 0, 1, 0, 1, 0, 1, 0, 0) |
| 60 | (1, 0, 0, 0, 1, 0, 0, 0, 0, 0, 1, 0, 0, 0, 1, 0, 0, 0, 1, 0, 0, 0, 1, 0, 1, 0, 0, 0, 0, 0, 0) |
| 61 | (0, 1, 0, 0, 0, 0, 0, 1, 0, 0, 1, 0, 1, 0, 0, 0, 0, 0, 0, 1, 0, 1, 0, 0, 0, 0, 1, 0, 0, 0, 0) |
| 62 | (0, 0, 0, 0, 0, 1, 1, 0, 1, 0, 0, 1, 0, 0, 0, 0, 0, 0, 0, 0,0, 1, 1, 0, 0, 0, 0, 0, 0, 1, 0) |
| 63 | (0, 1, 0, 1, 0, 0, 0, 0, 1, 0, 1, 0, 0, 0, 0, 0, 0, 1, 0, 1, 0, 0, 0, 0, 0, 0, 0, 0, 1, 0, 0) |
| 64 | (0, 0, 0, 0, 0, 0, 0, 0, 0, 1, 1, 0, 1, 0, 0, 1, 0, 0, 0, 0, 0, 0, 0, 0, 0, 1, 1, 0, 0, 1, 0) |
| 65 | (1, 0, 0, 0, 1, 0, 0, 0, 1, 0, 0, 0, 1, 0, 0, 0, 1, 0, 0, 0, 1, 0, 0, 0, 1, 0, 0, 0, 0, 0, 0) |
| 66 | (0, 1, 0, 0, 0, 1, 0, 0, 0, 1, 0, 0, 0, 1, 0, 0, 1, 0, 0, 0, 1, 0, 0, 0, 1, 0, 0, 0, 0, 0, 0) |
| 67 | (0, 1, 0, 0, 0, 1, 0, 0, 1, 0, 0, 0, 1, 0, 0, 0, 0, 1, 0, 0, 0, 1, 0, 0, 1, 0, 0,0, 0, 0, 0) |
| 68 | (0, 0, 0, 0, 0, 1, 1, 0, 0, 1, 1, 0, 0, 0, 0, 0, 0, 0, 0, 0, 1, 0, 0, 1, 0, 0, 0, 0, 0, 1, 0) |
| 69 | (0, 0, 0, 1, 1,0, 0, 0, 0, 0, 0, 1, 1, 0, 0, 0, 1, 0, 0, 0, 0, 0, 0, 1, 0, 0, 0, 1, 0, 0, 0) |
| 70 | (0, 1, 1, 0, 0, 0, 0, 0, 0, 0, 0, 0, 0, 1, 1, 0, 0, 0, 0, 0, 1, 0, 0, 1, 0, 0, 0, 0, 0, 1, 0) |
| 71 | (0, 0, 0, 0, 1, 0, 1, 0, 1, 0, 1, 0, 0, 0, 0, 0, 0, 0, 0, 0, 1, 0, 1, 0, 0, 0, 0, 0, 1, 0, 0) |
| 72 | (0, 1, 1, 0, 1, 0, 0, 1, 0, 0, 0, 0, 0, 0, 0, 0, 0, 0, 0, 0, 0, 0, 0, 0, 0, 1, 1, 0, 0, 1, 0) |
| 73 | (1, 0, 0, 1, 0, 0, 0, 0, 0, 1, 1, 0, 0, 0, 0, 0, 0, 1, 1, 0, 0, 0, 0, 0, 0, 0, 0, 0, 0, 1, 0) |
| 74 | (0, 1, 0, 1, 0, 0, 0, 0, 0, 0, 0, 0,0, 1, 0, 1, 0, 0, 0, 0, 1, 0, 1, 0, 0, 0, 0, 0, 1, 0, 0) |
| 75 | (0, 0, 0, 0, 1, 0, 0, 1, 1, 0, 0, 1, 0, 0, 0, 0, 0, 0, 0, 0, 1, 0, 0, 1, 0, 0, 0, 0, 0, 1, 0) |
| 76 | (0, 0, 0, 1, 0, 0, 0, 1, 0, 1, 0, 0, 0, 1, 0, 0, 0, 0, 1, 0, 0, 0, 1, 0, 1, 0, 0, 0, 0, 0, 0) |
| 77 | (0, 0, 0, 0, 0, 0, 1, 1, 1, 1, 0, 0, 0, 0, 0, 0, 0, 0, 0, 0, 0, 0, 1, 1, 0, 0, 0, 0, 0, 0, 1) |
| 78 | (1, 1, 0, 0, 0, 0, 0, 0, 0, 0, 0, 0, 1, 1, 0, 0, 0, 0, 0, 0, 1, 1, 0, 0, 0, 0, 0, 0, 0, 0, 1) |
| 79 | (1, 0, 1, 0, 0, 1, 0, 1, 0, 0, 0, 0, 0, 0, 0, 0, 0, 0, 0,0, 0, 0, 0, 0, 0, 1, 0, 1, 1, 0, 0) |
| 80 | (0, 1, 1, 0, 0, 0, 0, 0, 0, 0, 0, 0, 1, 0, 0, 1, 0, 0, 0, 0, 0, 1, 1, 0, 0, 0, 0, 0, 0, 1, 0) |
| 81 | (0, 0, 0, 0, 0, 0, 1, 1, 0, 0, 0, 0, 1, 1, 0, 0, 0, 0, 1, 1, 0, 0, 0, 0, 0, 0, 0, 0, 0, 0, 1) |
| 82 | (0, 0, 1, 0, 0, 0, 0, 1, 0, 1, 0, 0, 1, 0, 0, 0, 0, 0, 0, 1, 0, 0, 1, 0, 0, 1, 0, 0, 0, 0, 0) |
| 83 | (0, 0, 1, 0, 0, 1, 0, 0, 1, 0, 0, 0, 0, 0, 0, 1, 0, 0, 1, 0, 0, 1, 0, 0, 0, 0, 0, 1, 0, 0, 0) |
| 84 | (1, 0, 0, 1, 0, 1, 1, 0, 0, 0, 0, 0, 0, 0, 0, 0, 0, 0, 0, 0, 0, 0, 0, 0, 0, 1,1, 0, 0, 1, 0) |
| 85 | (0, 0, 0, 0, 0, 0, 0, 0, 0, 1, 1, 0, 0, 1, 1, 0, 0, 0, 0, 0, 0, 0, 0, 0, 1, 0, 0, 1, 0, 1, 0) |
| 86 | (0, 0, 0, 0,0, 0, 0, 0, 0, 0, 0, 0, 0, 0, 0, 0, 0, 1, 0, 1, 0, 1, 0, 1, 1, 0, 1, 0, 1, 0, 0) |
| 87 | (0, 0, 0, 0, 1, 1, 1, 1, 0, 0, 0, 0, 0, 0, 0, 0, 0, 0, 0, 0, 0, 0, 0, 0, 0, 0, 0, 0, 1, 1, 1) |
| 88 | (0, 0, 0, 0, 0, 0, 0, 0, 1, 1, 0, 0, 1, 1, 0, 0, 0, 0, 0, 0, 0, 0, 0, 0, 1, 1, 0, 0, 0, 0, 1) |
| 89 | (0, 0, 0, 1, 0, 0, 0, 1, 0, 0, 0, 1, 0, 0, 0, 1, 1, 0, 0, 0, 1, 0, 0, 0, 1, 0, 0, 0, 0, 0, 0) |
| 90 | (1, 0, 0, 0, 0, 0, 0, 1, 0, 1, 0, 0, 0, 0, 1, 0, 0, 1, 0, 0, 0, 0, 1, 0, 0, 0, 0, 1, 0, 0, 0) |
| 91 | (0, 0, 0, 1, 0, 0, 0, 1, 1, 0, 0,0, 1, 0, 0, 0, 0, 0, 0, 1, 0, 0, 0, 1, 1, 0, 0, 0, 0, 0, 0) |
| 92 | (0, 0, 0, 0, 0, 0, 0, 0, 1, 0, 0, 1, 1, 0, 0, 1, 0, 0, 0, 0, 0, 0, 0, 0, 1, 0, 0, 1, 0, 1, 0) |
| 93 | (0, 1, 0, 0, 0, 0, 1, 0, 0, 1, 0, 0, 0, 0, 1, 0, 1, 0, 0, 0, 0, 0, 0, 1, 0, 0, 0, 1, 0, 0, 0) |
| 94 | (0, 1, 0, 1, 0, 0, 0, 0, 0, 1, 0, 1, 0, 0, 0, 0, 1, 0, 1, 0, 0, 0, 0, 0, 0, 0, 0, 0, 1, 0, 0) |
| 95 | (0, 0, 1, 1, 0, 0, 0, 0, 1, 1, 0, 0, 0, 0, 0, 0, 0, 0, 1, 1, 0, 0, 0, 0, 0, 0, 0, 0, 0, 0, 1) |
| 96 | (0, 0, 0, 0, 0, 0, 0, 0, 0, 0, 0, 0, 0, 0, 0, 0, 0, 0,0, 0, 0, 0, 0, 0, 1, 1, 1, 1, 1, 1, 1) |
| 97 | (0, 0, 0, 0, 1, 0, 0, 1, 0, 0, 0, 0, 0, 1, 1, 0, 0, 1, 1, 0, 0, 0, 0, 0, 0, 0, 0, 0, 0, 1, 0) |
| 98 | (0, 0, 0, 1, 0, 0, 1, 0, 1, 0, 0, 0, 0, 1, 0, 0, 0, 0, 0, 1, 0, 0, 1, 0, 0, 1, 0, 0, 0, 0, 0) |
| 99 | (0, 1, 0, 0, 0, 0, 1, 0, 1, 0, 0, 0, 0, 0, 0, 1, 0, 1, 0, 0, 0, 0, 1, 0, 0, 0, 0, 1, 0, 0, 0) |
| 100 | (0, 0, 0, 0, 0, 0, 0, 0, 1, 0, 1, 0, 1, 0, 1, 0, 0, 0, 0, 0, 0, 0, 0, 0, 1, 0, 1, 0, 1, 0, 0) |
| 101 | (0, 0, 1, 1, 0, 0, 1, 1, 0, 0, 0, 0, 0, 0, 0, 0, 0, 0, 0, 0, 0, 0, 0, 0, 1,1, 0, 0, 0, 0, 1) |
| 102 | (0, 0, 0, 0, 0, 1, 1, 0, 0, 0, 0, 0, 0, 1, 1, 0, 1, 0, 0, 1, 0, 0, 0, 0, 0, 0, 0, 0, 0, 1, 0) |
| 103 | (0, 0, 0,0, 0, 1, 0, 1, 0, 0, 0, 0, 0, 1, 0, 1, 1, 0, 1, 0, 0, 0, 0, 0, 0, 0, 0, 0, 1, 0, 0) |
| 104 | (0, 0, 1, 1, 0, 0, 0, 0, 0, 0, 1, 1, 0, 0, 0, 0, 1, 1, 0, 0, 0, 0, 0, 0, 0, 0, 0, 0, 0, 0, 1) |
| 105 | (0, 1, 0, 0, 0, 0, 1, 0, 0, 0, 1, 0, 0, 1, 0, 0, 0, 0, 0, 1, 1, 0, 0, 0, 0, 0, 0, 1, 0, 0, 0) |
| 106 | (1, 0, 1, 0, 0, 0, 0, 0, 1, 0, 1, 0, 0, 0, 0, 0, 1, 0, 1, 0, 0, 0, 0, 0, 0, 0, 0, 0, 1, 0, 0) |
| 107 | (0, 1, 0, 0, 0, 0, 0, 1, 0, 0, 0, 1, 0, 1, 0, 0, 0, 0, 1, 0, 1, 0, 0, 0, 0, 0, 1, 0, 0, 0, 0) |
| 108 | (0, 1, 1, 0, 0, 0, 0, 0, 1, 0,0, 1, 0, 0, 0, 0, 0, 1, 1, 0, 0, 0, 0, 0, 0, 0, 0, 0, 0, 1, 0) |
| 109 | (1, 0, 0, 0, 0, 0, 0, 1, 0, 0, 0, 1, 1, 0, 0, 0, 0, 0, 0, 1, 1, 0, 0, 0, 0, 0, 0, 1, 0, 0, 0) |
| 110 | (0, 0, 0, 1, 0, 1, 0, 0, 0, 0, 1, 0, 1, 0, 0, 0, 0, 1, 0, 0, 0, 0, 0, 1, 0, 0, 1, 0, 0, 0, 0) |
| 111 | (1, 0, 0, 0, 0, 0, 1, 0, 0, 1, 0, 0, 0, 0, 0, 1, 0, 1, 0, 0, 0, 0, 0, 1, 0, 0, 1, 0, 0, 0, 0) |
| 112 | (0, 0, 0, 0, 0, 1, 1, 0, 0, 0, 0, 0, 1, 0, 0, 1, 0, 1, 1, 0, 0, 0, 0, 0, 0, 0, 0, 0, 0, 1, 0) |
| 113 | (1, 0, 0, 0, 1, 0, 0, 0, 0, 1, 0, 0, 0, 1, 0, 0, 0, 1, 0, 0, 0, 1, 0, 0, 1, 0, 0, 0, 0, 0, 0) |
| 114 | (0, 1, 0, 0, 1, 0, 0, 0, 1, 0, 0, 0, 0, 1, 0, 0, 0, 1, 0, 0, 1, 0, 0, 0, 0, 1, 0, 0, 0, 0, 0) |
| 115 | (0, 0, 0, 0, 0, 0, 0, 0, 0, 0, 0, 0, 0, 0, 0, 0, 1, 1, 0, 0, 0, 0, 1, 1, 0, 0, 1, 1, 0, 0, 1) |
| 116 | (1, 0, 0, 0, 0, 1, 0, 0, 0, 0, 1, 0, 0, 0, 0, 1, 0, 0, 1, 0, 0, 0, 0, 1, 0, 1, 0, 0, 0, 0, 0) |
| 117 | (0, 0, 1, 0, 0, 0, 1, 0, 0, 0, 0, 1, 0, 0, 0, 1, 0, 1, 0, 0, 0, 1, 0, 0, 1, 0, 0, 0, 0, 0, 0) |
| 118 | (0, 0, 0, 0, 0, 0, 0, 0, 0, 0, 0, 0, 0, 0, 0, 0, 0, 1, 1, 0, 1, 0, 0, 1,0, 1, 1, 0, 0, 1, 0) |
| 119 | (0, 0, 0, 0, 1, 0, 1, 0, 0, 1, 0, 1, 0, 0, 0, 0, 0, 0, 0, 0, 0, 1, 0, 1, 0, 0, 0, 0, 1, 0, 0) |
| 120 | (0, 0,1, 0, 1, 0, 0, 0, 0, 0, 0, 1, 0, 1, 0, 0, 0, 1, 0, 0, 0, 0, 0, 1, 0, 0, 1, 0, 0, 0, 0) |
| 121 | (1, 0, 1, 0, 0, 0, 0, 0, 0, 0, 0, 0, 1, 0, 1, 0, 0, 0, 0, 0, 1, 0, 1, 0, 0, 0, 0, 0, 1, 0, 0) |
| 122 | (0, 0, 0, 1, 1, 0, 0, 0, 1, 0, 0, 0, 0, 0, 0, 1, 0, 0, 0, 1, 1, 0, 0, 0, 0, 0, 0, 1, 0, 0, 0) |
| 123 | (0, 0, 0, 1, 1, 0, 0, 0, 0, 1, 0, 0, 0, 0, 1, 0, 0, 0, 1, 0, 0, 1, 0, 0, 0, 0, 0, 1, 0, 0, 0) |
| 124 | (0, 0, 1, 0, 0, 1, 0, 0, 0, 0, 0, 1, 1, 0, 0, 0, 0, 1, 0, 0, 0, 0, 1, 0, 0, 0, 0, 1, 0, 0, 0) |
| 125 | (1, 0, 0, 0, 0, 1, 0, 0, 1,0, 0, 0, 0, 1, 0, 0, 1, 0, 0, 0, 0, 1, 0, 0, 0, 1, 0, 0, 0, 0, 0) |
| 126 | (1, 0, 0, 0, 0, 0, 1, 0, 0, 0, 1, 0, 1, 0, 0, 0, 0, 0, 1, 0, 1, 0, 0, 0, 0, 0, 1, 0, 0, 0, 0) |
| 127 | (1, 0, 0, 1, 1, 0, 0, 1, 0, 0, 0, 0, 0, 0, 0, 0, 0, 0, 0, 0, 0, 0, 0, 0, 1, 0, 0, 1, 0, 1, 0) |
| 128 | (0, 0, 0, 1, 0, 1, 0, 0, 0, 0, 0, 1, 0, 1, 0, 0, 1, 0, 0, 0, 0, 0, 1, 0, 0, 0, 1, 0, 0, 0, 0) |
| 129 | (0, 0, 1, 0, 1, 0, 0, 0, 0, 0, 1, 0, 1, 0, 0, 0, 1, 0, 0, 0, 0, 0, 1, 0, 0, 0, 1, 0, 0, 0, 0) |
| 130 | (0, 1, 0, 0, 0, 1, 0, 0, 0, 0, 1, 0, 0, 0, 1, 0,0, 0, 0, 1, 0, 0, 0, 1, 1, 0, 0, 0, 0, 0, 0) |
| 131 | (1, 1, 0, 0, 0, 0, 0, 0, 0, 0, 1, 1, 0, 0, 0, 0, 0, 0, 1, 1, 0, 0, 0, 0, 0, 0, 0, 0, 0, 0, 1) |
| 132 | (0, 1, 0, 0, 1, 0, 0, 0, 0, 0, 0, 1, 0, 0, 1, 0, 0, 0, 1, 0, 0, 0, 0, 1, 0, 1, 0, 0, 0, 0, 0) |
| 133 | (0, 0, 0, 0, 1, 1, 0, 0, 0, 0, 1, 1, 0, 0, 0, 0, 0, 0, 0, 0, 0, 0, 1, 1, 0, 0, 0, 0, 0, 0, 1) |
| 134 | (0, 0, 0, 0, 0, 0, 0, 0, 1, 0, 1, 0, 0, 1, 0, 1, 0, 0, 0, 0, 0, 0, 0, 0, 0, 1, 0, 1, 1, 0, 0) |
| 135 | (0, 1, 0, 1, 1, 0, 1, 0, 0, 0, 0, 0, 0, 0, 0, 0, 0, 0, 0, 0, 0, 0, 0,0, 0, 1, 0, 1, 1, 0, 0) |
| 136 | (0, 0, 0, 0, 1, 1, 0, 0, 0, 0, 0, 0, 1, 1, 0, 0, 1, 1, 0, 0, 0, 0, 0, 0, 0, 0, 0, 0, 0, 0, 1) |
| 137 | (0,1, 1, 0, 0, 1, 1, 0, 0, 0, 0, 0, 0, 0, 0, 0, 0, 0, 0, 0, 0, 0, 0, 0, 1, 0, 0, 1, 0, 1, 0) |
| 138 | (0, 0, 0, 1, 0, 1, 0, 0, 0, 1, 0, 0, 0, 0, 0, 1, 0, 0, 1, 0, 1, 0, 0, 0, 0, 0, 1, 0, 0, 0, 0) |
| 139 | (1, 1, 0, 0, 0, 0, 1, 1, 0, 0, 0, 0, 0, 0, 0, 0, 0, 0, 0, 0, 0, 0, 0, 0, 0, 0, 1, 1, 0, 0, 1) |
| 140 | (1, 1, 0, 0, 0, 0, 0, 0, 0, 0, 0, 0, 0, 0, 1, 1, 0, 0, 0, 0, 0, 0, 1, 1, 0, 0, 0, 0, 0, 0,1) |
| 141 | (0, 0, 0, 0, 0, 0, 0, 0, 0, 0, 0, 0, 0, 0, 0, 0, 1, 1, 0, 0, 1, 1, 0, 0, 1, 1, 0, 0, 0, 0, 1) |
| 142 | (0, 0, 0, 1, 0, 0, 1, 0,0, 0, 1, 0, 0, 0, 0, 1, 0, 1, 0, 0, 1, 0, 0, 0, 0, 1, 0, 0, 0, 0, 0) |
| 143 | (0, 1, 0, 0, 0, 0, 0, 1, 0, 1, 0, 0, 0, 0, 0, 1, 1, 0, 0, 0, 0, 0, 1, 0, 0, 0, 1, 0, 0, 0, 0) |
| 144 | (0, 0, 0, 0, 1, 1, 0, 0, 0, 0, 0, 0, 0, 0, 1, 1, 0, 0, 1, 1, 0, 0, 0, 0, 0, 0, 0, 0, 0, 0, 1) |
| 145 | (0, 0, 0, 0, 0, 0, 0, 0, 0, 0, 0, 0, 1, 1, 1, 1, 0, 0, 0, 0, 0, 0, 0, 0, 0, 0, 0, 0, 1, 1, 1) |
| 146 | (1, 0, 0, 1, 0, 0, 0, 0, 0, 0, 0, 0, 0, 1, 1, 0, 0, 0, 0, 0, 0, 1, 1, 0, 0, 0, 0, 0, 0, 1, 0) |
| 147 | (1, 1, 0, 0, 1, 1, 0, 0, 0, 0, 0, 0, 0, 0, 0,0, 0, 0, 0, 0, 0, 0, 0, 0, 1, 1, 0, 0, 0, 0, 1) |
| 148 | (0, 0, 0, 0, 0, 0, 0, 0, 0, 0, 0, 0, 0, 0, 0, 0, 0, 0, 1, 1, 0, 0, 1, 1, 1, 1, 0, 0, 0, 0, 1) |
| 149 | (0, 0, 0, 1, 1, 0, 0, 0, 0, 0, 1, 0, 0, 1, 0, 0, 0, 1, 0, 0, 0, 0, 1, 0, 0, 0, 0, 1, 0, 0, 0) |
| 150 | (1, 1, 1, 1, 0, 0, 0, 0, 0, 0, 0, 0, 0, 0, 0, 0, 0, 0, 0, 0, 0, 0, 0, 0, 0, 0, 0, 0, 1, 1, 1) |
| 151 | (0, 0, 1, 0, 0, 0, 0, 1, 0, 0, 1, 0, 0, 0, 0, 1, 1, 0, 0, 0, 0, 1, 0, 0, 0, 1, 0, 0, 0, 0, 0) |
| 152 | (1, 0, 0, 1, 0, 0, 0, 0, 1, 0, 0, 1, 0, 0, 0, 0, 1, 0, 0, 1, 0, 0,0, 0, 0, 0, 0, 0, 0, 1, 0) |
| 153 | (1, 0, 0, 0, 0, 0, 1, 0, 0, 0, 0, 1, 0, 1, 0, 0, 0, 0, 0, 1, 0, 1, 0, 0, 0, 0, 1, 0, 0, 0, 0) |
| 154 | (0, 1, 0, 0, 0, 0, 0, 1, 1, 0, 0, 0, 0, 0, 1, 0, 0, 1, 0, 0, 0, 0, 0, 1, 0, 0, 1, 0, 0, 0, 0) |

In an implementation example, when p=2, N=4, i=3, K₁=15, and M=31, an implementation example of the codebook set is shown in Table 9.

It should be understood that in the codebook set shown in Table 9, that each codebook corresponds to a line in the N-dimensional space is used as an example. It can be learned from the foregoing description that when i=3, the quantity of points on each line (that is, the quantity of available resources of each codebook) is K₁=pⁱ + pⁱ⁻¹+... +p + 1=15, the quantity of coordinate points (that is, the total quantity of resources of each codebook) is M=p^{N} + p^{N-1}+... +p + 1=31, and the quantity of i-dimensional spaces (that is, the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 31$.

**Table 9**

| Codebook index | Codebook |
|---|---|
| 0 | (0, 0, 0, 0, 0, 0, 0, 0, 1, 1, 1, 1, 1, 1, 1, 1, 0, 0, 0, 0, 0, 0, 0, 0, 1, 1, 1, 1, 1, 1, 1) |
| 1 | (1, 0, 0, 1, 0, 1, 1, 0, 1,0, 0, 1, 0, 1, 1, 0, 1, 0, 0, 1, 0, 1, 1, 0, 0, 1, 1, 0, 0, 1, 0) |
| 2 | (1, 0, 1, 0, 1, 0, 1, 0, 1, 0, 1, 0, 1, 0, 1, 0, 1, 0, 1, 0, 1, 0, 1, 0, 1, 0, 1, 0, 1, 0, 0) |
| 3 | (0, 1, 1, 0, 1, 0, 0, 1, 0, 1, 1, 0, 1, 0, 0, 1, 1, 0, 0, 1, 0, 1, 1, 0, 0, 1, 1, 0, 0, 1, 0) |
| 4 | (1, 0, 0, 1, 1, 0, 0, 1, 1, 0, 0, 1, 1, 0, 0, 1, 1, 0, 0, 1, 1, 0, 0, 1, 1, 0, 0, 1, 0, 1, 0) |
| 5 | (1, 0, 1, 0, 0, 1, 0, 1, 0, 1, 0, 1, 1, 0, 1, 0, 0, 1, 0, 1, 1, 0, 1, 0, 0, 1, 0, 1, 1, 0, 0) |
| 6 | (1, 1, 0, 0, 0, 0, 1, 1, 1, 1, 0, 0, 0, 0, 1, 1,1, 1, 0, 0, 0, 0, 1, 1, 0, 0, 1, 1, 0, 0, 1) |
| 7 | (1, 0, 0, 1, 0, 1, 1, 0, 0, 1, 1, 0, 1, 0, 0, 1, 0, 1, 1, 0, 1, 0, 0, 1, 0, 1, 1, 0, 0, 1, 0) |
| 8 | (1, 1, 0, 0, 0, 0, 1, 1, 0, 0, 1, 1, 1, 1, 0, 0, 0, 0, 1, 1, 1, 1, 0, 0, 0, 0, 1, 1, 0, 0, 1) |
| 9 | (0, 1, 1, 0, 0, 1, 1, 0, 0, 1, 1, 0, 0, 1, 1, 0, 1, 0, 0, 1, 1, 0, 0, 1, 1, 0, 0, 1, 0, 1, 0) |
| 10 | (1, 0, 1, 0, 0, 1, 0, 1, 1, 0, 1, 0, 0, 1, 0, 1, 1, 0, 1, 0, 0, 1, 0, 1, 0, 1, 0, 1, 1, 0, 0) |
| 11 | (0, 1, 1, 0, 0, 1, 1, 0, 1, 0, 0, 1, 1, 0, 0, 1, 0, 1, 1, 0, 0, 1, 1,0, 1, 0, 0, 1, 0, 1, 0) |
| 12 | (0, 0, 0, 0, 1, 1, 1, 1, 1, 1, 1, 1, 0, 0, 0, 0, 0, 0, 0, 0, 1, 1, 1, 1, 0, 0, 0, 0, 1, 1, 1) |
| 13 | (0,0, 1, 1, 1, 1, 0, 0, 1, 1, 0, 0, 0, 0, 1, 1, 0, 0, 1, 1, 1, 1, 0, 0, 0, 0, 1, 1, 0, 0, 1) |
| 14 | (0, 0, 1, 1, 0, 0, 1, 1, 0, 0, 1, 1, 0, 0, 1, 1, 1, 1, 0, 0, 1, 1, 0, 0, 1, 1, 0, 0, 0, 0, 1) |
| 15 | (0, 1, 1, 0, 1, 0, 0, 1, 1, 0, 0, 1, 0, 1, 1, 0, 0, 1, 1, 0, 1, 0, 0, 1, 0, 1, 1, 0, 0, 1, 0) |
| 16 | (0, 1, 0, 1, 0, 1, 0, 1, 1, 0, 1, 0, 1, 0, 1, 0, 0, 1, 0, 1, 0, 1, 0, 1, 1, 0, 1, 0, 1, 0, 0) |
| 17 | (0, 0, 1, 1, 0, 0, 1, 1, 1, 1, 0, 0, 1, 1, 0, 0, 0, 0, 1, 1, 0, 0, 1, 1, 1, 1, 0, 0, 0, 0, 1) |
| 18 | (1, 1, 0, 0, 1, 1, 0, 0,0, 0, 1, 1, 0, 0, 1, 1, 0, 0, 1, 1, 0, 0, 1, 1, 1, 1, 0, 0, 0, 0, 1) |
| 19 | (0, 0, 0, 0, 0, 0, 0, 0, 0, 0, 0, 0, 0, 0, 0, 0, 1, 1, 1, 1, 1, 1, 1, 1, 1, 1, 1, 1, 1, 1, 1) |
| 20 | (0, 1, 0, 1, 0, 1, 0, 1, 0, 1, 0, 1, 0, 1, 0, 1, 1, 0, 1, 0, 1, 0, 1, 0, 1, 0, 1, 0, 1, 0, 0) |
| 21 | (0, 0, 0, 0, 1, 1, 1, 1, 0, 0, 0, 0, 1, 1, 1, 1, 1, 1, 1, 1, 0, 0, 0, 0, 0, 0, 0, 0, 1, 1, 1) |
| 22 | (0, 1, 0, 1, 1, 0, 1, 0, 0, 1, 0, 1, 1, 0, 1, 0, 1, 0, 1, 0, 0, 1, 0, 1, 0, 1, 0, 1, 1, 0, 0) |
| 23 | (1, 1, 1, 1, 1, 1, 1, 1, 0, 0, 0, 0, 0, 0, 0,0, 0, 0, 0, 0, 0, 0, 0, 0, 1, 1, 1, 1, 1, 1, 1) |
| 24 | (1, 1, 1, 1, 0, 0, 0, 0, 0, 0, 0, 0, 1, 1, 1, 1, 0, 0, 0, 0, 1, 1, 1, 1, 0, 0, 0, 0, 1, 1, 1) |
| 25 | (1, 0, 0, 1, 1, 0, 0, 1, 0, 1, 1, 0, 0, 1, 1, 0, 0, 1, 1, 0, 0, 1, 1, 0, 1, 0, 0, 1, 0, 1, 0) |
| 26 | (1, 1, 0, 0, 1, 1, 0, 0, 1, 1, 0, 0, 1, 1, 0, 0, 1, 1, 0, 0, 1, 1, 0, 0, 1, 1, 0, 0, 0, 0, 1) |
| 27 | (0, 1, 0, 1, 1, 0, 1, 0, 1, 0, 1, 0, 0, 1, 0, 1, 0, 1, 0, 1, 1, 0, 1, 0, 0, 1, 0, 1, 1, 0, 0) |
| 28 | (1, 1, 1, 1, 0, 0, 0, 0, 1, 1, 1, 1, 0, 0, 0, 0, 1, 1, 1, 1, 0, 0, 0, 0, 0, 0, 0, 0, 1, 1, 1) |
| 29 | (1, 0, 1, 0, 1, 0, 1, 0, 0, 1, 0, 1, 0, 1, 0, 1, 0, 1, 0, 1, 0, 1, 0, 1, 1, 0, 1, 0, 1, 0, 0) |
| 30 | (0, 0, 1, 1, 1, 1, 0, 0, 0, 0, 1, 1, 1, 1, 0, 0, 1, 1, 0, 0, 0, 0, 1, 1, 0, 0, 1, 1, 0, 0, 1) |

In an implementation example, when p=3, N=2, i=1, K₁=4, and M=13, an implementation example of the codebook set is shown in Table 10.

It should be understood that, in the codebook set shown in Table 10, that each codebook corresponds to a line in the N-dimensional space is used as an example. It can be learned from the foregoing description that, when i=1, the quantity of points on each line (that is, the quantity of available resources of each codebook) is K₁=pⁱ + pⁱ⁻¹+...+p + 1=3+1=4, the quantity of coordinate points (that is, the total quantity of resources of each codebook) is M=p^{N} + p^{N-1}+... +p + 1=13, and the quantity of i-dimensional spaces (where i=1, in other words, the quantity of i-dimensional spaces may also be the quantity of lines in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 13$.

**Table 10**

| Codebook index | Codebook |
|---|---|
| 0 | (0, 1, 0, 1, 0, 0, 0, 0, 1, 0, 0, 1, 0) |
| 1 | (0, 1, 0, 0, 0, 1, 1, 0, 0, 0, 1, 0, 0) |
| 2 | (0, 0, 1, 1, 0, 0, 0, 1, 0, 0, 1, 0, 0) |
| 3 | (0, 0, 0, 0, 0, 0, 0, 0, 0, 1, 1, 1, 1) |
| 4 | (0, 0, 0, 1, 1, 1, 0, 0, 0, 0, 0, 0, 1) |
| 5 | (0, 0, 0, 0, 0, 0, 1, 1, 1, 0, 0, 0, 1) |
| 6 | (0, 1, 0, 0, 1, 0, 0, 1, 0, 1, 0, 0, 0) |
| 7 | (1, 0, 0, 1, 0, 0, 1, 0, 0, 1, 0, 0, 0) |
| 8 | (0, 0, 1, 0, 0, 1, 0, 0, 1, 1, 0, 0, 0) |
| 9 | (1, 0, 0, 0, 1, 0, 0, 0, 1, 0, 1, 0, 0) |
| 10 | (1, 0, 0, 0, 0, 1, 0, 1, 0, 0, 0, 1, 0) |
| 11 | (1, 1, 1, 0, 0, 0, 0, 0, 0, 0, 0, 0, 1) |
| 12 | (0, 0, 1, 0, 1, 0, 1, 0, 0, 0, 0, 1, 0) |

In an implementation example, when p=3, N=3, i=1, K₁=4, and M=40, an implementation example of the codebook set is shown in Table 11.

It should be understood that in the codebook set shown in Table 11, that each codebook corresponds to a line in the N-dimensional space is used as an example. It can be learned from the foregoing description that, when i=1, the quantity of points on each line (that is, the quantity of available resources of each codebook) is K₁=pⁱ + pⁱ⁻¹+...+p + 1=p+1=4, the quantity of coordinate points (that is, the total quantity of resources of each codebook) is M=p^{N} + p^{N-1}+... +p + 1=40, and the quantity of i-dimensional spaces (where i=1, in other words, the quantity of i-dimensional spaces may also be the quantity of lines in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 130$.

**Table 11**

| Codebook index | Codebook |
|---|---|
| 0 | (0, 0, 1, 0, 0, 0, 0, 0, 0, 1, 0, 0, 0, 0, 0, 0, 0, 0, 0, 1, 0, 0, 0, 0, 0, 0, 0, 0, 1, 0, 0, 0, 0, 0, 0, 0, 0, 0, 0, 0) |
| 1 | (0, 0, 0, 1, 0, 0, 0, 0, 0, 0, 0, 1, 0, 0, 0, 0, 0, 0, 0, 0, 0, 0, 0, 0, 0, 1, 0, 0, 0, 0, 0, 0, 0, 0, 0, 1, 0, 0, 0, 0) |
| 2 | (0, 0, 0, 0, 1, 0, 0, 0, 0, 0, 1, 0, 0, 0, 0, 0, 0, 0, 0, 0, 0, 0, 0, 0, 0, 1, 0, 0, 0, 0, 0, 0, 0, 1, 0, 0, 0, 0, 0, 0) |
| 3 | (0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 0, 0, 0, 0, 0, 0, 1) |
| 4 | (0, 1,0, 0, 0, 0, 0, 0, 0, 0, 0, 0, 0, 0, 0, 0, 0, 1, 0, 0, 0, 1, 0, 0, 0, 0, 0, 0, 0, 0, 0, 0, 0, 0, 1, 0, 0, 0, 0, 0) |
| 5 | (0, 0, 0, 0, 0, 0, 1, 0, 0, 0, 1, 0, 0, 0, 0, 0, 0, 0, 0, 0, 0, 0, 0, 1, 0, 0, 0, 0, 0, 0, 0, 1, 0, 0, 0, 0, 0, 0, 0, 0) |
| 6 | (0, 1, 0, 0, 0, 0, 0, 0, 0, 1, 0, 0, 0, 0, 0, 0, 0, 0, 0, 0, 1, 0, 0, 0, 0, 0, 0, 0, 0, 1, 0, 0, 0, 0, 0, 0, 0, 0, 0, 0) |
| 7 | (0, 0, 0, 0,0, 0, 0, 0, 1, 0, 0, 0, 0, 0, 0, 0, 0, 1, 0, 0, 0, 0, 0, 0, 0, 0, 1, 1, 0, 0, 0, 0, 0, 0, 0, 0, 0, 0, 0, 0) |
| 8 | (1, 0, 0, 0, 1, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0) |
| 9 | (0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 1, 0, 0, 0) |
| 10 | (0, 0, 0, 0, 0, 0,1, 0, 0, 0, 0, 0, 0, 1, 0, 0, 0, 0, 0, 0, 1, 0, 0, 0, 0, 0, 0, 0, 0, 0, 0, 0, 0, 0, 1, 0, 0, 0, 0, 0) |
| 11 | (0, 1, 0, 1, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0) |
| 12 | (0, 0, 0, 0, 0, 1, 0, 0, 0, 0, 1, 0, 0, 0, 0, 0, 0, 0, 0, 0, 0, 0, 0, 0, 1, 0, 0, 0, 0, 0, 0, 0, 0, 0, 0, 1, 0, 0, 0, 0) |
| 13 | (0, 0, 0, 0, 0, 0, 0, 0,0, 0, 1, 0, 0, 0, 1, 1, 0, 0, 0, 0, 0, 0, 0, 0, 0, 0, 0, 0, 0, 0, 0, 0, 0, 0, 0, 0, 0, 1, 0, 0) |
| 14 | (1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 15 | (0, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 0, 0, 1, 0, 0, 0, 0, 0, 0) |
| 16 | (0, 0, 0, 1, 0, 0, 0, 0, 0, 0,0, 0, 0, 0, 0, 0, 0, 1, 0, 1, 0, 0, 0, 0, 0, 0, 0, 0, 0, 0, 0, 0, 1, 0, 0, 0, 0, 0, 0, 0) |
| 17 | (0, 0, 1, 0, 0, 0, 0, 0, 0, 0, 0, 0, 0, 1, 0, 0, 0, 0, 0, 0, 0, 0, 0, 0, 1, 0, 0, 0, 0, 0, 0, 0, 1, 0, 0, 0, 0, 0, 0, 0) |
| 18 | (0, 0, 0, 0, 0, 0, 0, 0, 0, 0, 1, 0, 1, 0, 0, 0, 0, 1, 0, 0, 0, 0, 0, 0, 0, 0, 0, 0, 0, 0, 0, 0, 0, 0, 0, 0, 0, 0, 1, 0) |
| 19 | (0, 0, 0, 0, 0, 0, 0, 0, 0, 0, 0, 0,0, 0, 0, 0, 0, 0, 0, 0, 0, 0, 0, 0, 0, 0, 0, 0, 0, 0, 0, 0, 0, 1, 1, 1, 0, 0, 0, 1) |
| 20 | (0, 0, 0, 0, 0, 0, 1, 0, 0, 0, 0, 0, 0, 0, 0, 1, 0, 0, 0, 0, 0, 0, 0, 0, 1, 0, 0, 1, 0, 0, 0, 0, 0, 0, 0, 0, 0, 0, 0, 0) |
| 21 | (0, 0, 0, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 22 | (0, 0, 0, 0, 1, 0, 0, 0, 0, 0, 0, 0, 0, 0,0, 0, 0, 1, 1, 0, 0, 0, 0, 0, 0, 0, 0, 0, 0, 0, 0, 1, 0, 0, 0, 0, 0, 0, 0, 0) |
| 23 | (0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 1) |
| 24 | (1, 0, 0, 0, 0, 0, 0, 0, 0, 0, 0, 0, 0, 0, 0, 0, 1, 0, 0, 0, 0, 0, 0, 1, 0, 0, 0, 0, 0, 0, 0, 0, 0, 0, 1, 0, 0, 0, 0, 0) |
| 25 | (1, 0, 0, 0, 0, 0, 0, 0, 0, 0, 0, 0, 0, 0, 0, 0,0, 1, 0, 0, 0, 0, 1, 0, 0, 0, 0, 0, 0, 0, 0, 0, 0, 0, 0, 1, 0, 0, 0, 0) |
| 26 | (0, 0, 1, 0, 0, 0, 0, 0, 0, 0, 0, 1, 0, 0, 0, 0, 0, 0, 0, 0, 1, 0, 0, 0, 0, 0, 0, 1, 0, 0, 0, 0, 0, 0, 0, 0, 0, 0, 0, 0) |
| 27 | (0, 0, 1, 0, 0, 0, 0, 0, 0, 0, 0, 0, 0, 0, 0, 0, 1, 0, 0, 0, 0, 1, 0, 0, 0, 0, 0, 0, 0, 0, 0, 0, 0, 0, 0, 1, 0, 0, 0, 0) |
| 28 | (0, 0, 0, 0, 0, 0, 0, 0, 0, 0, 0, 0, 0, 0, 0, 0, 0, 0,0, 0, 0, 0, 0, 0, 0, 0, 0, 0, 0, 1, 1, 0, 0, 0, 1, 0, 0, 1, 0, 0) |
| 29 | (1, 0, 0, 0, 0, 0, 0, 0, 0, 0, 0, 1, 0, 0, 0, 0, 0, 0, 0, 1, 0, 0, 0, 0, 0, 0, 0, 0, 0, 1, 0, 0, 0, 0, 0, 0, 0, 0, 0, 0) |
| 30 | (0, 0, 0, 0, 0, 0, 1, 0, 0, 0, 0, 1, 0, 0, 0, 0, 0, 0, 0, 0, 0, 0, 1, 0, 0, 0, 0, 0, 0, 0, 0, 0, 1, 0, 0, 0, 0, 0, 0, 0) |
| 31 | (1, 0, 0, 0, 0, 0, 0, 0, 0, 0, 0, 0, 0, 0, 0, 1, 0, 0, 0, 0,0, 1, 0, 0, 0, 0, 0, 0, 0, 0, 0, 0, 0, 1, 0, 0, 0, 0, 0, 0) |
| 32 | (0, 0, 0, 0, 0, 0, 0, 1, 0, 1, 0, 0, 0, 0, 0, 0, 0, 0, 0, 0, 0, 0, 0, 1, 0, 0, 0, 0, 0, 0, 0, 0, 1, 0, 0, 0, 0, 0, 0, 0) |
| 33 | (0, 0, 0, 0, 0, 0, 0, 1, 0, 0, 0, 0, 1, 0, 0, 0, 0, 0, 0, 0, 1, 0, 0, 0, 0, 0, 0, 0, 0, 0, 0, 0, 0, 0, 0, 1, 0, 0, 0, 0) |
| 34 | (0, 1, 0, 0, 0, 0, 0, 0, 0, 0, 0, 0, 0, 0, 1, 0, 0, 0, 0, 0, 0, 0,0, 0, 1, 0, 0, 0, 0, 0, 0, 1, 0, 0, 0, 0, 0, 0, 0, 0) |
| 35 | (0, 0, 1, 1, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0) |
| 36 | (0, 0, 0, 0, 0, 0, 0, 1, 0, 0, 0, 0, 0, 0, 0, 0, 0, 1, 0, 0, 0, 0, 0, 0, 1, 0, 0, 0, 1, 0, 0, 0, 0, 0, 0, 0, 0, 0, 0, 0) |
| 37 | (0, 0, 0, 0, 1, 0, 0, 0, 0, 0, 0, 0, 1, 0, 0, 0, 0, 0, 0, 0, 0, 0, 0, 1,0, 0, 0, 0, 0, 1, 0, 0, 0, 0, 0, 0, 0, 0, 0, 0) |
| 38 | (0, 0, 0, 0, 0, 1, 0, 0, 0, 0, 0, 0, 0, 0, 1, 0, 0, 0, 0, 0, 0, 0, 0, 1, 0, 0, 0, 1, 0, 0, 0, 0, 0, 0, 0, 0, 0, 0, 0, 0) |
| 39 | (0, 0, 0, 0, 0, 0, 0, 0, 1, 0, 0, 0, 0, 0, 0, 1, 0, 0, 0, 0, 0, 0, 0, 0, 0, 1, 0, 0, 1, 0, 0, 0, 0, 0, 0, 0, 0, 0, 0, 0) |
| 40 | (0, 0, 0, 0, 0, 0, 1, 0, 0, 0, 0, 0, 0, 0, 0, 0, 0, 1, 0, 0, 0, 0, 0, 0, 0, 1,0, 0, 0, 1, 0, 0, 0, 0, 0, 0, 0, 0, 0, 0) |
| 41 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 1, 0, 0, 0) |
| 42 | (0, 0, 0, 0, 1, 0, 0, 0, 0, 0, 0, 1, 0, 0, 0, 0, 0, 0, 0, 0, 0, 0, 0, 0, 1, 0, 0, 0, 0, 0, 0, 0, 0, 0, 1, 0, 0, 0, 0, 0) |
| 43 | (0, 0, 0, 0, 0, 0, 0, 0, 1, 0, 0, 0, 0, 0, 0, 0, 1, 0, 0, 0, 0, 0, 0, 0, 1, 0, 0, 0,0, 1, 0, 0, 0, 0, 0, 0, 0, 0, 0, 0) |
| 44 | (0, 1, 0, 0, 0, 0, 0, 0, 0, 0, 1, 0, 0, 0, 0, 0, 0, 0, 0, 1, 0, 0, 0, 0, 0, 0, 0, 1, 0, 0, 0, 0, 0, 0, 0, 0, 0, 0, 0, 0) |
| 45 | (0, 0, 0, 1, 0, 0, 0, 0, 0, 0, 0, 0, 0, 0, 1, 0, 0, 0, 0, 0, 0, 0, 1, 0, 0, 0, 0, 0, 0, 1, 0, 0, 0, 0, 0, 0, 0, 0, 0, 0) |
| 46 | (0, 0, 0, 0, 0, 0, 0, 1, 0, 0, 0, 0, 0, 0, 0, 1, 0, 0, 0, 0, 0, 0, 0, 0, 0, 0, 1, 0, 0, 1,0, 0, 0, 0, 0, 0, 0, 0, 0, 0) |
| 47 | (0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 1, 0, 0, 0, 1, 0, 1, 0, 0) |
| 48 | (0, 0, 0, 0, 0, 0, 0, 0, 1, 0, 1, 0, 0, 0, 0, 0, 0, 0, 0, 0, 0, 1, 0, 0, 0, 0, 0, 0, 0, 0, 0, 0, 1, 0, 0, 0, 0, 0, 0, 0) |
| 49 | (0, 0, 0, 1, 0, 0, 0, 0, 0, 0, 0, 0, 0, 0, 0, 0, 1, 0, 0, 0, 1, 0, 0, 0, 0, 0, 0, 0, 0, 0, 0, 1,0, 0, 0, 0, 0, 0, 0, 0) |
| 50 | (0, 1, 0, 0, 0, 0, 0, 0, 0, 0, 0, 1, 0, 0, 0, 0, 0, 0, 1, 0, 0, 0, 0, 0, 0, 0, 0, 0, 1, 0, 0, 0, 0, 0, 0, 0, 0, 0, 0, 0) |
| 51 | (0, 0, 0, 0, 0, 0, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 52 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0,0, 0, 1, 1, 1, 1) |
| 53 | (0, 0, 0, 0, 1, 0, 0, 0, 0, 0, 0, 0, 0, 0, 1, 0, 0, 0, 0, 0, 0, 1, 0, 0, 0, 0, 0, 0, 1, 0, 0, 0, 0, 0, 0, 0, 0, 0, 0, 0) |
| 54 | (0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 1, 0, 0, 0, 0, 1, 0, 0, 1, 0) |
| 55 | (0, 1, 0, 0, 0, 0, 0, 0, 0, 0, 0, 0, 0, 0, 0, 1, 0, 0, 0, 0, 0, 0, 0, 1, 0, 0, 0, 0, 0, 0, 0, 0, 0, 0, 0, 1,0, 0, 0, 0) |
| 56 | (0, 0, 0, 0, 0, 0, 0, 0, 1, 0, 0, 0, 0, 1, 0, 0, 0, 0, 1, 0, 0, 0, 0, 0, 0, 0, 0, 0, 0, 0, 0, 0, 0, 0, 0, 1, 0, 0, 0, 0) |
| 57 | (0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 1) |
| 58 | (0, 0, 0, 0, 1, 0, 0, 0, 0, 0, 0, 0, 0, 0, 0, 1, 0, 0, 0, 0, 1, 0, 0, 0, 0, 0, 0, 0, 0, 0, 0, 0, 1, 0, 0, 0, 0, 0,0, 0) |
| 59 | (0, 1, 0, 0, 0, 0, 0, 0, 0, 0, 0, 0, 0, 1, 0, 0, 0, 0, 0, 0, 0, 0, 0, 0, 0, 1, 0, 0, 0, 0, 1, 0, 0, 0, 0, 0, 0, 0, 0, 0) |
| 60 | (0, 0, 1, 0, 0, 0, 0, 0, 0, 0, 0, 0, 0, 0, 0, 0, 0, 1, 0, 0, 0, 0, 0, 1, 0, 0, 0, 0, 0, 0, 0, 0, 0, 1, 0, 0, 0, 0, 0, 0) |
| 61 | (0, 0, 0, 0, 0, 0, 1, 0, 0, 1, 0, 0, 0, 0, 0, 0, 0, 0, 0, 0, 0, 1, 0, 0, 0, 0, 0, 0, 0, 0, 1, 0, 0, 0, 0, 0, 0, 0, 0, 0) |
| 62 | (0, 0, 0, 1, 0, 0, 0, 0, 0, 0, 0, 0, 0, 1, 0, 0, 0, 0, 0, 0, 0, 0, 0, 1, 0, 0, 0, 0, 1, 0, 0, 0, 0, 0, 0, 0, 0, 0, 0, 0) |
| 63 | (0, 0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 1, 0, 0, 0) |
| 64 | (0, 0, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 0, 1, 0, 0, 0, 0, 0, 0) |
| 65 | (0, 1, 0, 0, 0, 0, 0, 0, 0, 0, 0, 0, 1, 0, 0, 0, 0, 0, 0, 0, 0, 0, 0, 0, 0, 0, 1, 0, 0, 0, 0, 0, 1, 0, 0, 0, 0, 0, 0, 0) |
| 66 | (0, 0,0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 0, 0, 0, 1) |
| 67 | (0, 0, 0, 0, 0, 0, 0, 0, 0, 1, 0, 0, 0, 1, 0, 0, 0, 1, 0, 0, 0, 0, 0, 0, 0, 0, 0, 0, 0, 0, 0, 0, 0, 0, 0, 0, 0, 1, 0, 0) |
| 68 | (0, 0, 0, 0, 0, 0, 1, 0, 0, 0, 0, 0, 0, 0, 0, 0, 1, 0, 0, 0, 0, 0, 0, 0, 0, 0, 1, 0, 1, 0, 0, 0, 0, 0, 0, 0, 0, 0, 0, 0) |
| 69 | (1, 0, 0, 0,0, 0, 0, 0, 0, 0, 0, 0, 0, 0, 1, 0, 0, 0, 0, 0, 0, 0, 0, 0, 0, 1, 0, 0, 0, 0, 0, 0, 1, 0, 0, 0, 0, 0, 0, 0) |
| 70 | (0, 0, 0, 0, 0, 0, 0, 1, 0, 0, 0, 0, 0, 0, 0, 0, 1, 0, 0, 0, 0, 0, 0, 0, 0, 1, 0, 1, 0, 0, 0, 0, 0, 0, 0, 0, 0, 0, 0, 0) |
| 71 | (0, 1, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0) |
| 72 | (0, 0, 1, 0, 0, 0,0, 0, 0, 0, 1, 0, 0, 0, 0, 0, 0, 0, 1, 0, 0, 0, 0, 0, 0, 0, 0, 0, 0, 1, 0, 0, 0, 0, 0, 0, 0, 0, 0, 0) |
| 73 | (0, 0, 0, 0, 0, 0, 0, 0, 0, 0, 1, 0, 0, 1, 0, 0, 1, 0, 0, 0, 0, 0, 0, 0, 0, 0, 0, 0, 0, 0, 0, 0, 0, 0, 0, 0, 1, 0, 0, 0) |
| 74 | (0, 0, 1, 0, 0, 0, 0, 0, 0, 0, 0, 0, 1, 0, 0, 0, 0, 0, 0, 0, 0, 0, 0, 0, 0, 1, 0, 0, 0, 0, 0, 1, 0, 0, 0, 0, 0, 0, 0, 0) |
| 75 | (0, 0, 0, 0, 0, 0, 0, 0,1, 0, 0, 0, 0, 0, 1, 0, 0, 0, 0, 0, 1, 0, 0, 0, 0, 0, 0, 0, 0, 0, 0, 0, 0, 1, 0, 0, 0, 0, 0, 0) |
| 76 | (0, 0, 0, 1, 0, 0, 0, 0, 0, 0, 1, 0, 0, 0, 0, 0, 0, 0, 0, 0, 0, 0, 0, 0, 0, 0, 1, 0, 0, 0, 0, 0, 0, 0, 1, 0, 0, 0, 0, 0) |
| 77 | (0, 0, 0, 0, 0, 1, 0, 0, 0, 0, 0, 0, 1, 0, 0, 0, 0, 0, 0, 0, 0, 0, 1, 0, 0, 0, 0, 0, 1, 0, 0, 0, 0, 0, 0, 0, 0, 0, 0, 0) |
| 78 | (0, 0, 0, 0, 0, 0, 0, 0, 0, 0,0, 0, 0, 0, 0, 0, 0, 0, 0, 0, 0, 0, 0, 0, 1, 1, 1, 0, 0, 0, 0, 0, 0, 0, 0, 0, 0, 0, 0, 1) |
| 79 | (0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 0, 1, 0, 0, 0) |
| 80 | (0, 0, 0, 0, 0, 0, 0, 0, 0, 0, 0, 1, 1, 0, 0, 0, 1, 0, 0, 0, 0, 0, 0, 0, 0, 0, 0, 0, 0, 0, 0, 0, 0, 0, 0, 0, 0, 1, 0, 0) |
| 81 | (1, 0, 0, 0, 0, 0, 0, 0, 0, 0, 1, 0,0, 0, 0, 0, 0, 0, 0, 0, 1, 0, 0, 0, 0, 0, 0, 0, 1, 0, 0, 0, 0, 0, 0, 0, 0, 0, 0, 0) |
| 82 | (0, 0, 0, 0, 0, 0, 0, 0, 0, 1, 0, 0, 0, 0, 1, 0, 1, 0, 0, 0, 0, 0, 0, 0, 0, 0, 0, 0, 0, 0, 0, 0, 0, 0, 0, 0, 0, 0, 1, 0) |
| 83 | (0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 1, 0, 0, 0) |
| 84 | (0, 0, 0, 0, 0, 0, 0, 0, 0, 0, 0, 0, 0, 0,0, 0, 0, 0, 0, 1, 0, 0, 0, 1, 1, 0, 0, 0, 0, 0, 0, 0, 0, 0, 0, 0, 0, 1, 0, 0) |
| 85 | (0, 0, 1, 0, 0, 0, 0, 0, 0, 0, 0, 0, 0, 0, 1, 0, 0, 0, 0, 0, 0, 0, 0, 0, 0, 0, 1, 0, 0, 0, 1, 0, 0, 0, 0, 0, 0, 0, 0, 0) |
| 86 | (0, 0, 1, 0, 1, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0) |
| 87 | (0, 0, 0, 0, 0, 1, 0, 0, 0, 0, 0, 0, 0, 0, 0, 1,0, 0, 0, 1, 0, 0, 0, 0, 0, 0, 0, 0, 0, 0, 0, 1, 0, 0, 0, 0, 0, 0, 0, 0) |
| 88 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 1, 0, 1, 0, 0, 0, 0, 1, 0) |
| 89 | (0, 1, 0, 0, 0, 0, 0, 0, 0, 0, 0, 0, 0, 0, 0, 0, 1, 0, 0, 0, 0, 0, 1, 0, 0, 0, 0, 0, 0, 0, 0, 0, 0, 1, 0, 0, 0, 0, 0, 0) |
| 90 | (0, 0, 0, 0, 1, 0, 0, 0, 0, 1, 0, 0, 0, 0, 0, 0, 0, 0,0, 0, 0, 0, 0, 0, 0, 0, 1, 0, 0, 0, 0, 0, 0, 0, 0, 1, 0, 0, 0, 0) |
| 91 | (1, 0, 0, 0, 0, 0, 0, 0, 0, 1, 0, 0, 0, 0, 0, 0, 0, 0, 1, 0, 0, 0, 0, 0, 0, 0, 0, 1, 0, 0, 0, 0, 0, 0, 0, 0, 0, 0, 0, 0) |
| 92 | (0, 0, 0, 0, 0, 0, 0, 0, 0, 0, 0, 0, 0, 0, 0, 0, 0, 0, 1, 0, 0, 0, 1, 0, 0, 0, 1, 0, 0, 0, 0, 0, 0, 0, 0, 0, 0, 1, 0, 0) |
| 93 | (0, 0, 0, 0, 0, 0, 0, 0, 0, 0, 0, 0, 0, 0, 0, 0, 0, 0, 0, 0,1, 0, 1, 0, 1, 0, 0, 0, 0, 0, 0, 0, 0, 0, 0, 0, 0, 0, 1, 0) |
| 94 | (0, 0, 0, 0, 0, 1, 0, 0, 0, 0, 0, 0, 0, 0, 0, 0, 0, 1, 0, 0, 1, 0, 0, 0, 0, 0, 0, 0, 0, 0, 1, 0, 0, 0, 0, 0, 0, 0, 0, 0) |
| 95 | (0, 0, 0, 0, 0, 0, 0, 0, 0, 0, 0, 0, 0, 0, 0, 0, 0, 0, 1, 0, 0, 0, 0, 1, 0, 1, 0, 0, 0, 0, 0, 0, 0, 0, 0, 0, 0, 0, 1, 0) |
| 96 | (0, 0, 0, 0, 0, 0, 0, 0, 0, 0, 0, 0, 0, 0, 0, 0, 0, 0, 0, 0, 0, 0,0, 0, 0, 0, 0, 1, 0, 0, 0, 0, 1, 0, 1, 0, 0, 0, 1, 0) |
| 97 | (0, 0, 1, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0) |
| 98 | (0, 0, 0, 0, 0, 0, 1, 0, 0, 0, 0, 0, 0, 0, 1, 0, 0, 0, 0, 1, 0, 0, 0, 0, 0, 0, 0, 0, 0, 0, 0, 0, 0, 0, 0, 1, 0, 0, 0, 0) |
| 99 | (0, 0, 0, 0, 0, 0, 0, 0, 0, 1, 1, 1, 0, 0, 0, 0, 0, 0, 0, 0, 0, 0, 0, 0,0, 0, 0, 0, 0, 0, 0, 0, 0, 0, 0, 0, 0, 0, 0, 1) |
| 100 | (0, 0, 0, 0, 0, 0, 0, 0, 0, 0, 0, 1, 0, 1, 0, 1, 0, 0, 0, 0, 0, 0, 0, 0, 0, 0, 0, 0, 0, 0, 0, 0, 0, 0, 0, 0, 0, 0, 1, 0) |
| 101 | (0, 0, 0, 0, 0, 0, 0, 1, 0, 0, 1, 0, 0, 0, 0, 0, 0, 0, 0, 0, 0, 0, 1, 0, 0, 0, 0, 0, 0, 0, 1, 0, 0, 0, 0, 0, 0, 0, 0, 0) |
| 102 | (0, 0, 0, 0, 0, 0, 0, 0, 0, 0, 0, 0, 0, 0, 0, 0, 0, 0, 0, 0, 0, 0, 0, 0, 0, 0,0, 0, 1, 0, 0, 0, 1, 1, 0, 0, 0, 1, 0, 0) |
| 103 | (0, 0, 0, 0, 0, 0, 0, 0, 1, 0, 0, 0, 1, 0, 0, 0, 0, 0, 0, 1, 0, 0, 0, 0, 0, 0, 0, 0, 0, 0, 0, 0, 0, 0, 1, 0, 0, 0, 0, 0) |
| 104 | (0, 0, 0, 0, 0, 1, 0, 0, 0, 1, 0, 0, 0, 0, 0, 0, 0, 0, 0, 0, 0, 0, 0, 0, 0, 1, 0, 0, 0, 0, 0, 0, 0, 0, 1, 0, 0, 0, 0, 0) |
| 105 | (0, 0, 0, 0, 0, 0, 0, 0, 0, 0, 0, 0, 0, 0, 0, 0, 0, 0, 0, 0, 0, 0, 0, 0, 0, 0, 0, 0,0, 0, 1, 1, 1, 0, 0, 0, 0, 0, 0, 1) |
| 106 | (0, 0, 0, 0, 0, 1, 0, 0, 0, 0, 0, 0, 0, 0, 0, 0, 1, 0, 1, 0, 0, 0, 0, 0, 0, 0, 0, 0, 0, 0, 0, 0, 1, 0, 0, 0, 0, 0, 0, 0) |
| 107 | (0, 1, 0, 0, 0, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0) |
| 108 | (0, 0, 0, 1, 0, 0, 0, 0, 0, 1, 0, 0, 0, 0, 0, 0, 0, 0, 0, 0, 0, 0, 0, 0, 1, 0, 0, 0, 0, 0,0, 0, 0, 1, 0, 0, 0, 0, 0, 0) |
| 109 | (1, 0, 0, 0, 0, 0, 0, 0, 0, 0, 0, 0, 1, 0, 0, 0, 0, 0, 0, 0, 0, 0, 0, 0, 1, 0, 0, 0, 0, 0, 1, 0, 0, 0, 0, 0, 0, 0, 0, 0) |
| 110 | (0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 0, 0, 1, 0, 0, 0) |
| 111 | (0, 0, 0, 0, 0, 0, 0, 0, 1, 0, 0, 1, 0, 0, 0, 0, 0, 0, 0, 0, 0, 0, 0, 1, 0, 0, 0, 0, 0, 0, 1, 0,0, 0, 0, 0, 0, 0, 0, 0) |
| 112 | (0, 0, 0, 1, 0, 0, 0, 0, 0, 0, 0, 0, 1, 0, 0, 0, 0, 0, 0, 0, 0, 1, 0, 0, 0, 0, 0, 1, 0, 0, 0, 0, 0, 0, 0, 0, 0, 0, 0, 0) |
| 113 | (0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 1) |
| 114 | (1, 0, 0, 0, 0, 1, 0, 1, 0, 0, 0, 0, 0, 0, 0, 0, 0, 0, 0, 0, 0, 0, 0, 0, 0, 0, 0, 0, 0, 0, 0, 0, 0, 0,0, 0, 0, 0, 1, 0) |
| 115 | (0, 0, 0, 0, 0, 0, 0, 1, 0, 0, 0, 0, 0, 0, 1, 0, 0, 0, 1, 0, 0, 0, 0, 0, 0, 0, 0, 0, 0, 0, 0, 0, 0, 0, 1, 0, 0, 0, 0, 0) |
| 116 | (1, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0) |
| 117 | (0, 0, 0, 0, 0, 1, 0, 0, 0, 0, 0, 1, 0, 0, 0, 0, 0, 0, 0, 0, 0, 0, 0, 0, 0, 0, 1, 0, 0, 0, 0, 0, 0, 1, 0, 0,0, 0, 0, 0) |
| 118 | (0, 0, 0, 1, 0, 0, 0, 0, 0, 0, 0, 0, 0, 0, 0, 1, 0, 0, 1, 0, 0, 0, 0, 0, 0, 0, 0, 0, 0, 0, 1, 0, 0, 0, 0, 0, 0, 0, 0, 0) |
| 119 | (0, 0, 0, 0, 0, 0, 0, 0, 0, 0, 0, 1, 0, 0, 1, 0, 0, 1, 0, 0, 0, 0, 0, 0, 0, 0, 0, 0, 0, 0, 0, 0, 0, 0, 0, 0, 1, 0, 0, 0) |
| 120 | (0, 0, 1, 0, 0, 0, 0, 0, 0, 0, 0, 0, 0, 0, 0, 1, 0, 0, 0, 0, 0, 0, 1, 0, 0, 0, 0, 0, 0, 0, 0, 0, 0, 0, 1, 0, 0, 0,0, 0) |
| 121 | (0, 0, 0, 0, 0, 0, 0, 0, 0, 1, 0, 0, 1, 0, 0, 1, 0, 0, 0, 0, 0, 0, 0, 0, 0, 0, 0, 0, 0, 0, 0, 0, 0, 0, 0, 0, 1, 0, 0, 0) |
| 122 | (0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 0, 0, 0) |
| 123 | (0, 0, 0, 0, 0, 0, 0, 0, 0, 0, 0, 0, 0, 0, 0, 0, 0, 0, 0, 1, 0, 1, 0, 0, 0, 0, 1, 0, 0, 0, 0, 0, 0, 0, 0, 0, 0, 0, 1, 0) |
| 124 | (1, 0, 0, 0, 0, 0, 0, 0, 0, 0, 0, 0, 0, 1, 0, 0, 0, 0, 0, 0, 0, 0, 0, 0, 0, 0, 1, 0, 0, 0, 0, 1, 0, 0, 0, 0, 0, 0, 0, 0) |
| 125 | (0, 0, 0, 0, 0, 0, 0, 0, 0, 0, 0, 0, 0, 0, 0, 0, 0, 0, 0, 0, 1, 1, 0, 0, 0, 1, 0, 0, 0, 0, 0, 0, 0, 0, 0, 0, 0, 1, 0, 0) |
| 126 | (0, 0, 0, 0, 0, 0, 0, 1, 0, 0, 0, 1, 0, 0, 0, 0, 0, 0, 0, 0, 0, 1, 0, 0, 0, 0, 0, 0, 0, 0, 0, 1, 0, 0, 0, 0, 0, 0, 0, 0) |
| 127 | (0, 0, 0, 0, 1, 0, 0, 0, 0, 0, 0, 0, 0, 0, 0, 0, 1, 0, 0, 1, 0, 0, 0, 0, 0, 0, 0, 0, 0, 0, 1, 0, 0, 0, 0, 0, 0, 0, 0, 0) |
| 128 | (0, 0,0, 0, 1, 0, 0, 0, 0, 0, 0, 0, 0, 1, 0, 0, 0, 0, 0, 0, 0, 0, 1, 0, 0, 0, 0, 1, 0, 0, 0, 0, 0, 0, 0, 0, 0, 0, 0, 0) |
| 129 | (0, 0, 0, 0, 0, 0, 0, 0, 1, 1, 0, 0, 0, 0, 0, 0, 0, 0, 0, 0, 0, 0, 1, 0, 0, 0, 0, 0, 0, 0, 0, 1, 0, 0, 0, 0, 0, 0, 0, 0) |

In an implementation example, when p=3, N=3, i=2, K₁=13, and M=40, an implementation example of the codebook set is shown in Table 12.

It should be understood that, in the codebook set shown in Table 12, that each codebook corresponds to a line in the N-dimensional space is used as an example. It can be learned from the foregoing description that when i=2, the quantity of points on each line (that is, the quantity of available resources of each codebook) is K₁=pⁱ + pⁱ⁻¹+...+p + 1=13, the quantity of coordinate points (that is, the total quantity of resources of each codebook) is M=p^{N} + p^{N-1}+... +p + 1=40, and the quantity of i-dimensional spaces (where i=2, in other words, the quantity of i-dimensional spaces may also be the quantity of planes in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 40$.

**Table 12**

| Codebook index | Codebook |
|---|---|
| 0 | (0, 1, 0, 0, 0, 1, 1, 0, 0, 0, 1, 0, 0, 0, 1, 1, 0, 0, 0, 1, 0, 0, 0, 1, 1, 0, 0, 1, 0, 0, 0, 1, 0, 0, 0, 1, 0, 1, 0, 0) |
| 1 | (0, 1, 0, 0, 1, 0, 0, 1, 0, 0, 0, 1, 0, 0, 1, 0, 0, 1, 1, 0, 0, 1, 0, 0, 1, 0, 0, 0, 1, 0, 0, 1, 0, 0, 1, 0, 1, 0, 0, 0) |
| 2 | (1, 0, 0, 0, 1, 0, 0, 0, 1, 0, 1, 0, 0, 0, 1, 1, 0, 0, 0, 0, 1, 1, 0, 0, 0, 1, 0, 0, 1, 0, 0, 0, 1, 1, 0, 0, 0, 1, 0, 0) |
| 3 | (0, 0, 1, 0, 0, 1, 0, 0, 1, 0, 1, 0, 0, 1, 0, 0, 1, 0, 1, 0, 0, 1, 0, 0, 1, 0, 0, 0, 0, 1, 0, 0, 1, 0, 0, 1, 1, 0, 0, 0) |
| 4 | (1, 0,0, 0, 0, 1, 0, 1, 0, 1, 0, 0, 0, 0, 1, 0, 1, 0, 1, 0, 0, 0, 0, 1, 0, 1, 0, 1, 0, 0, 0, 0, 1, 0, 1, 0, 0, 0, 1, 0) |
| 5 | (1, 0, 0, 0, 1, 0, 0, 0, 1, 1, 0, 0, 0, 1, 0, 0, 0, 1, 1, 0, 0, 0, 1, 0, 0, 0, 1, 1, 0, 0, 0, 1, 0, 0, 0, 1, 0, 1, 0, 0) |
| 6 | (1, 1, 1, 0, 0, 0, 0, 0, 0, 1, 1, 1, 0, 0, 0, 0, 0, 0, 1, 1, 1, 0, 0, 0, 0, 0, 0, 1, 1, 1, 0, 0, 0, 0, 0, 0, 0, 0, 0, 1) |
| 7 | (0, 0, 1, 0,1, 0, 1, 0, 0, 0, 1, 0, 1, 0, 0, 0, 0, 1, 1, 0, 0, 0, 0, 1, 0, 1, 0, 0, 0, 1, 0, 1, 0, 1, 0, 0, 0, 0, 1, 0) |
| 8 | (1, 0, 0, 0, 1, 0, 0, 0, 1, 0, 0, 1, 1, 0, 0, 0, 1, 0, 0, 1, 0, 0, 0, 1, 1, 0, 0, 0, 0, 1, 1, 0, 0, 0, 1, 0, 0, 1, 0, 0) |
| 9 | (0, 0, 1, 1, 0, 0, 0, 1, 0, 0, 1, 0, 0, 0, 1, 1, 0, 0, 1, 0, 0, 0, 1, 0, 0, 0, 1, 0, 0, 1, 1, 0, 0, 0, 1, 0, 0, 1, 0, 0) |
| 10 | (0, 0, 0, 0, 0, 0,0, 0, 0, 1, 1, 1, 1, 1, 1, 1, 1, 1, 0, 0, 0, 0, 0, 0, 0, 0, 0, 0, 0, 0, 0, 0, 0, 0, 0, 0, 1, 1, 1, 1) |
| 11 | (0, 0, 0, 0, 0, 0, 1, 1, 1, 0, 0, 0, 1, 1, 1, 0, 0, 0, 1, 1, 1, 0, 0, 0, 0, 0, 0, 0, 0, 0, 0, 0, 0, 1, 1, 1, 0, 0, 0, 1) |
| 12 | (0, 0, 0, 0, 0, 0, 0, 0, 0, 0, 0, 0, 0, 0, 0, 0, 0, 0, 1, 1, 1, 1, 1, 1, 1, 1, 1, 0, 0, 0, 0, 0, 0, 0, 0, 0, 1, 1, 1, 1) |
| 13 | (0, 1, 0, 1, 0, 0, 0, 0,1, 1, 0, 0, 0, 0, 1, 0, 1, 0, 0, 0, 1, 0, 1, 0, 1, 0, 0, 0, 0, 1, 0, 1, 0, 1, 0, 0, 0, 0, 1, 0) |
| 14 | (0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 1, 1, 1, 1, 1, 1, 1, 1, 1, 1) |
| 15 | (0, 1, 0, 0, 1, 0, 0, 1, 0, 1, 0, 0, 1, 0, 0, 1, 0, 0, 0, 0, 1, 0, 0, 1, 0, 0, 1, 0, 0, 1, 0, 0, 1, 0, 0, 1, 1, 0, 0, 0) |
| 16 | (0, 0, 1, 0, 0, 1, 0, 0, 1, 0,0, 1, 0, 0, 1, 0, 0, 1, 0, 0, 1, 0, 0, 1, 0, 0, 1, 1, 0, 0, 1, 0, 0, 1, 0, 0, 1, 0, 0, 0) |
| 17 | (1, 0, 0, 0, 0, 1, 0, 1, 0, 0, 1, 0, 1, 0, 0, 0, 0, 1, 0, 0, 1, 0, 1, 0, 1, 0, 0, 0, 1, 0, 1, 0, 0, 0, 0, 1, 0, 0, 1, 0) |
| 18 | (0, 1, 0, 0, 1, 0, 0, 1, 0, 0, 1, 0, 0, 1, 0, 0, 1, 0, 0, 1, 0, 0, 1, 0, 0, 1, 0, 1, 0, 0, 1, 0, 0, 1, 0, 0, 1, 0, 0, 0) |
| 19 | (0, 0, 1, 0, 0, 1, 0, 0, 1, 1, 0, 0,1, 0, 0, 1, 0, 0, 0, 1, 0, 0, 1, 0, 0, 1, 0, 0, 1, 0, 0, 1, 0, 0, 1, 0, 1, 0, 0, 0) |
| 20 | (1, 0, 0, 1, 0, 0, 1, 0, 0, 1, 0, 0, 1, 0, 0, 1, 0, 0, 1, 0, 0, 1, 0, 0, 1, 0, 0, 1, 0, 0, 1, 0, 0, 1, 0, 0, 1, 0, 0, 0) |
| 21 | (0, 1, 0, 1, 0, 0, 0, 0, 1, 0, 1, 0, 1, 0, 0, 0, 0, 1, 0, 1, 0, 1, 0, 0, 0, 0, 1, 1, 0, 0, 0, 0, 1, 0, 1, 0, 0, 0, 1, 0) |
| 22 | (1, 1, 1, 0, 0, 0, 0, 0, 0, 0, 0, 0, 0, 0,0, 1, 1, 1, 0, 0, 0, 1, 1, 1, 0, 0, 0, 0, 0, 0, 0, 0, 0, 1, 1, 1, 0, 0, 0, 1) |
| 23 | (0, 1, 0, 1, 0, 0, 0, 0, 1, 0, 0, 1, 0, 1, 0, 1, 0, 0, 1, 0, 0, 0, 0, 1, 0, 1, 0, 0, 1, 0, 1, 0, 0, 0, 0, 1, 0, 0, 1, 0) |
| 24 | (0, 0, 1, 1, 0, 0, 0, 1, 0, 0, 0, 1, 1, 0, 0, 0, 1, 0, 0, 0, 1, 1, 0, 0, 0, 1, 0, 1, 0, 0, 0, 1, 0, 0, 0, 1, 0, 1, 0, 0) |
| 25 | (0, 0, 0, 1, 1, 1, 0, 0, 0, 1, 1, 1, 0, 0, 0, 0,0, 0, 0, 0, 0, 0, 0, 0, 1, 1, 1, 0, 0, 0, 0, 0, 0, 1, 1, 1, 0, 0, 0, 1) |
| 26 | (1, 0, 0, 1, 0, 0, 1, 0, 0, 0, 0, 1, 0, 0, 1, 0, 0, 1, 0, 1, 0, 0, 1, 0, 0, 1, 0, 0, 0, 1, 0, 0, 1, 0, 0, 1, 1, 0, 0, 0) |
| 27 | (1, 1, 1, 1, 1, 1, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 1) |
| 28 | (0, 0, 0, 1, 1, 1, 0, 0, 0, 0, 0, 0, 1, 1, 1, 0, 0, 0,0, 0, 0, 1, 1, 1, 0, 0, 0, 1, 1, 1, 0, 0, 0, 0, 0, 0, 0, 0, 0, 1) |
| 29 | (1, 0, 0, 0, 0, 1, 0, 1, 0, 0, 0, 1, 0, 1, 0, 1, 0, 0, 0, 1, 0, 1, 0, 0, 0, 0, 1, 0, 0, 1, 0, 1, 0, 1, 0, 0, 0, 0, 1, 0) |
| 30 | (0, 0, 0, 0, 0, 0, 1, 1, 1, 1, 1, 1, 0, 0, 0, 0, 0, 0, 0, 0, 0, 1, 1, 1, 0, 0, 0, 0, 0, 0, 1, 1, 1, 0, 0, 0, 0, 0, 0, 1) |
| 31 | (0, 0, 0, 0, 0, 0, 1, 1, 1, 0, 0, 0, 0, 0, 0, 1, 1, 1, 0, 0,0, 0, 0, 0, 1, 1, 1, 1, 1, 1, 0, 0, 0, 0, 0, 0, 0, 0, 0, 1) |
| 32 | (1, 1, 1, 0, 0, 0, 0, 0, 0, 0, 0, 0, 1, 1, 1, 0, 0, 0, 0, 0, 0, 0, 0, 0, 1, 1, 1, 0, 0, 0, 1, 1, 1, 0, 0, 0, 0, 0, 0, 1) |
| 33 | (0, 0, 0, 1, 1, 1, 0, 0, 0, 0, 0, 0, 0, 0, 0, 1, 1, 1, 1, 1, 1, 0, 0, 0, 0, 0, 0, 0, 0, 0, 1, 1, 1, 0, 0, 0, 0, 0, 0, 1) |
| 34 | (0, 1, 0, 0, 0, 1, 1, 0, 0, 1, 0, 0, 0, 1, 0, 0, 0, 1, 0, 0, 1, 1,0, 0, 0, 1, 0, 0, 0, 1, 1, 0, 0, 0, 1, 0, 0, 1, 0, 0) |
| 35 | (1, 0, 0, 1, 0, 0, 1, 0, 0, 0, 1, 0, 0, 1, 0, 0, 1, 0, 0, 0, 1, 0, 0, 1, 0, 0, 1, 0, 1, 0, 0, 1, 0, 0, 1, 0, 1, 0, 0, 0) |
| 36 | (0, 0, 1, 0, 1, 0, 1, 0, 0, 1, 0, 0, 0, 0, 1, 0, 1, 0, 0, 1, 0, 1, 0, 0, 0, 0, 1, 0, 1, 0, 1, 0, 0, 0, 0, 1, 0, 0, 1, 0) |
| 37 | (0, 0, 1, 0, 1, 0, 1, 0, 0, 0, 0, 1, 0, 1, 0, 1, 0, 0, 0, 0, 1, 0, 1, 0,1, 0, 0, 1, 0, 0, 0, 0, 1, 0, 1, 0, 0, 0, 1, 0) |
| 38 | (0, 0, 1, 1, 0, 0, 0, 1, 0, 1, 0, 0, 0, 1, 0, 0, 0, 1, 0, 1, 0, 0, 0, 1, 1, 0, 0, 0, 1, 0, 0, 0, 1, 1, 0, 0, 0, 1, 0, 0) |
| 39 | (0, 1, 0, 0, 0, 1, 1, 0, 0, 0, 0, 1, 1, 0, 0, 0, 1, 0, 1, 0, 0, 0, 1, 0, 0, 0, 1, 0, 1, 0, 0, 0, 1, 1, 0, 0, 0, 1, 0, 0) |

In an implementation example, when p=5, N=2, i=1, K₁=6, and M=31, an implementation example of the codebook set is shown in Table 13.

It should be understood that, in the codebook set shown in Table 13, that each codebook corresponds to a line in the N-dimensional space is used as an example. It can be learned from the foregoing description that, when i=1, the quantity of points on each line (that is, the quantity of available resources of each codebook) is K₁=pⁱ + pⁱ⁻¹+...+p + 1=p+1=6, the quantity of coordinate points (that is, the total quantity of resources of each codebook) is M=p^{N} + p^{N-1}+... +p + 1=31, and the quantity of i-dimensional spaces (where i=1, in other words, the quantity of i-dimensional spaces may also be the quantity of lines in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 31$.

**Table 13**

| Codebook index | Codebook |
|---|---|
| 0 | (1, 0, 0, 0, 0, 0, 1, 0, 0, 0, 0, 0, 1, 0, 0, 0, 0, 0, 1, 0, 0, 0, 0, 0, 1, 0, 1, 0, 0, 0, 0) |
| 1 | (0, 0, 1, 0, 0, 0, 0, 1, 0,0, 0, 0, 1, 0, 0, 0, 0, 1, 0, 0, 0, 0, 1, 0, 0, 1, 0, 0, 0, 0, 0) |
| 2 | (0, 0, 0, 1, 0, 0, 0, 0, 0, 1, 1, 0, 0, 0, 0, 0, 1, 0, 0, 0, 0, 0, 1, 0, 0, 0, 1, 0, 0, 0, 0) |
| 3 | (1, 0, 0, 0, 0, 0, 0, 0, 0, 1, 0, 0, 0, 1, 0, 0, 0, 1, 0, 0, 0, 1, 0, 0, 0, 0, 0, 0, 0, 1, 0) |
| 4 | (0, 1, 0, 0, 0, 0, 0, 1, 0, 0, 0, 0, 0, 1, 0, 0, 0, 0, 0, 1, 1, 0, 0, 0, 0, 0, 1, 0, 0, 0, 0) |
| 5 | (0, 0, 0, 0, 1, 0, 0, 1, 0, 0, 1, 0, 0, 0, 0, 0, 0, 0, 1, 0, 0, 1, 0, 0, 0, 0, 0, 0, 1, 0, 0) |
| 6 | (0, 1, 0, 0, 0, 0, 1, 0, 0, 0, 0, 1, 0, 0, 0, 0,1, 0, 0, 0, 0, 1, 0, 0, 0, 1, 0, 0, 0, 0, 0) |
| 7 | (0, 0, 1, 0, 0, 0, 0, 0, 1, 0, 0, 0, 0, 0, 1, 1, 0, 0, 0, 0, 0, 1, 0, 0, 0, 0, 1, 0, 0, 0, 0) |
| 8 | (0, 0, 0, 1, 0, 0, 0, 0, 1, 0, 0, 0, 0, 1, 0, 0, 0, 0, 1, 0, 0, 0, 0, 1, 0, 1, 0, 0, 0, 0, 0) |
| 9 | (0, 0, 1, 0, 0, 0, 0, 0, 0, 1, 0, 1, 0, 0, 0, 0, 0, 0, 1, 0, 1, 0, 0, 0, 0, 0, 0, 1, 0, 0, 0) |
| 10 | (0, 0, 1, 0, 0, 0, 1, 0, 0, 0, 1, 0, 0, 0, 0, 0, 0, 0, 0, 1, 0, 0, 0, 1, 0, 0, 0, 0, 0, 1, 0) |
| 11 | (1, 0, 0, 0, 0, 1, 0, 0, 0, 0, 1, 0, 0, 0, 0, 1, 0, 0, 0, 0, 1, 0, 0,0, 0, 1, 0, 0, 0, 0, 0) |
| 12 | (0, 0, 1, 0, 0, 1, 0, 0, 0, 0, 0, 0, 0, 1, 0, 0, 1, 0, 0, 0, 0, 0, 0, 0, 1, 0, 0, 0, 1, 0, 0) |
| 13 | (0,0, 0, 0, 0, 0, 0, 0, 0, 0, 0, 0, 0, 0, 0, 1, 1, 1, 1, 1, 0, 0, 0, 0, 0, 0, 0, 0, 0, 0, 1) |
| 14 | (0, 0, 0, 1, 0, 0, 0, 1, 0, 0, 0, 1, 0, 0, 0, 1, 0, 0, 0, 0, 0, 0, 0, 0, 1, 0, 0, 0, 0, 1, 0) |
| 15 | (0, 0, 0, 0, 1, 0, 0, 0, 0, 1, 0, 0, 0, 0, 1, 0, 0, 0, 0, 1, 0, 0, 0, 0, 1, 1, 0, 0, 0, 0, 0) |
| 16 | (0, 0, 0, 0, 0, 1, 1, 1, 1, 1, 0, 0, 0, 0, 0, 0, 0, 0, 0, 0, 0, 0, 0, 0, 0, 0, 0, 0, 0, 0,1) |
| 17 | (0, 0, 0, 0, 1, 0, 0, 0, 1, 0, 0, 0, 1, 0, 0, 0, 1, 0, 0, 0, 1, 0, 0, 0, 0, 0, 0, 0, 0, 1, 0) |
| 18 | (0, 0, 0, 0, 1, 0, 1, 0,0, 0, 0, 0, 0, 1, 0, 1, 0, 0, 0, 0, 0, 0, 1, 0, 0, 0, 0, 1, 0, 0, 0) |
| 19 | (0, 0, 0, 1, 0, 0, 1, 0, 0, 0, 0, 0, 0, 0, 1, 0, 0, 1, 0, 0, 1, 0, 0, 0, 0, 0, 0, 0, 1, 0, 0) |
| 20 | (1, 0, 0, 0, 0, 0, 0, 0, 1, 0, 0, 1, 0, 0, 0, 0, 0, 0, 0, 1, 0, 0, 1, 0, 0, 0, 0, 0, 1, 0, 0) |
| 21 | (0, 0, 0, 0, 1, 1, 0, 0, 0, 0, 0, 1, 0, 0, 0, 0, 0, 1, 0, 0, 0, 0, 0, 1, 0, 0, 1, 0, 0, 0, 0) |
| 22 | (0, 0, 0, 0, 0, 0, 0, 0, 0, 0, 0, 0, 0, 0, 0, 0, 0, 0, 0, 0, 1, 1, 1, 1, 1, 0, 0, 0, 0, 0, 1) |
| 23 | (0, 1, 0, 0, 0, 1, 0, 0, 0, 0, 0, 0, 0, 0, 1,0, 0, 0, 1, 0, 0, 0, 1, 0, 0, 0, 0, 0, 0, 1, 0) |
| 24 | (0, 0, 0, 0, 0, 0, 0, 0, 0, 0, 0, 0, 0, 0, 0, 0, 0, 0, 0, 0, 0, 0, 0, 0, 0, 1, 1, 1, 1, 1, 1) |
| 25 | (1, 1, 1, 1, 1, 0, 0, 0, 0, 0, 0, 0, 0, 0, 0, 0, 0, 0, 0, 0, 0, 0, 0, 0, 0, 0, 0, 0, 0, 0, 1) |
| 26 | (0, 0, 0, 1, 0, 1, 0, 0, 0, 0, 0, 0, 1, 0, 0, 0, 0, 0, 0, 1, 0, 1, 0, 0, 0, 0, 0, 1, 0, 0, 0) |
| 27 | (0, 1, 0, 0, 0, 0, 0, 0, 1, 0, 1, 0, 0, 0, 0, 0, 0, 1, 0, 0, 0, 0, 0, 0, 1, 0, 0, 1, 0, 0, 0) |
| 28 | (0, 1, 0, 0, 0, 0, 0, 0, 0, 1, 0, 0, 1, 0, 0, 1, 0, 0, 0, 0, 0, 0,0, 1, 0, 0, 0, 0, 1, 0, 0) |
| 29 | (0, 0, 0, 0, 0, 0, 0, 0, 0, 0, 1, 1, 1, 1, 1, 0, 0, 0, 0, 0, 0, 0, 0, 0, 0, 0, 0, 0, 0, 0, 1) |
| 30 | (1, 0, 0, 0, 0, 0, 0, 1, 0, 0, 0, 0, 0, 0, 1, 0, 1, 0, 0, 0, 0, 0, 0, 1, 0, 0, 0, 1, 0, 0, 0) |

In an implementation example, when p=7, N=2, i=1, K₁ =8, and M=57, an implementation example of the codebook set is shown in Table 14.

It should be understood that, in the codebook set shown in Table 14, that each codebook corresponds to a line in the N-dimensional space is used as an example. It can be learned from the foregoing description that, when i=1, the quantity of points on each line (that is, the quantity of available resources of each codebook) is K₁ =pⁱ + pⁱ⁻¹+... +p + 1=p+1=8, the quantity of coordinate points (that is, the total quantity of resources of each codebook) is M=p^{N} + p^{N-1}+... +p + 1=57, and the quantity of i-dimensional spaces (where i=1, in other words, the quantity of i-dimensional spaces may also be the quantity of lines in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 57$.

**Table 14**

| Codebook Index | Codebook |
|---|---|
| 0 | (0, 0, 0, 0, 0, 0, 0, 0, 0, 0, 0, 0, 0, 0, 0, 0, 0, 0, 0, 0, 0, 1, 1, 1, 1, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 1 | (0, 0, 0, 0, 0, 1, 0, 0, 0, 0, 0, 1, 0, 0, 0, 0, 0, 1, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 1, 0, 0, 0, 0, 0, 0, 1, 0) |
| 2 | (0, 1, 0, 0, 0, 0, 0, 1,0, 0, 0, 0, 0, 0, 0, 0, 0, 0, 0, 0, 1, 0, 0, 0, 0, 0, 1, 0, 0, 0, 0, 0, 1, 0, 0, 0, 0, 0, 1, 0, 0, 0, 0, 0, 1, 0, 0, 0, 0, 0, 0, 0, 0, 0, 0, 1, 0) |
| 3 | (0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 1, 1,1, 1, 0, 0, 0, 0, 0, 0, 0, 0, 0, 0, 0, 0, 0, 0, 0, 0, 0, 0, 0, 0, 0, 1) |
| 4 | (0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 1, 0, 0, 0, 0, 0, 0, 0) |
| 5 | (0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 1, 0, 0, 0, 0, 0, 0, 0) |
| 6 | (0, 0, 1, 0, 0, 0, 0, 0, 0, 0, 0, 0, 1, 0, 0, 1, 0, 0, 0, 0, 0, 0, 0, 0, 0, 1, 0, 0, 1, 0, 0, 0, 0, 0, 0, 0, 0, 0, 1, 0, 0, 0, 0, 0, 0, 0, 0, 0, 1, 0, 0, 0, 1, 0, 0, 0, 0) |
| 7 | (0, 0, 0, 0, 0, 1, 0, 0, 0,1, 0, 0, 0, 0, 0, 0, 0, 0, 0, 0, 1, 0, 0, 0, 1, 0, 0, 0, 1, 0, 0, 0, 0, 0, 0, 0, 0, 0, 0, 1, 0, 0, 0, 1, 0, 0, 0, 0, 0, 0, 0, 0, 0, 1, 0, 0, 0) |
| 8 | (0, 0, 0, 0, 1, 0, 0, 1, 0, 0, 0, 0, 0, 0, 0, 0, 0, 1, 0, 0, 0, 0, 0, 0, 0, 0, 0, 1, 0, 0, 1, 0, 0, 0,0, 0, 0, 0, 0, 0, 1, 0, 0, 1, 0, 0, 0, 0, 0, 0, 0, 0, 1, 0, 0, 0, 0) |
| 9 | (0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 1, 0, 0, 0, 0, 0, 0, 0) |
| 10 | (0, 0, 0, 0, 1, 0, 0, 0, 0, 0, 0, 0, 1, 0, 0, 0, 0, 0, 0, 0, 1, 1, 0, 0, 0, 0, 0, 0, 0, 1, 0, 0, 0, 0, 0, 0, 0, 1, 0, 0, 0, 0, 0, 0, 0, 1, 0, 0, 0, 0, 1, 0, 0, 0, 0, 0, 0) |
| 11 | (0, 0, 0, 1, 0, 0, 0, 1, 0, 0, 0, 0, 0, 0, 0, 0, 0, 0, 1, 0, 0, 0, 1, 0, 0, 0, 0, 0, 0, 0, 0, 0, 0, 1, 0, 0, 0, 1, 0, 0, 0, 0, 0, 0, 0, 0, 0, 0, 1, 0, 0, 0, 0, 1, 0, 0, 0) |
| 12 | (0, 0, 0, 0, 0, 1, 0, 0, 0, 0,1, 0, 0, 0, 0, 1, 0, 0, 0, 0, 0, 0, 0, 0, 0, 0, 0, 1, 0, 0, 0, 0, 1, 0, 0, 0, 0, 1, 0, 0, 0, 0, 1, 0, 0, 0, 0, 0, 0, 0, 0, 0, 0, 0, 1, 0, 0) |
| 13 | (0, 1, 0, 0, 0, 0, 0, 0, 0, 0, 0, 0, 1, 0, 0, 0, 1, 0, 0, 0, 0, 0, 0, 0, 0, 0, 0, 1, 0, 0, 0, 1, 0, 0, 0,1, 0, 0, 0, 0, 0, 0, 0, 0, 0, 0, 1, 0, 0, 0, 0, 0, 0, 1, 0, 0, 0) |
| 14 | (1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 0) |
| 15 | (1, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 0, 1, 0, 0, 0, 0, 0, 0) |
| 16 | (0, 0, 1, 0, 0, 0, 0, 0, 0, 0, 0, 1, 0, 0, 0, 0, 0, 0, 0, 0, 1, 0, 1, 0, 0, 0, 0, 0, 0, 0, 0, 1, 0, 0, 0, 0, 0, 0, 0, 0, 1, 0, 1, 0, 0, 0, 0, 0, 0, 0, 0, 1, 0, 0, 0, 0, 0) |
| 17 | (0, 1, 0, 0, 0, 0, 0, 0, 0, 1, 0,0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 1, 0, 0, 0, 0, 0, 0, 0, 1, 0, 0, 0, 0, 0, 0) |
| 18 | (0, 0, 0, 1, 0, 0, 0, 0, 0, 0, 0, 0, 1, 0, 1, 0, 0, 0, 0, 0, 0, 0, 0, 1, 0, 0, 0, 0, 0, 0, 0, 0, 1, 0, 0, 0,0, 0, 0, 0, 0, 1, 0, 1, 0, 0, 0, 0, 0, 0, 0, 1, 0, 0, 0, 0, 0) |
| 19 | (0, 0, 0, 0, 0, 0, 1, 1, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 0, 0, 1, 0, 0, 0, 0, 0, 0) |
| 20 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 1, 1, 1, 1, 0, 0, 0, 0, 0, 0, 0, 1) |
| 21 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 1, 1, 1, 1, 0, 0, 0, 0, 0, 0, 0, 0, 0, 0, 0, 0, 0, 0, 1) |
| 22 | (0, 0, 0, 1, 0, 0, 0, 0, 0, 0, 0, 0,0, 1, 0, 0, 1, 0, 0, 0, 0, 0, 0, 0, 0, 0, 1, 0, 0, 1, 0, 0, 0, 0, 0, 0, 0, 0, 0, 1, 0, 0, 1, 0, 0, 0, 0, 0, 0, 0, 0, 0, 1, 0, 0, 0, 0) |
| 23 | (0, 0, 0, 0, 0, 0, 1, 0, 0, 1, 0, 0, 0, 0, 0, 0, 0, 0, 0, 1, 0, 0, 1, 0, 0, 0, 0, 0, 0, 0, 0, 0, 1, 0, 0, 1, 0,0, 0, 0, 0, 0, 0, 0, 0, 1, 0, 0, 0, 0, 0, 0, 1, 0, 0, 0, 0) |
| 24 | (1, 1, 1, 1, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 25 | (0, 0, 0, 0, 0, 0, 1, 0, 0, 0, 0, 0, 1, 0, 0, 0, 0, 0, 1, 0, 0, 0, 0, 0, 1, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 1, 0) |
| 26 | (1, 0, 0, 0, 0, 0, 0, 0, 0, 0, 0, 1, 0, 0, 0, 1, 0, 0, 0, 0, 0, 0, 0, 0, 0, 0, 1, 0, 0, 0, 1, 0, 0, 0, 0, 0, 0, 0, 0, 0, 0, 1, 0, 0, 0, 1, 0, 0, 0, 0, 0, 0, 0, 1, 0, 0, 0) |
| 27 | (0, 0, 0, 0, 0, 0, 1, 0, 0, 0, 0, 1, 0,0, 0, 0, 1, 0, 0, 0, 0, 1, 0, 0, 0, 0, 0, 0, 0, 0, 0, 0, 0, 1, 0, 0, 0, 0, 1, 0, 0, 0, 0, 1, 0, 0, 0, 0, 0, 0, 0, 0, 0, 0, 1, 0, 0) |
| 28 | (1, 0, 0, 0, 0, 0, 0, 0, 0, 0, 0, 0, 1, 0, 0, 0, 0, 1, 0, 0, 0, 0, 1, 0, 0, 0, 0, 0, 0, 0, 0, 0, 0, 0, 1, 0, 0, 0,0, 1, 0, 0, 0, 0, 1, 0, 0, 0, 0, 0, 0, 0, 0, 0, 1, 0, 0) |
| 29 | (0, 0, 0, 0, 0, 1, 0, 0, 0, 0, 0, 0, 0, 1, 1, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 0, 0, 0, 1, 0, 0, 0, 0, 0, 0) |
| 30 | (0, 0, 0, 1, 0, 0, 0, 0, 1, 0, 0, 0, 0, 0, 0, 0, 0, 0, 0, 0, 1, 0, 0, 0, 0, 1, 0, 0, 0, 0, 1, 0, 0, 0, 0, 1, 0, 0, 0, 0, 0, 0, 0, 0, 0, 0, 0, 1, 0, 0, 0, 0, 0, 0, 1, 0, 0) |
| 31 | (0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 1, 0, 0, 0, 0, 0, 0, 0) |
| 32 | (0, 0, 0, 0, 0, 0, 0, 0, 0, 0, 0, 0, 0, 0,0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 1, 1, 1, 1, 1) |
| 33 | (0, 0, 0, 0, 0, 1, 0, 1, 0, 0, 0, 0, 0, 0, 0, 0, 1, 0, 0, 0, 0, 0, 0, 0, 0, 1, 0, 0, 0, 0, 0, 0, 0, 0, 1, 0, 1, 0, 0,0, 0, 0, 0, 0, 0, 1, 0, 0, 0, 0, 0, 1, 0, 0, 0, 0, 0) |
| 34 | (0, 0, 0, 1, 0, 0, 0, 0, 0, 0, 0, 1, 0, 0, 0, 0, 0, 0, 0, 1, 0, 0, 0, 0, 0, 0, 0, 1, 1, 0, 0, 0, 0, 0, 0, 0, 1, 0, 0, 0, 0, 0, 0, 0, 1, 0, 0, 0, 0, 0, 1, 0, 0, 0, 0, 0, 0) |
| 35 | (0, 0, 0, 0, 0, 0, 0, 0, 0, 0, 0, 0, 0, 0, 1, 1, 1, 1, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 36 | (0, 0, 0, 0, 0, 1, 0, 0, 1, 0, 0, 0, 0, 0, 0, 0, 0, 0, 1, 0, 0, 1, 0, 0, 0, 0, 0, 0, 0, 0, 0, 1, 0, 0, 0, 0, 0, 0, 0, 0, 0, 1, 0, 0, 1, 0, 0, 0, 0, 0, 0, 0, 1, 0, 0, 0, 0) |
| 37 | (0, 0, 1, 0, 0, 0, 0, 0, 0, 0, 1, 0, 0, 0, 0,0, 0, 0, 1, 0, 0, 0, 0, 0, 0, 0, 1, 0, 0, 0, 0, 0, 0, 0, 1, 1, 0, 0, 0, 0, 0, 0, 0, 1, 0, 0, 0, 0, 0, 0, 1, 0, 0, 0, 0, 0, 0) |
| 38 | (0, 0, 1, 0, 0, 0, 0, 0, 1, 0, 0, 0, 0, 0, 1, 0, 0, 0, 0, 0, 0, 0, 0, 0, 0, 0, 0, 1, 0, 0, 0, 0, 0, 1, 0, 0, 0, 0, 0, 1,0, 0, 0, 0, 0, 1, 0, 0, 0, 0, 0, 0, 0, 0, 0, 1, 0) |
| 39 | (0, 0, 0, 0, 1, 0, 0, 0, 0, 1, 0, 0, 0, 0, 1, 0, 0, 0, 0, 0, 0, 0, 0, 0, 0, 0, 1, 0, 0, 0, 0, 1, 0, 0, 0, 0, 1, 0, 0, 0, 0, 0, 0, 0, 0, 0, 0, 0, 1, 0, 0, 0, 0, 0, 1, 0, 0) |
| 40 | (0, 0, 0, 0, 1, 0, 0, 0, 0, 0, 1, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 1, 0, 0, 0, 0, 0, 1, 0, 0, 0, 0, 0, 0, 0, 1, 0) |
| 41 | (0, 0, 0, 1, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 1, 0, 0, 0, 0, 0, 1, 0, 0, 0, 0, 0, 1, 0, 0, 0, 0, 0, 0, 0, 0, 1, 0) |
| 42 | (0, 0, 0, 0, 0, 0, 1, 0, 0, 0, 1, 0, 0, 0, 1, 0,0, 0, 0, 0, 0, 0, 0, 0, 0, 1, 0, 0, 0, 1, 0, 0, 0, 0, 0, 0, 0, 0, 0, 0, 1, 0, 0, 0, 1, 0, 0, 0, 0, 0, 0, 0, 0, 1, 0, 0, 0) |
| 43 | (0, 1, 0, 0, 0, 0, 0, 0, 0, 0, 1, 0, 0, 0, 0, 0, 0, 0, 0, 1, 0, 1, 0, 0, 0, 0, 0, 0, 0, 0, 1, 0, 0, 0, 0, 0, 0, 0, 0, 1, 0,0, 0, 0, 0, 0, 0, 0, 1, 0, 0, 1, 0, 0, 0, 0, 0) |
| 44 | (0, 1, 0, 0, 0, 0, 0, 0, 0, 0, 0, 1, 0, 0, 1, 0, 0, 0, 0, 0, 0, 0, 0, 0, 1, 0, 0, 0, 0, 0, 0, 0, 0, 0, 1, 0, 0, 1, 0, 0, 0, 0, 0, 0, 0, 0, 0, 1, 0, 0, 0, 0, 1, 0, 0, 0, 0) |
| 45 | (0, 0, 0, 0, 0, 0, 1, 0, 1, 0, 0, 0, 0, 0, 0, 0, 0, 1, 0, 0, 0, 0, 0, 0, 0, 0, 1, 0, 1, 0, 0, 0, 0, 0, 0, 0, 0, 1, 0, 0, 0, 0, 0, 0, 0, 0, 1, 0, 0, 0, 0, 1, 0, 0, 0, 0, 0) |
| 46 | (0, 0, 0, 0, 0, 0, 0, 1, 1, 1, 1, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 47 | (1, 0, 0, 0, 0, 0, 0, 0, 0, 1, 0, 0, 0, 0, 0, 0, 0,0, 1, 0, 0, 0, 0, 0, 0, 0, 0, 1, 0, 1, 0, 0, 0, 0, 0, 0, 0, 0, 1, 0, 0, 0, 0, 0, 0, 0, 0, 1, 0, 0, 0, 1, 0, 0, 0, 0, 0) |
| 48 | (1, 0, 0, 0, 0, 0, 0, 0, 0, 0, 0, 0, 0, 1, 0, 0, 0, 0, 0, 1, 0, 0, 0, 0, 0, 1, 0, 0, 0, 0, 0, 1, 0, 0, 0, 0, 0, 1, 0, 0, 0, 0,0, 1, 0, 0, 0, 0, 0, 0, 0, 0, 0, 0, 0, 1, 0) |
| 49 | (0, 1, 0, 0, 0, 0, 0, 0, 0, 0, 0, 0, 0, 1, 0, 0, 0, 0, 1, 0, 0, 0, 0, 1, 0, 0, 0, 0, 1, 0, 0, 0, 0, 0, 0, 0, 0, 0, 0, 0, 1, 0, 0, 0, 0, 1, 0, 0, 0, 0, 0, 0, 0, 0, 1, 0, 0) |
| 50 | (0, 0, 1, 0, 0, 0, 0, 1, 0, 0, 0, 0, 0, 0, 0, 0, 0, 0, 0, 1, 0, 0, 0, 0, 1, 0, 0, 0, 0, 1, 0, 0, 0, 0, 0, 0, 0, 0, 0, 0, 0, 1, 0, 0, 0, 0, 1, 0, 0, 0, 0, 0, 0, 0, 1, 0, 0) |
| 51 | (0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 1, 0, 0, 0, 0, 0, 0, 0) |
| 52 | (0, 0, 1, 0, 0, 0, 0, 0, 0, 1, 0, 0, 0, 0, 0, 0, 1, 0,0, 0, 0, 0, 0, 1, 0, 0, 0, 0, 0, 0, 1, 0, 0, 0, 0, 0, 0, 1, 0, 0, 0, 0, 0, 0, 1, 0, 0, 0, 0, 1, 0, 0, 0, 0, 0, 0, 0) |
| 53 | (0, 0, 0, 0, 1, 0, 0, 0, 1, 0, 0, 0, 0, 0, 0, 0, 0, 0, 0, 1, 0, 0, 0, 1, 0, 0, 0, 0, 0, 0, 0, 0, 0, 0, 1, 0, 0, 0, 1, 0, 0, 0, 1,0, 0, 0, 0, 0, 0, 0, 0, 0, 0, 1, 0, 0, 0) |
| 54 | (0, 0, 0, 0, 1, 0, 0, 0, 0, 0, 0, 0, 0, 1, 0, 1, 0, 0, 0, 0, 0, 0, 0, 0, 1, 0, 0, 0, 0, 0, 0, 0, 0, 1, 0, 1, 0, 0, 0, 0, 0, 0, 0, 0, 1, 0, 0, 0, 0, 0, 0, 1, 0, 0, 0, 0, 0) |
| 55 | (0, 0, 1, 0, 0, 0, 0, 0, 0, 0, 0, 0, 0, 1, 0, 0, 0, 1, 0, 0, 0, 1, 0, 0, 0, 0, 0, 0, 0, 0, 0, 0, 1, 0, 0, 0, 1, 0, 0, 0, 0, 0, 0, 0, 0, 0, 0, 1, 0, 0, 0, 0, 0, 1, 0, 0, 0) |
| 56 | (1, 0, 0, 0, 0, 0, 0, 0, 0, 0, 1, 0, 0, 0, 0, 0, 0, 0, 0, 0, 1, 0, 0, 1, 0, 0, 0, 0, 0, 0, 0, 0, 0, 1, 0, 0, 1, 0, 0, 0, 0, 0, 0, 0, 0, 0, 1, 0, 0, 0, 0, 0, 1, 0, 0, 0, 0) |

It should be noted that, in addition to the implementations in Table 4 to Table 14, N, p, and i may be implemented by using other values (N is an integer greater than 1, p is a positive integer, and i is less than or equal to N), to obtain another table to represent a plurality of possible implementations of the codebook indexes and the codebooks.

For example, when p=5, N=3, and i=1, that each codebook corresponds to a line in the N-dimensional space is used as an example. It can be learned from the foregoing description that, when i=1, the quantity of points on each line (that is, the quantity of available resources of each codebook) is K₁ =pⁱ + pⁱ⁻¹+... +p + 1=p+1=6, the quantity of coordinate points (that is, the total quantity of resources of each codebook) is M=p^{N} + p^{N-1}+... +p + 1=156, and the quantity of i-dimensional spaces (where i=1, in other words, the quantity of i-dimensional spaces may also be the quantity of lines in the N-dimensional space, or the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)} = 806$.

For another example, p=2, N=5, and i=1, 2, 3, or 4.

For another example, p=2, N=6, and i=1, 2, 3, 4, or 5.

For another example, p=3, N=4, and i=1, 2, or 3.

For another example, p=3, N=5, and i=1, 2, 3, or 4.

For another example, p=5, N=4, and i=1, 2, or 3.

For another example, p=7, N=3, and i=1 or 2.

In the foregoing examples, that each codebook corresponds to a line in the N-dimensional space is used as an example. The quantity of points on each line (that is, the quantity of available resources of each codebook) is K₁ =pⁱ + pⁱ⁻¹+... +p + 1, the quantity of coordinate points (that is, the total quantity of resources of each codebook) is M=p^{N} + p^{N-1}+... +p + 1, and the quantity of i-dimensional spaces (that is, the quantity of codebooks in the codebook set) is $\frac{{\prod }_{k = N - i + 1}^{N + 1} \left({p}^{k}-1\right)}{{\prod }_{l = 1}^{i + 1} \left({p}^{l}-1\right)}$.

Refer to FIG. 5. An embodiment of this application provides a communication apparatus 500. The communication apparatus 500 can implement functions of the communication apparatuses (for example, the first communication apparatus, the second communication apparatus, and the third communication apparatus) in the foregoing method embodiments, and therefore can also implement beneficial effects of the foregoing method embodiments. In this embodiment of this application, the communication apparatus 500 may be a communication apparatus, or may be an integrated circuit, a component, or the like, for example, a chip, in a communication apparatus. In the following embodiments, an example in which the communication apparatus 500 is a communication apparatus is used for description.

In a possible implementation, when the apparatus 500 is configured to perform the foregoing method, the apparatus 500 includes a processing unit 501 and a transceiver unit 502. The processing unit 501 is configured to determine K₁ resources, where the K₁ resources are included in M resources, K₁ is a positive integer, M is an integer greater than or equal to K₁, the M resources respectively correspond to M coordinate points in an N-dimensional coordinate space, resource indexes of the K₁ resources among the M resources are determined by using one of solutions in a solution set of an i₁-dimensional subspace of the N-dimensional coordinate space, N is an integer greater than 1, and i₁ is less than or equal to N. The transceiver unit 502 performs communication based on the K₁ resources.

It should be noted that for content such as an information execution process of the units of the communication apparatus 500, refer to descriptions in the foregoing method embodiments of this application. Details are not described herein again.

FIG. 6 is another diagram of a structure of a communication apparatus 600 according to this application. The communication apparatus 600 includes a logic circuit 601 and an input/output interface 602. The communication apparatus 600 may be a chip or an integrated circuit. The transceiver unit 502 shown in FIG. 5 may be a communication interface. The communication interface may be the input/output interface 602 in FIG. 6. The input/output interface 602 may include an input interface and an output interface. Alternatively, the communication interface may be a transceiver circuit, and the transceiver circuit may include an input interface circuit and an output interface circuit.

Optionally, the logic circuit 601 is configured to determine K₁ resources, where the K₁ resources are included in M resources, K₁ is a positive integer, M is an integer greater than or equal to K₁, the M resources respectively correspond to M coordinate points in an N-dimensional coordinate space, resource indexes of the K₁ resources among the M resources are determined by using one of solutions in a solution set of an i₁-dimensional subspace of the N-dimensional coordinate space, N is an integer greater than 1, and i₁ is less than or equal to N. The input/output interface 602 performs communication based on the K₁ resources.

The logic circuit 601 and the input/output interface 602 may further perform other steps performed by a terminal device or a network device in any embodiment, and achieve corresponding beneficial effects. Details are not described herein again.

In a possible implementation, the processing unit 501 shown in FIG. 5 may be the logic circuit 601 in FIG. 6.

Optionally, the logic circuit 601 may be a processing apparatus, and some or all of functions of the processing apparatus may be implemented through software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more processors.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a network processor (network processor, NP), a field programmable gate array (field programmable gate array, FPGA), a programmable controller (programmable logic device, PLD), or another programmable logic device, a transistor logic device, a hardware component, or any combination thereof. The general purpose processor may be a microprocessor or any regular processor.

An embodiment of this application further provides a computer-readable storage medium, configured to store one or more computer-executable instructions. When the computer-executable instructions are executed by a processor, the processor performs the method according to the possible implementations of the first communication apparatus (for example, a terminal device or a network device) in the foregoing embodiments.

An embodiment of this application further provides a computer program product (or referred to as a computer program). When the computer program in the computer program product is executed by a processor, the processor performs the method according to the possible implementations of the first communication apparatus (for example, a terminal device or a network device).

An embodiment of this application further provides a chip system. The chip system includes at least one processor configured to support a communication apparatus to implement the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first communication apparatus (for example, a terminal device or a network device) in the foregoing method embodiments.

An embodiment of this application further provides a communication system. The communication system includes the first communication apparatus in any one of the foregoing embodiments.

Optionally, the communication system further includes another communication apparatus, for example, a second communication apparatus, or a third communication apparatus.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electric, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may alternatively exist in a base station or terminal as discrete components.

All or some of the foregoing embodiments may be implemented through software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or a non-volatile storage medium, or may include both a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining K₁ resources, wherein the K₁ resources are comprised in M resources, K₁ is a positive integer, M is an integer greater than or equal to K₁, the M resources respectively correspond to M coordinate points in an N-dimensional coordinate space, resource indexes of the K₁ resources among the M resources are determined by using one of solutions in a solution set of an i₁-dimensional subspace of the N-dimensional coordinate space, N is an integer greater than 1, and i₁ is less than or equal to N; and
performing communication based on the K₁ resources.

2. The method according to claim 1, wherein the method further comprises:
receiving first information, wherein the first information indicates the K₁ resources; and
determining the K₁ resources comprises: determining the K₁ resources based on the first information.

3. The method according to claim 1, wherein after determining the K₁ resources, the method further comprises:
sending second information, wherein the second information indicates the K₁ resources.

4. The method according to any one of claims 1 to 3, wherein the N-dimensional coordinate space is an N-dimensional affine space or an N-dimensional projective space.

5. The method according to any one of claims 1 to 4, wherein the N-dimensional coordinate space is the N-dimensional projective space, the N-dimensional projective space is represented as PG(N, p), and p is an order of the N-dimensional projective space.

6. The method according to claim 5, wherein values of N and p are determined based on a value of M.

7. The method according to claim 6, wherein a total quantity of coordinate points in the N-dimensional projective space satisfies: $y = \frac{{p}^{N + 1} - 1}{p - 1} ;$ and $M \leq y ,$ wherein
y is the total quantity of coordinate points in the N-dimensional projective space.

8. The method according to any one of claims 5 to 7, wherein the values of N and p are determined based on third information, and the third information indicates at least one of a lower limit value of a resource quantity of communication resources, an upper limit value of the resource quantity of communication resources, and a quantity of communication apparatuses that perform communication on the M resources.

9. The method according to any one of claims 1 to 8, wherein the solution set of the i₁-dimensional subspace of the N-dimensional coordinate space is a solution set of an equation set comprising N-i₁ equations.

10. The method according to claim 9, wherein any one of the N-i₁ equations satisfies: $a_ 0 * X_ 0 + a_ 1 * X_ 1 + … + a_N * X_N = 0 ,$ wherein
X_0, X_1, ..., and X_N represent unknown numbers, and a_0, ..., and a_N are all from a Galois field GF(p).

11. The method according to any one of claims 1 to 10, further comprising:
determining K₂ resources, wherein the K₂ resources are comprised in the M resources, K₂ is a positive integer, M is an integer greater than or equal to K₂, resource indexes of the K₂ resources among the M resources are determined by using one of solutions in a solution set of an i₂-dimensional subspace of the N-dimensional coordinate space, N is an integer greater than 1, and i₂ is less than or equal to N; and
performing communication based on the K₂ resources.

12. The method according to any one of claims 1 to 11, wherein the resource is one or more resource elements REs, one or more resource blocks RBs, or one or more physical resource blocks PRBs.

13. A communication apparatus, comprising a transceiver unit and a processing unit, wherein
the processing unit is configured to determine K₁ resources, the K₁ resources are comprised in M resources, K₁ is a positive integer, M is an integer greater than or equal to K₁, the M resources respectively correspond to M coordinate points in an N-dimensional coordinate space, resource indexes of the K₁ resources among the M resources are determined by using one of solutions in a solution set of an i₁ -dimensional subspace of the N-dimensional coordinate space, N is an integer greater than 1, and i₁ is less than or equal to N; and
the transceiver unit is configured to perform communication based on the K₁ resources.

14. The apparatus according to claim 13, wherein the transceiver unit is further configured to receive first information, and the first information indicates the K₁ resources; and
that the processing unit is configured to determine the K₁ resources comprises: the processing unit is configured to determine the K₁ resources based on the first information.

15. The apparatus according to claim 13, wherein the transceiver unit is further configured to send second information, and the second information indicates the K₁ resources.

16. The apparatus according to any one of claims 13 to 15, wherein the N-dimensional coordinate space is an N-dimensional affine space or an N-dimensional projective space.

17. The apparatus according to any one of claims 13 to 16, wherein the N-dimensional coordinate space is the N-dimensional projective space, the N-dimensional projective space is represented as PG(N, p), and p is an order of the N-dimensional projective space.

18. The apparatus according to claim 17, wherein values of N and p are determined based on a value of M.

19. The apparatus according to claim 18, wherein a total quantity of coordinate points in the N-dimensional projective space satisfies: $y = \frac{{p}^{N + 1} - 1}{p - 1} ;$ and $M \leq y ,$ wherein
y is the total quantity of coordinate points in the N-dimensional projective space.

20. The apparatus according to any one of claims 17 to 19, wherein the values of N and p are determined based on third information, and the third information indicates at least one of a lower limit value of a resource quantity of communication resources, an upper limit value of the resource quantity of communication resources, and a quantity of communication apparatuses that perform communication on the M resources.

21. The apparatus according to any one of claims 13 to 20, wherein the solution set of the i₁-dimensional subspace of the N-dimensional coordinate space is a solution set of an equation set comprising N-i₁ equations.

22. The apparatus according to claim 21, wherein any one of the N-i₁ equations satisfies: $a _ 0 * X _ 0 + a _ 1 * X _ 1 + … + a _ N * X _ N = 0 ,$ wherein
X_0, X_1, ..., and X_N represent unknown numbers, and a_0, ..., and a_N are all from a Galois field GF(p).

23. The apparatus according to any one of claims 13 to 22, wherein
the processing unit is further configured to determine K₂ resources, the K₂ resources are comprised in the M resources, K₂ is a positive integer, M is an integer greater than or equal to K₂, resource indexes of the K₂ resources among the M resources are determined by using one of solutions in a solution set of an i₂-dimensional subspace of the N-dimensional coordinate space, N is an integer greater than 1, and i₂ is less than or equal to N; and
the transceiver unit is further configured to perform communication based on the K₂ resources.

24. The apparatus according to any one of claims 13 to 23, wherein the resource is one or more resource elements REs, one or more resource blocks RBs, or one or more physical resource blocks PRBs.

25. A communication apparatus, comprising at least one processor, wherein the at least one processor is configured to perform the method according to any one of claims 1 to 12.

26. The communication apparatus according to claim 25, wherein the communication apparatus is a chip or a chip system.

27. A computer-readable storage medium, wherein the medium stores instructions; and when the instructions are executed by a computer, the method according to any one of claims 1 to 12 is implemented.

28. A computer program product, comprising instructions, wherein when the instructions are run on a computer, the method according to any one of claims 1 to 12 is performed.
